# EUROPEAN PATENT APPLICATION

(11) **EP 4 422 261 A1**
(43) Date of publication of application: **28.08.2024**
(21) Application number: 22897704.7
(22) Date of filing: 18.11.2022
(51) Int. Cl.: H04W 24/10

(54) **COMMUNICATION METHOD AND COMMUNICATION APPARATUS**

(30) Priority: 29.11.2021 CN 202111434486
(71) Applicant: Huawei Technologies Co., Ltd., Shenzhen, Guangdong 518129 (CN)
(72) Inventor: YUAN, Shitong, Shenzhen, Guangdong 518129 (CN); ZHANG, Xi, Shenzhen, Guangdong 518129 (CN); FAN, Bo, Shenzhen, Guangdong 518129 (CN)
(74) Representative: Maiwald GmbH
(86) International application number: PCT/CN2022/132729
(87) International publication number: WO 2023/093621

(57) **Abstract**

Embodiments of this application disclose a communication method and a communication apparatus. The method in embodiments of this application includes: A terminal device performs first-type measurement on a first reference signal, to obtain a first measurement result. The terminal device sends the first measurement result to a network device. The terminal device performs second-type measurement on a second reference signal based on the first measurement result, to obtain a second measurement result. The terminal device sends the second measurement result to the network device. It can be learned that, according to the foregoing technical solution, the terminal device reports the second measurement result to the network device, and the network device does not need to trigger, by using downlink control information, the terminal device to report the measurement result, so that signaling overheads and latency overheads are reduced. Reliability of the second measurement result reported by the terminal device is improved. Further, this helps the network device select, for the terminal device based on the second measurement result, an appropriate beam to which the terminal device is to switch, thereby improving communication quality.

## Description

This application claims priority to Chinese Patent Application No. 202111434486.6, filed with the China National Intellectual Property Administration on November 29, 2021 and entitled "COMMUNICATION METHOD AND COMMUNICATION APPARATUS", which is incorporated herein by reference in its entirety.

### TECHNICAL FIELD

This application relates to the field of communication technologies, and in particular, to a communication method and a related apparatus.

### BACKGROUND

In a 5th generation (5th generation, 5G) mobile communication system, high-frequency communication may be used. That is, data transmission is performed by using a super-high-frequency band (>6 GHz) signal. A main problem of the high-frequency communication is that signal energy sharply decreases as a transmission distance increases, and this results in a short signal transmission distance. To resolve this problem, an analog beam technology is used in the high-frequency communication. Weighted processing is performed on an antenna array, and the signal energy is concentrated in a small angle range, to form a signal (referred to as an analog beam, a beam for short) similar to a light beam, so that the transmission distance is extended.

When a terminal device moves at a high speed, frequent beam switching needs to be performed. A base station configures the terminal device to measure a reference signal. When the base station needs to trigger the terminal device to report a measurement result, the base station may trigger, by using downlink control information (downlink control indication, DCI), the terminal device to report the measurement result. The terminal device reports the measurement result to the base station based on the DCI, so that the base station indicates a beam to the terminal device based on the measurement result. The terminal device may switch to the beam, to improve communication quality of the terminal device.

It can be learned that a process in which the base station triggers, by using the DCI, the terminal device to report the measurement result causes corresponding signaling overheads. Therefore, how to trigger the terminal device to report the measurement result to reduce the signaling overheads is a problem worth considering.

### SUMMARY

This application provides a communication method and a communication apparatus, to reduce signaling overheads.

A first aspect of this application provides a communication method. The method includes:

A terminal device performs first-type measurement on a first reference signal, to obtain a first measurement result. The terminal device sends the first measurement result to a network device. The terminal device performs second-type measurement on a second reference signal based on the first measurement result, to obtain a second measurement result. The terminal device sends the second measurement result to the network device.

In the foregoing technical solution, the terminal device performs first-type measurement on the first reference signal, to obtain the first measurement result, and sends the first measurement result to the network device. The terminal device triggers, based on the first measurement result, the terminal device to perform second-type measurement on the second reference signal, and reports the second measurement result. The terminal device reports the second measurement result to the network device, and the network device does not need to trigger, by using DCI, the terminal device to report the measurement result, so that signaling overheads are reduced. The terminal device performs second-type measurement on the second reference signal based on the first measurement result, and reports the second measurement result. This helps improve reliability of the second measurement result reported by the terminal device, and avoids a case in which the second measurement result reported by the terminal device cannot truly reflect an overall status of a link due to impact caused by a short-time link quality fluctuation. Further, this helps the network device select an appropriate beam for the terminal device based on the second measurement result, thereby reducing latency overheads of beam switching performed by the terminal device, and improving communication quality.

In a possible implementation, the first measurement result includes measurement results of the first reference signal that are reported by the terminal device N consecutive times, and N is an integer greater than or equal to 1; and that the terminal device performs second-type measurement on a second reference signal based on the first measurement result, to obtain a second measurement result includes:
If all signal quality of the first reference signal in the measurement results of the first reference signal that are reported by the terminal device N consecutive times is greater than or equal to a first threshold, the terminal device performs second-type measurement on the second reference signal, to obtain the second measurement result; or
if all signal quality of the first reference signal in the measurement results of the first reference signal that are reported by the terminal device N consecutive times is greater than or equal to signal quality of a reference signal corresponding to a current serving beam of the terminal device, the terminal device performs second-type measurement on the second reference signal, to obtain the second measurement result.

The foregoing shows some possible trigger conditions for triggering the terminal device to perform second-type measurement on the second reference signal. Based on the measurement results of the first reference signal that are reported by the terminal device N consecutive times, the terminal device is triggered to perform second-type measurement, to improve the reliability of the second measurement result reported by the terminal device, and avoid the case in which the measurement result reported by the terminal device cannot truly reflect the overall status of the link due to the impact caused by the short-time link quality fluctuation. Further, this helps the network device select the appropriate beam for the terminal device based on the second measurement result, thereby reducing the latency overheads of the beam switching performed by the terminal device, and improving the communication quality.

In another possible implementation, after the terminal device sends the second measurement result to the network device, the method further includes:
If signal quality of the second reference signal in the second measurement result is greater than or equal to a second threshold, the terminal device switches to a first beam corresponding to the second reference signal; or
if signal quality of the second reference signal in the second measurement result is less than a second threshold, the terminal device maintains the current serving beam.

In the foregoing implementation, the terminal device performs second-type measurement on the second reference signal based on the first measurement result, and reports the second measurement result. Therefore, the terminal device determines, based on the second measurement result, whether the terminal device is to perform beam switching. This helps the terminal device select the appropriate beam, thereby improving the communication quality of the terminal device. The network device does not need to indicate the beam switching to the terminal device, so that signaling overheads are reduced.

In another possible implementation, after the terminal device sends the second measurement result to the network device, the method further includes:
The terminal device receives a first feedback message from the network device.

If the first feedback message is a first acknowledgment message, the terminal device switches to a first beam corresponding to the second reference signal; or
if the first feedback message is a first non-acknowledgment message, the terminal device maintains the current serving beam.

In this implementation, the terminal device may select the appropriate beam based on the first feedback message of the network device, to improve the communication quality of the terminal device.

In another possible implementation, after the terminal device sends the second measurement result to the network device, the method further includes:
If signal quality of the second reference signal in the second measurement result is greater than or equal to a second threshold, the terminal device receives a first acknowledgment message from the network device, and the terminal device switches to a first beam corresponding to the second reference signal; or
if signal quality of the second reference signal in the second measurement result is less than a second threshold, the terminal device receives a first non-acknowledgment message from the network device, and the terminal device maintains the current serving beam.

In this implementation, a specific implementation in which the network device sends a feedback message to the terminal device with reference to the second measurement result is shown. The terminal device performs second-type measurement on the second reference signal based on the first measurement result, and reports the second measurement result. This helps improve the reliability of the measurement result reported by the terminal device, and helps the network device indicate the terminal device to switch to the appropriate beam, thereby improving the communication quality.

In another possible implementation, after the terminal device sends the second measurement result to the network device, the method further includes:
The terminal device receives first indication information from the network device.

If the first indication information indicates the terminal device to switch to a first beam corresponding to the second reference signal, the terminal device switches to the first beam; or
if the first indication information indicates the terminal device to maintain the current serving beam, the terminal device maintains the current serving beam.

In the foregoing implementation, the terminal device may switch to the appropriate beam based on the first indication information of the network device, to improve the communication quality of the terminal device.

In another possible implementation, if the terminal device maintains the current serving beam, the method further includes:
The terminal device continues to perform first-type measurement on the first reference signal.

In this implementation, if the terminal device maintains the current serving beam, the terminal device may continue to perform first-type measurement on the first reference signal. This helps the terminal device perform second-type measurement based on the measurement result obtained through the first-type measurement. In this way, the terminal device reports the measurement result of the second-type measurement to the network device, and the network device does not need to schedule, by using the DCI, the terminal device to report the measurement result of the second-type measurement, so that the signaling overheads are reduced.

In another possible implementation, after the terminal device sends the second measurement result to the network device, the method further includes:
If signal quality of the second reference signal in the second measurement result is greater than or equal to a second threshold, the terminal device receives first indication information from the network device, where the first indication information indicates the terminal device to switch to a first beam corresponding to the second reference signal; and the terminal device switches to the first beam; or
if signal quality of the second reference signal in the second measurement result is less than a second threshold, the terminal device receives first indication information from the network device, where the first indication information indicates the terminal device to maintain the current serving beam; and the terminal device maintains the current serving beam.

In this implementation, a specific implementation in which the network device sends the indication information to the terminal device with reference to the second measurement result is shown. The terminal device performs second-type measurement on the second reference signal based on the first measurement result, and reports the second measurement result. This helps improve the reliability of the measurement result reported by the terminal device, and helps the network device indicate the terminal device to switch to the appropriate beam, thereby improving the communication quality.

In another possible implementation, the method further includes:
The terminal device performs first-type measurement on a third reference signal, to obtain a third measurement result. The terminal device sends the third measurement result to the network device. The terminal device performs second-type measurement on a fourth reference signal based on the third measurement result, to obtain a fourth measurement result. The terminal device sends the fourth measurement result to the network device.

In the foregoing implementation, according to the technical solution in this application, the terminal device performs second-type measurement on a plurality of reference signals, and reports corresponding measurement results. The network device does not need to trigger, by using the DCI, the terminal device to report the measurement results, so that the signaling overheads are reduced. The terminal device performs, based on a measurement result obtained by performing first-type measurement on a beam corresponding to each reference signal, second-type measurement on the beam, and reports a measurement result. This helps improve reliability of the measurement result reported by the terminal device, and avoids the case in which the measurement result reported by the terminal device cannot truly reflect the overall status of the link due to the impact caused by the short-time link quality fluctuation. This helps the network device select the appropriate beam for the terminal device based on the second measurement result, thereby reducing the latency overheads of the beam switching performed by the terminal device, and improving the communication quality.

In another possible implementation, the terminal device sends the fourth measurement result to the network device, and the method further includes:
If a first condition is satisfied, the terminal device switches to a first beam corresponding to the second reference signal, where the first condition includes: Signal quality of the second reference signal in the second measurement result is greater than or equal to a second threshold, and the signal quality of the second reference signal is greater than signal quality of the fourth reference signal in the fourth measurement result;
if a second condition is satisfied, the terminal device switches to a second beam, where the second condition includes: Signal quality of the fourth reference signal in the fourth measurement result is greater than or equal to a second threshold, and the signal quality of the fourth reference signal is greater than signal quality of the second reference signal; or
if a third condition is satisfied, the terminal device maintains the current serving beam, and the terminal device continues to perform first-type measurement on the first reference signal and the third reference signal, where the third condition includes: Both signal quality of the second reference signal in the second measurement result and signal quality of the fourth reference signal in the fourth measurement result are less than a second threshold.

In the foregoing implementation, the terminal device may determine, based on the second measurement result and the fourth measurement result, that the terminal device is to switch to the appropriate beam, to improve the communication quality of the terminal device. The network device does not need to indicate the beam switching to the terminal device, so that signaling overheads are reduced.

In another possible implementation, after the terminal device sends the fourth measurement result to the network device, the method further includes:
The terminal device receives a second feedback message from the network device.

If the second feedback message is a second acknowledgment message, and signal quality of the second reference signal in the second measurement result is greater than signal quality of the fourth reference signal in the fourth measurement result, the terminal device switches to a first beam;
if the second feedback message is a second acknowledgment message, and signal quality of the fourth reference signal in the fourth measurement result is greater than signal quality of the second reference signal in the second measurement result, the terminal device switches to a second beam; or
if the second feedback message is a second non-acknowledgment message, the terminal device maintains the current serving beam.

In the foregoing implementation, the terminal device may switch to the appropriate beam based on the second feedback message, to improve the communication quality of the terminal device. The network device does not need to indicate the beam switching to the terminal device by using additional signaling, so that the signaling overheads are reduced.

In another possible implementation, after the terminal device sends the fourth measurement result to the network device, the method further includes:
If signal quality of the second reference signal in the second measurement result is greater than or equal to a second threshold, and the signal quality of the second reference signal is greater than signal quality of the fourth reference signal in the fourth measurement result, the terminal device receives a second acknowledgment message from the network device, where the second acknowledgment message indicates the terminal device to switch to a first beam corresponding to the second reference signal; and the terminal device switches to the first beam corresponding to the second reference signal;
if signal quality of the fourth reference signal in the fourth measurement result is greater than or equal to a second threshold, and the signal quality of the fourth reference signal is greater than signal quality of the second reference signal in the second measurement result, the terminal device receives a second acknowledgment message from the network device, and the terminal device switches to a second beam corresponding to the fourth reference signal; or
if both signal quality of the second reference signal in the second measurement result and signal quality of the fourth reference signal in the fourth measurement result are less than a second threshold, the terminal device receives a second non-acknowledgment message from the network device, and the terminal device maintains the current serving beam.

In this implementation, a specific implementation in which the network device sends a feedback message to the terminal device with reference to the second measurement result and the fourth measurement result is shown. The terminal device performs second-type measurement on the second reference signal based on the first measurement result, and reports the second measurement result. The terminal device performs second-type measurement on the fourth reference signal based on the third measurement result, and reports the fourth measurement result. This helps improve the reliability of the measurement results reported by the terminal device, and helps the network device indicate the terminal device to switch to the appropriate beam, thereby improving the communication quality.

In another possible implementation, the method further includes:
If the terminal device does not receive a feedback message from the network device for the second measurement result, the terminal device maintains the current serving beam, and the terminal device continues to perform first-type measurement on the first reference signal and the third reference signal.

In this implementation, if the terminal device does not receive the feedback message from the network device, the terminal device maintains the current serving beam, to ensure normal communication between the terminal device and the network device.

In another possible implementation, after the terminal device sends the fourth measurement result to the network device, the method further includes:
The terminal device receives second indication information from the network device.

If the second indication information indicates the terminal device to switch to a first beam corresponding to the second reference signal, the terminal device switches to the first beam;
if the second indication information indicates the terminal device to switch to a second beam corresponding to the fourth reference signal, the terminal device switches to the second beam; or
if the second indication information indicates the terminal device to maintain the current serving beam, the terminal device maintains the current serving beam.

In the foregoing implementation, the terminal device may switch to the appropriate beam based on the second indication information, to improve the communication quality of the terminal device.

In another possible implementation, after the terminal device sends the fourth measurement result to the network device, the method further includes:
If signal quality of the second reference signal in the second measurement result is greater than or equal to a second threshold, and the signal quality of the second reference signal is greater than signal quality corresponding to the fourth reference signal in the fourth measurement result, the terminal device receives second indication information from the network device, where the second indication information indicates the terminal device to switch to a first beam corresponding to the second reference signal; and the terminal device switches to the first beam;
if signal quality of the fourth reference signal in the fourth measurement result is greater than or equal to a second threshold, and the signal quality of the fourth reference signal is greater than signal quality of the second reference signal in the second measurement result, the terminal device receives second indication information from the network device, where the second indication information indicates the terminal device to switch to a second beam corresponding to the fourth reference signal; and the terminal device switches to the second beam; or
if both signal quality of the second reference signal in the second measurement result and signal quality of the fourth reference signal in the fourth measurement result are less than a second threshold, the terminal device receives second indication information from the network device, where the second indication information indicates the terminal device to maintain the current serving beam; and the terminal device maintains the current serving beam, and the terminal device continues to perform first-type measurement on the first reference signal and the third reference signal.

In this implementation, a specific implementation in which the network device sends the indication information to the terminal device with reference to the second measurement result and the fourth measurement result is shown. The terminal device performs second-type measurement on the second reference signal based on the first measurement result, and reports the second measurement result. The terminal device performs second-type measurement on the fourth reference signal based on the third measurement result, and reports the fourth measurement result. This helps improve the reliability of the measurement results reported by the terminal device, and helps the network device indicate the terminal device to switch to the appropriate beam, thereby improving the communication quality.

In another possible implementation, if the terminal device maintains the current serving beam, the method further includes:
The terminal device continues to perform first-type measurement on the first reference signal and the third reference signal.

In this implementation, if the terminal device maintains the current serving beam, the terminal device may continue to perform first-type measurement on the first reference signal and the third reference signal. This helps the terminal device perform second-type measurement based on the measurement result obtained through the first-type measurement. In this way, the terminal device reports the measurement result of the second-type measurement to the network device, and the network device does not need to schedule, by using the DCI, the terminal device to report the measurement result of the second-type measurement, so that the signaling overheads are reduced.

In another possible implementation, the method further includes:
The terminal device receives first configuration information from the network device, where the first configuration information indicates the terminal device to perform second-type measurement on the second reference signal based on the first measurement result and report a measurement result, or the first configuration information indicates the terminal device to perform second-type measurement on the second reference signal based on the first measurement result.

In the foregoing implementation, the network device may configure, by using the first configuration information, the terminal device to perform second-type measurement on the second reference signal based on the first measurement result and report the measurement result. The terminal device reports the second measurement result to the network device. The network device does not need to trigger, by using the DCI, the terminal device to report the measurement result, so that the signaling overheads and the latency overheads are reduced. In addition, this helps improve the reliability of the measurement result reported by the terminal device, and avoids the case in which the measurement result reported by the terminal device cannot truly reflect the overall status of the link due to the impact caused by the short-time link quality fluctuation. This helps the network device select the appropriate beam for the terminal device based on the second measurement result, thereby improving the communication quality.

In another possible implementation, the first-type measurement includes periodic measurement performed by the terminal device on a reference signal, and the second-type measurement includes semi-persistent measurement performed by the terminal device on a reference signal resource;
the first-type measurement includes periodic measurement performed by the terminal device on a reference signal, and the second-type measurement includes aperiodic measurement performed by the terminal device on a reference signal; or
the first-type measurement includes semi-persistent measurement performed by the terminal device on a reference signal, and the second-type measurement includes aperiodic measurement performed by the terminal device on a reference signal.

In the foregoing implementation, several possible implementations of the first-type measurement and the second-type measurement are shown. This helps improve feasibility and diversity of the solution.

In another possible implementation, the method further includes:
The terminal device receives second configuration information from the network device, where the second configuration information indicates the terminal device to perform first-type measurement on the first reference signal.

In the foregoing implementation, the network device may indicate, by using the second configuration information, the terminal device to perform first-type measurement on the first reference signal, to implement implementation of the solution in this application.

In another possible implementation, that if signal quality of the second reference signal in the second measurement result is greater than or equal to a second threshold, the terminal device switches to a first beam includes:
If the signal quality of the second reference signal in the second measurement result is greater than or equal to the second threshold, and the first beam belongs to a first beam set, the first beam set includes a beam used by the terminal device to initiate beam switching.

In the foregoing implementation, a specific condition for switching to the first beam by the terminal device is shown. In addition to that the signal quality of the second reference signal is greater than or equal to the second threshold, the first beam should belong to the beam used by the terminal device to initiate the beam switching. This helps the terminal device switch to the appropriate beam, thereby ensuring the normal communication between the terminal device and the network device.

In another possible implementation, the first beam belongs to a first beam set, and the first beam set includes a beam used by a communication apparatus to initiate beam switching.

In another possible implementation, the method further includes:
The terminal device updates the first beam set according to a first rule.

In this implementation, the terminal device may update the first beam set. In this way, the network device does not need to update the first beam set by using signaling, so that the signaling overheads are reduced.

In another possible implementation, that the terminal device updates the first beam set according to a first rule includes:
The terminal device updates the beam in the first beam set to a beam corresponding to one or more transmission configuration indicator (transmission configuration indicator state, TCI) states activated by the network device for the terminal device, to obtain an updated first beam set.

In this implementation, the terminal device uses, as the beam in the first beam set, the TCI-state activated by the network device for the terminal device. This helps the terminal device quickly update the first beam set, and improves real-time performance of the beam in the first beam set.

In another possible implementation, the first beam set includes a beam corresponding to one or more TCI-states activated by the network device for the terminal device. In this implementation, the TCI-state activated by the network device for the terminal device is used as the beam in the first beam set. This helps improve real-time performance of the beam in the first beam set.

In another possible implementation, that the terminal device updates the first beam set according to a first rule includes:
The terminal device adds, to the first beam set, the beam corresponding to the one or more TCI-states activated by the network device for the terminal device, to obtain an updated first beam set.

In this implementation, the terminal device adds, to the first beam set, the TCI-state activated by the network device for the terminal device. This helps improve the real-time performance of the beam in the first beam set.

In another possible implementation, the method further includes:
The terminal device receives third indication information from the network device, where the third indication information indicates the one or more TCI-states activated for the terminal device. The terminal device sends a third acknowledgment message to the network device, where the third acknowledgment message indicates that the terminal device successfully receives the third indication information.

In this implementation, the terminal device may determine, by using the third indication information, the TCI-state activated by the network device for the terminal device. When successfully receiving the third indication information, the terminal device may feed back the third acknowledgment message.

In another possible implementation, after first preset duration from a moment at which the terminal device sends the third determining message, a third beam deleted by the terminal device from the first beam set is not used by the terminal device to initiate the beam switching; and
within the first preset duration from the moment at which the terminal device sends the third determining message, the third beam may still be used by the terminal device to initiate the beam switching.

In this implementation, some stipulations about whether a beam deleted by the terminal device from the first beam set may be used by the terminal device to initiate the beam switching are shown. In this way, the solution is more comprehensive.

In another possible implementation, the method further includes:
The terminal device receives fourth indication information from the network device, where the fourth indication information indicates the terminal device to enable a function of updating the first beam set by using the TCI-state activated by the network device for the terminal device.

In this implementation, the terminal device may enable, by using the fourth indication information, the function of updating the first beam set by using the TCI-state activated by the network device for the terminal device. In this way, the terminal device updates the first beam set by using the activated TCI-state, to improve real-time performance of the first beam set.

In another possible implementation, that the terminal device updates the first beam set according to a first rule includes:
The terminal device determines X TCI-states based on a fifth measurement result, where the fifth measurement result includes a measurement result of one or more reference signal resources that is obtained through measurement and reported by the terminal device, each of the one or more reference signal resources corresponds to one TCI-state, the X TCI-states are TCI-states corresponding to the first X reference signal resources with highest signal quality in the fifth measurement result, and X is an integer greater than or equal to 1. The terminal device updates the beam in the first beam set to beams corresponding to the X TCI-states, to obtain an updated first beam set.

In this implementation, another manner of updating the beam set by the terminal device is shown. The terminal device updates the first beam set based on the fifth measurement result. This helps improve real-time performance of the beam in the first beam set.

In another possible implementation, the updated first beam set includes a beam corresponding to a fifth reference signal, and the method further includes:
If measurement results reported by the terminal device Y consecutive times do not include a measurement result of the beam corresponding to the fifth reference signal, the terminal device determines that the beam corresponding to the fifth reference signal is not used by the terminal device to initiate the beam switching, where Y is an integer greater than or equal to 1.

In this implementation, some stipulations about whether the beam in the first beam set is for initiating the beam switching are shown, so that the solution is more comprehensive, and this helps further improve the real-time performance of the beam in the first beam set.

A second aspect of this application provides a communication method, including:
A network device receives a first measurement result from a terminal device, where the first measurement result is a measurement result obtained by performing first-type measurement on a first reference signal by the terminal device. The network device receives a second measurement result from the terminal device, where the second measurement result is a measurement result obtained by performing second-type measurement on a second reference signal based on the first measurement result by the terminal device.

In the foregoing technical solution, the network device receives the second measurement result from the terminal device. The second measurement result is a measurement result obtained by performing second-type measurement on the second reference signal based on the first measurement result by the terminal device, and the first measurement result is a measurement result obtained by performing first-type measurement on the first reference signal by the terminal device. The network device does not need to trigger, by using DCI, the terminal device to report the measurement result, so that signaling overheads are reduced. The terminal device performs second-type measurement on the second reference signal based on the first measurement result, and reports the second measurement result. This helps improve reliability of the second measurement result reported by the terminal device, and avoids a case in which the measurement result reported by the terminal device cannot truly reflect an overall status of a link due to impact caused by a short-time link quality fluctuation. This helps the network device select an appropriate beam for the terminal device based on the second measurement result, thereby reducing latency overheads of beam switching performed by the terminal device, and improving communication quality.

In a possible implementation, the method further includes:
The network device sends first configuration information to the terminal device, where the first configuration information indicates the terminal device to perform second-type measurement on the second reference signal based on the first measurement result and report the measurement result, or the first configuration information indicates the terminal device to perform second-type measurement on the second reference signal based on the first measurement result.

In the foregoing implementation, the network device may configure, by using the first configuration information, the terminal device to perform second-type measurement on the second reference signal based on the first measurement result and report the measurement result. The terminal device reports the second measurement result to the network device. The network device does not need to trigger, by using the DCI, the terminal device to report the measurement result, so that the signaling overheads and the latency overheads are reduced. In addition, this helps improve the reliability of the measurement result reported by the terminal device, and avoids the case in which the measurement result reported by the terminal device cannot truly reflect the overall status of the link due to the impact caused by the short-time link quality fluctuation. This helps the network device select the appropriate beam for the terminal device based on the second measurement result, thereby improving the communication quality.

In another possible implementation, the first measurement result includes measurement results of the first reference signal that are reported by the terminal device N consecutive times, and N is an integer greater than or equal to 1; and
the first configuration information indicates: if all signal quality of the first reference signal in the measurement results of the first reference signal that are reported by the terminal device N consecutive times is greater than or equal to a first threshold, the terminal device triggers the second-type measurement on the second reference signal and reporting of the measurement result, where N is an integer greater than or equal to 1; or
the first configuration information indicates: if all signal quality of the first reference signal in the measurement results of the first reference signal that are reported by the terminal device N consecutive times is greater than or equal to signal quality of a reference signal corresponding to a current serving beam of the terminal device, the terminal device triggers the second-type measurement on the second reference signal and reporting of the measurement result.

The foregoing shows some possible trigger conditions for triggering the terminal device to perform second-type measurement on the second reference signal. Based on the measurement results of the first reference signal that are reported by the terminal device N consecutive times, the terminal device is triggered to perform second-type measurement, to improve the reliability of the second measurement result reported by the terminal device, and avoid the case in which the measurement result reported by the terminal device cannot truly reflect the overall status of the link due to the impact caused by the short-time link quality fluctuation. This helps the network device select the appropriate beam for the terminal device based on the second measurement result, thereby reducing the latency overheads of the beam switching performed by the terminal device, and improving the communication quality.

In another possible implementation, after the network device receives the second measurement result from the terminal device, the method further includes:
If signal quality of the second reference signal in the second measurement result is greater than or equal to a second threshold, the network device determines that the terminal device is to switch to a first beam; or
if signal quality of the second reference signal in the second measurement result is less than a second threshold, the network device determines that the terminal device is to maintain the current serving beam.

In the foregoing implementation, the second measurement result is the measurement result obtained by performing second-type measurement on the second reference signal based on the first measurement result by the terminal device. The network device determines, based on the second measurement result, whether the terminal device is to perform beam switching, so that the network device determines a beam to be accessed by the terminal device. In this way, the network device performs communication transmission with the terminal device by using the appropriate beam, to improve the communication quality.

In another possible implementation, after the network device receives the second measurement result from the terminal device, the method further includes:
The network device sends a first feedback message to the terminal device, where
the first feedback message is a first acknowledgment message, and the first acknowledgment message indicates the terminal device to switch to a first beam; or the first feedback message is a first non-acknowledgment message, and the first non-acknowledgment message indicates the terminal device to maintain the current serving beam.

In this implementation, the second measurement result is the measurement result obtained by performing second-type measurement on the second reference signal based on the first measurement result by the terminal device. The network device may send the first feedback message to the terminal device for the second measurement result, so that the network device indicates the appropriate beam to the terminal device, to improve the communication quality.

In another possible implementation, after the network device receives the second measurement result from the terminal device, the method further includes:
If signal quality of the second reference signal in the second measurement result is greater than or equal to a second threshold, the network device sends a first acknowledgment message to the terminal device, where the first acknowledgment message indicates the terminal device to switch to a first beam corresponding to the second reference signal; or
if signal quality of the second reference signal in the second measurement result is less than a second threshold, the network device sends a first non-acknowledgment message to the terminal device, where the first non-acknowledgment message indicates the terminal device to maintain the current serving beam.

In this implementation, the second measurement result is the measurement result obtained by performing second-type measurement on the second reference signal based on the first measurement result by the terminal device. The network device may send a first feedback message to the terminal device for the second measurement result, so that the network device indicates the appropriate beam to the terminal device, to improve the communication quality.

In another possible implementation, after the network device receives the second measurement result from the terminal device, the method further includes:
The network device sends first indication information to the terminal device, where
the first indication information indicates the terminal device to switch to a first beam, or the first indication information indicates the terminal device to maintain the current serving beam or not to perform beam switching.

In this implementation, the second measurement result is the measurement result obtained by performing second-type measurement on the second reference signal based on the first measurement result by the terminal device. The network device may send the first indication message to the terminal device for the second measurement result, so that the network device indicates the appropriate beam to the terminal device, to improve the communication quality.

In another possible implementation, after the network device receives the second measurement result from the terminal device, the method further includes:
If the signal quality of the second reference signal in the second measurement result is greater than or equal to a second threshold, the network device sends first indication information to the terminal device, where the first indication information indicates the terminal device to switch to a first beam corresponding to the second reference signal; or
if signal quality of the second reference signal in the second measurement result is less than a second threshold, the network device sends first indication information to the terminal device, where the first indication information indicates the terminal device to maintain the current serving beam or not to perform beam switching.

In this implementation, the second measurement result is the measurement result obtained by performing second-type measurement on the second reference signal based on the first measurement result by the terminal device. The network device may send the first indication message to the terminal device for the second measurement result, so that the network device indicates the appropriate beam to the terminal device, to improve the communication quality.

In another possible implementation, the method further includes:
The network device receives a third measurement result from the terminal device, where the third measurement result is a measurement result obtained by performing first-type measurement on a third reference signal by the terminal device.

The network device receives a fourth measurement result from the terminal device, where the fourth measurement result is a measurement result obtained by performing second-type measurement on a fourth reference signal based on the third measurement result by the terminal device.

In the foregoing implementation, the network device may further receive the fourth measurement result. That is, the terminal device may perform second-type measurement on a plurality of reference signals, and report corresponding measurement results. The network device does not need to trigger, by using the DCI, the terminal device to report the measurement results, so that the signaling overheads are reduced. The terminal device performs, based on a measurement result obtained by performing first-type measurement on a beam corresponding to each reference signal, second-type measurement on the beam, and reports a measurement result. This helps improve reliability of the measurement result reported by the terminal device, and avoids the case in which the measurement result reported by the terminal device cannot truly reflect the overall status of the link due to the impact caused by the short-time link quality fluctuation. This helps the network device select the appropriate beam for the terminal device based on the second measurement result, thereby reducing the latency overheads of the beam switching performed by the terminal device, and improving the communication quality.

In another possible implementation, after the network device receives the fourth measurement result from the terminal device, the method further includes:
If a first condition is satisfied, the network device determines that the terminal device is to switch to a first beam corresponding to the second reference signal, where the first condition includes: Signal quality of the second reference signal in the second measurement result is greater than or equal to a second threshold, and the signal quality of the second reference signal is greater than signal quality of the fourth reference signal in the fourth measurement result;
if a second condition is satisfied, the network device determines that the terminal device is to switch to a second beam, where the second condition includes: Signal quality of the second reference signal in the fourth measurement result is greater than or equal to a second threshold, and the signal quality of the fourth reference signal is greater than signal quality of the second reference signal; or
if a third condition is satisfied, the network device determines that the terminal device is to maintain the current serving beam, where the third condition includes: Both signal quality of the second reference signal in the second measurement result and signal quality of the fourth reference signal in the fourth measurement result are less than a second threshold.

In the foregoing implementation, the network device may determine, based on the second measurement result and the fourth measurement result, a beam to be accessed by the terminal device, so that the network device performs communication transmission with the terminal device. The network device does not need to indicate the beam switching to the terminal device, so that the signaling overheads are reduced.

In another possible implementation, after the network device receives the fourth measurement result from the terminal device, the method further includes:
The network device sends a second feedback message to the terminal device, where the second feedback message is a second acknowledgment message, the second acknowledgment message indicates the terminal device to switch to a beam with highest signal quality, and the beam with the highest signal quality is a beam with higher signal quality in a first beam corresponding to the second reference signal and a second beam corresponding to the fourth reference signal; or the second feedback message is a second non-acknowledgment message, and the second non-acknowledgment message indicates the terminal device to maintain the current serving beam.

In the foregoing implementation, the network device sends the second feedback message to the terminal device, to indirectly indicate a beam to the terminal device, and improve the communication quality of the terminal device. The network device does not need to indicate the beam switching to the terminal device by using additional signaling, so that the signaling overheads are reduced.

In another possible implementation, after the network device receives the fourth measurement result from the terminal device, the method further includes:
If signal quality of the second reference signal in the second measurement result is greater than or equal to a second threshold, and the signal quality of the second reference signal is greater than signal quality of the fourth reference signal in the fourth measurement result, the network device sends a second acknowledgment message to the terminal device, where the second acknowledgment message indicates the terminal device to switch to a first beam corresponding to the second reference signal;
if signal quality of the fourth reference signal in the fourth measurement result is greater than or equal to a second threshold, and the signal quality of the fourth reference signal is greater than signal quality of the second reference signal in the second measurement result, the network device sends a second acknowledgment message to the terminal device, where the second acknowledgment message indicates the terminal device to switch to a second beam corresponding to the fourth reference signal; or
if both signal quality of the second reference signal in the second measurement result and signal quality of the fourth reference signal in the fourth measurement result are less than a second threshold, the network device sends a second non-acknowledgment message to the terminal device, where the second non-acknowledgment message indicates the terminal device to maintain the current serving beam.

In the foregoing implementation, the network device may determine, based on the second measurement result and the fourth measurement result, a beam to be accessed by the terminal device, so that the network device performs communication transmission with the terminal device, and this helps improve the communication quality. In this way, the network device does not need to indicate the beam switching to the terminal device, so that the signaling overheads are reduced.

In another possible implementation, after the network device receives the fourth measurement result from the terminal device, the method further includes:
The network device sends second indication information to the terminal device, where
the second indication information indicates the terminal device to switch to a first beam corresponding to the second reference signal, the second indication information indicates the terminal device to switch to a second beam corresponding to the fourth reference signal, or the second indication information indicates the terminal device to maintain the current serving beam.

In the foregoing implementation, the network device sends the second indication information to the terminal device, to indicate a beam to the terminal device, and improve the communication quality of the terminal device.

In another possible implementation, after the network device receives the fourth measurement result from the terminal device, the method further includes:
If signal quality of the second reference signal in the second measurement result is greater than or equal to a second threshold, and the signal quality of the second reference signal is greater than signal quality of the fourth reference signal in the fourth measurement result, the network device sends second indication information to the terminal device, where the second indication information indicates the terminal device to switch to a first beam corresponding to the second reference signal;
if signal quality of the fourth reference signal in the fourth measurement result is greater than or equal to a second threshold, and the signal quality of the fourth reference signal is greater than signal quality of the second reference signal in the second measurement result, the network device sends second indication information to the terminal device, where the second indication information indicates the terminal device to switch to a second beam corresponding to the fourth reference signal; or
if both signal quality of the second reference signal in the second measurement result and signal quality of the fourth reference signal in the fourth measurement result are less than a second threshold, the network device sends second indication information to the terminal device, where the second indication information indicates the terminal device to maintain the current serving beam.

In the foregoing implementation, the network device may indicate, based on the second measurement result and the fourth measurement result, a beam to which the terminal device is to switch, so that the network device performs communication transmission with the terminal device, and this helps improve the communication quality. The network device does not need to indicate the beam switching to the terminal device, so that the signaling overheads are reduced.

In another possible implementation, the first-type measurement includes periodic measurement performed by the terminal device on a reference signal, and the second-type measurement includes semi-persistent measurement performed by the terminal device on a reference signal resource;
the first-type measurement includes periodic measurement performed by the terminal device on a reference signal, and the second-type measurement includes aperiodic measurement performed by the terminal device on a reference signal; or
the first-type measurement includes semi-persistent measurement performed by the terminal device on a reference signal, and the second-type measurement includes aperiodic measurement performed by the terminal device on a reference signal.

In the foregoing implementation, several possible implementations of the first-type measurement and the second-type measurement are shown. This helps improve feasibility and diversity of the solution.

In another possible implementation, the method further includes:
The network device sends second configuration information to the terminal device, where the second configuration information indicates the terminal device to perform first-type measurement on the first reference signal.

In the foregoing implementation, the network device may configure, by using the second configuration information, the terminal device to perform first-type measurement on the first reference signal, to implement implementation of the solution in this application.

In another possible implementation, that if signal quality of the second reference signal in the second measurement result is greater than or equal to a second threshold, the network device determines that the terminal device is to switch to a first beam includes:
If the signal quality of the second reference signal in the second measurement result is greater than or equal to the second threshold, and the first beam belongs to a first beam set, the first beam set includes a beam used by the terminal device to initiate beam switching.

In the foregoing implementation, a specific condition for determining, by the network device, that the terminal device is to switch to the first beam is shown. In addition to that the signal quality of the second reference signal is greater than or equal to the second threshold, the first beam should belong to the beam used by the terminal device to initiate the beam switching. In this way, normal communication between the terminal device and the network device is ensured.

In another possible implementation, the first beam belongs to a first beam set, and the first beam set includes a beam used by the terminal device to initiate beam switching.

In another possible implementation, the method further includes:
The network device updates the first beam set according to a first rule.

In this implementation, the network device may update the first beam set, to ensure real-time performance of the first beam set.

In another possible implementation, that the network device updates the first beam set according to a first rule includes:
The network device updates the beam in the first beam set to a beam corresponding to one or more TCI-states activated by the network device for the terminal device, to obtain an updated first beam set.

In this implementation, the network device uses, as the beam in the first beam set, the TCI-state activated by the network device for the terminal device. Real-time performance of the beam in the first beam set is improved.

In another possible implementation, the first beam set includes a beam corresponding to one or more TCI-states activated by the network device for the terminal device. In this implementation, the TCI-state activated by the network device for the terminal device is used as the beam in the first beam set. This helps improve real-time performance of the beam in the first beam set.

In another possible implementation, that the network device updates the first beam set according to a first rule includes:
The network device adds, to the first beam set, the beam corresponding to the one or more TCI-states activated by the network device for the terminal device, to obtain an updated first beam set. In this implementation, the network device adds, to the first beam set, the TCI-state activated by the network device for the terminal device. This helps improve the real-time performance of the beam.

In another possible implementation, the method further includes:
The network device sends third indication information to a terminal device, where the third indication information indicates the one or more TCI-states activated for the terminal device.

The network device receives a third acknowledgment message from the terminal device, where the third acknowledgment message indicates that the terminal device successfully receives the third indication information.

In another possible implementation, after first preset duration from a moment at which the terminal device sends the third determining message, a third beam deleted by the network device from the first beam set is not used by the terminal device to initiate the beam switching; and
within the first preset duration from the moment at which the terminal device sends the third determining message, the third beam may still be used by the terminal device to initiate the beam switching.

In this implementation, some stipulations about whether a beam deleted by the terminal device from the first beam set may be used by the terminal device to initiate the beam switching are shown. In this way, the solution is more comprehensive.

In another possible implementation, the method further includes:
The network device sends fourth indication information to the terminal device, where the fourth indication information indicates the terminal device to enable a function of updating the first beam set by using the TCI-state activated by the network device for the terminal device.

In this implementation, the network device indicates the terminal device to enable the function of updating the first beam set by using the TCI-state activated by the network device for the terminal device. In this way, the terminal device updates the first beam set by using the activated TCI-state, to improve real-time performance of the first beam set.

In another possible implementation, that the network device updates the first beam set according to a first rule includes:
The network device determines X TCI-states based on a fifth measurement result, where the fifth measurement result includes a measurement result of one or more reference signals that is obtained through measurement and reported by the terminal device, each of the one or more reference signals corresponds to one TCI-state, the X TCI-states are TCI-states corresponding to the first X reference signal resources with highest signal quality in the fifth measurement result, and X is an integer greater than or equal to 1. The network device updates the beam in the first beam set to beams corresponding to the X TCI-states, to obtain an updated first beam set.

In this implementation, another manner of updating the first beam set by the network device is shown. The network device updates the first beam set based on the fifth measurement result. This helps improve real-time performance of the beam in the first beam set.

In another possible implementation, the updated first beam set includes a beam corresponding to a fifth reference signal, and the method further includes:
If none of measurement results reported by the terminal device Y consecutive times include a measurement result of the beam corresponding to the fifth reference signal, the network device determines that the beam corresponding to the fifth reference signal is not used by the terminal device to initiate the beam switching, where Y is an integer greater than or equal to 1.

In this implementation, some stipulations about whether the beam in the first beam set is for initiating the beam switching are shown, so that the solution is more comprehensive, and this helps further improve the real-time performance of the beam in the first beam set.

A third aspect of this application provides a communication method, including:
A terminal device performs first-type measurement on a first reference signal, to obtain a first measurement result. The terminal device performs second-type measurement on a second reference signal based on the first measurement result, to obtain a second measurement result. The terminal device sends the second measurement result to a network device.

In the foregoing technical solution, the terminal device performs first-type measurement on the first reference signal, to obtain the first measurement result. The terminal device triggers, based on the first measurement result, the terminal device to perform second-type measurement on the second reference signal, and reports the second measurement result. The terminal device reports the second measurement result to the network device, and the network device does not need to trigger, by using DCI, the terminal device to report the measurement result, so that signaling overheads are reduced. The terminal device performs second-type measurement on the second reference signal based on the first measurement result, and reports the second measurement result. This helps improve reliability of the second measurement result reported by the terminal device, and avoids a case in which the second measurement result reported by the terminal device cannot truly reflect an overall status of a link due to impact caused by a short-time link quality fluctuation. This helps the network device select an appropriate beam for the terminal device based on the second measurement result, thereby reducing latency overheads of beam switching performed by the terminal device, and improving communication quality.

In a possible implementation, the first measurement result includes measurement results of the first reference signal that are obtained by the terminal device through N consecutive times of measurement, and N is an integer greater than or equal to 1; and that the terminal device performs second-type measurement on a second reference signal based on the first measurement result, to obtain a second measurement result includes:

If all signal quality of the first reference signal in the measurement results of the first reference signal that are obtained by the terminal device through the N consecutive times of measurement is greater than or equal to a first threshold, the terminal device performs second-type measurement on the second reference signal, to obtain the second measurement result; or
if all signal quality of the first reference signal in the measurement results of the first reference signal that are obtained by the terminal device through the N consecutive times of measurement is greater than or equal to signal quality of a reference signal corresponding to a current serving beam of the terminal device, the terminal device performs second-type measurement on the second reference signal, to obtain the second measurement result.

A fourth aspect of this application provides a communication method, including:
A network device receives a second measurement result from a terminal device, where the second measurement result is a measurement result obtained by performing second-type measurement on a second reference signal based on a first measurement result by the terminal device, and the first measurement result is a measurement result obtained by performing first-type measurement on a first reference signal by the terminal device.

In the foregoing technical solution, the network device receives the second measurement result from the terminal device. The second measurement result is the measurement result obtained by performing second-type measurement on the second reference signal based on the first measurement result by the terminal device, and the first measurement result is the measurement result obtained by performing first-type measurement on the first reference signal by the terminal device. The network device does not need to trigger, by using DCI, the terminal device to report the measurement result, so that signaling overheads are reduced. The terminal device performs second-type measurement on the second reference signal based on the first measurement result, and reports the second measurement result. This helps improve reliability of the second measurement result reported by the terminal device, and avoids a case in which the measurement result reported by the terminal device cannot truly reflect an overall status of a link due to impact caused by a short-time link quality fluctuation. This helps the network device select an appropriate beam for the terminal device based on the second measurement result, thereby reducing latency overheads of beam switching performed by the terminal device, and improving communication quality.

In another possible implementation, the first measurement result includes measurement results of the first reference signal that are obtained by the terminal device through N consecutive times of measurement, and N is an integer greater than or equal to 1; and
first configuration information indicates: if all signal quality of the first reference signal in the measurement results of the first reference signal that are obtained by the terminal device through the N consecutive times of measurement is greater than or equal to a first threshold, the terminal device triggers the second-type measurement on the second reference signal and reporting of the measurement result, where N is an integer greater than or equal to 1; or
first configuration information indicates: if all signal quality of the first reference signal in the measurement results of the first reference signal that are obtained by the terminal device through the N consecutive times of measurement is greater than or equal to signal quality of a reference signal corresponding to a current serving beam of the terminal device, the terminal device triggers the second-type measurement on the second reference signal and reporting of the measurement result.

A fifth aspect of this application provides a communication method, including:
A communication device determines a first beam set, where the first beam set includes a beam used by a terminal device to initiate beam switching. The communication device updates the first beam set according to a first rule.

In the foregoing technical solution, the communication device may update the first beam set. For example, the communication device is the terminal device, and the terminal device may update the first beam set according to the first rule, to reduce signaling overheads for configuring the first beam set by a network device for the terminal device. Generally, the network device configures the first beam set for the terminal device by using a radio resource control (radio resource control, RRC) message. However, long time is needed for the network device to update the first beam set by using the RRC message. Consequently, latency of updating the first beam set is long. However, using the manner of updating the first beam set shown in this application helps quickly update the first beam set and improve real-time performance of the beam in the first beam set.

In a possible implementation, that the communication device updates the first beam set according to a first rule includes:
The communication device updates the beam in the first beam set to a beam corresponding to one or more TCI-states activated by a network device for the terminal device, to obtain an updated first beam set.

In this implementation, the communication device uses, as a beam in the updated first beam set, the beam corresponding to the one or more TCI-states activated by the network device for the terminal device. This helps quickly update the first beam set and improve the real-time performance of the beam in the first beam set.

In another possible implementation, that the communication device updates the first beam set according to a first rule includes:
The communication device adds, to the first beam set, a beam corresponding to one or more TCI-states activated by a network device for the terminal device, to obtain an updated first beam set.

In this implementation, the communication device adds, to the first beam set, the beam corresponding to the one or more TCI-states activated by the network device for the terminal device. This helps improve the real-time performance of the beam in the first beam set.

In another possible implementation, the communication device is the terminal device, and the method further includes:
The terminal device receives third indication information from the network device, where the third indication information indicates the one or more TCI-states activated for the terminal device.

The terminal device sends a third acknowledgment message to the network device, where the third acknowledgment message indicates that the terminal device successfully receives the third indication information.

In another possible implementation, after first preset duration from a moment at which the terminal device sends the third determining message, a third beam deleted by the terminal device from the first beam set is not used by the terminal device to initiate the beam switching; and
within the first preset duration from the moment at which the terminal device sends the third determining message, the third beam may still be used by the terminal device to initiate the beam switching.

In this implementation, some stipulations about whether a beam deleted by the communication device from the first beam set may be used by the terminal device to initiate the beam switching are shown. In this way, the solution is more comprehensive.

In another possible implementation, the communication device is the terminal device, and the method further includes:
The terminal device receives fourth indication information from the network device, where the fourth indication information indicates the terminal device to enable a function of updating the first beam set by using the TCI-state activated by the network device for the terminal device.

In this implementation, the terminal device may enable, by using the fourth indication information, the function of updating the first beam set by using the TCI-state activated by the network device for the terminal device. In this way, the terminal device updates the first beam set by using the activated TCI-state, to improve real-time performance of the first beam set.

In another possible implementation, that the communication device updates the first beam set according to a first rule includes:
The communication device determines X TCI-states based on a fifth measurement result, where the fifth measurement result includes a measurement result of one or more reference signals that is obtained through measurement and reported by the terminal device, each of the one or more reference signals corresponds to one TCI-state, the X TCI-states are TCI-states corresponding to the first X reference signals with highest signal quality in the fifth measurement result, and X is an integer greater than or equal to 1. The communication device updates the beam in the first beam set to beams corresponding to the X TCI-states, to obtain an updated first beam set.

In this implementation, another manner of updating the beam set by the communication device is shown. The communication device updates the first beam set based on the fifth measurement result. This helps improve real-time performance of the beam in the first beam set.

In another possible implementation, the updated first beam set includes a beam corresponding to a fifth reference signal, and the method further includes:
If none of measurement results reported by the terminal device Y consecutive times include a measurement result of the beam corresponding to the fifth reference signal, the communication device determines that the beam corresponding to the fifth reference signal is not used by the terminal device to initiate the beam switching, where Y is an integer greater than or equal to 1.

In this implementation, some stipulations about whether the beam in the first beam set is for initiating the beam switching are shown, so that the solution is more comprehensive, and this helps further improve the real-time performance of the beam in the first beam set.

In another possible implementation, the communication device is the terminal device, and the method further includes:
The terminal device initiates the beam switching based on the first beam set.

A sixth aspect of this application provides a communication apparatus, including:
a processing module, configured to perform first-type measurement on a first reference signal, to obtain a first measurement result; and
a transceiver module, configured to send the first measurement result to a network device, where
the processing module is further configured to perform second-type measurement on a second reference signal based on the first measurement result, to obtain a second measurement result; and
the transceiver module is further configured to send the second measurement result to the network device.

In a possible implementation, the first measurement result includes measurement results of the first reference signal that are reported by the communication apparatus N consecutive times, and N is an integer greater than or equal to 1; and the processing module is specifically configured to:
if all signal quality of the first reference signal in the measurement results of the first reference signal that are reported by the communication apparatus N consecutive times is greater than or equal to a first threshold, perform second-type measurement on the second reference signal, to obtain the second measurement result; or
if all signal quality of the first reference signal in the measurement results of the first reference signal that are reported by the communication apparatus N consecutive times is greater than or equal to signal quality of a reference signal corresponding to a current serving beam of the communication apparatus, perform second-type measurement on the second reference signal, to obtain the second measurement result.

In another possible implementation, the processing module is further configured to:
if signal quality of the second reference signal in the second measurement result is greater than or equal to a second threshold, switch to a first beam; or
if signal quality of the second reference signal in the second measurement result is less than a second threshold, maintain the current serving beam.

In another possible implementation, the transceiver module is further configured to:
receive a first feedback message from the network device.

The processing module is further configured to:
if the first feedback message is a first acknowledgment message, switch to a first beam corresponding to the second reference signal; or
if the first feedback message is a first non-acknowledgment message, maintain the current serving beam.

In another possible implementation, the transceiver module is further configured to: if signal quality of the second reference signal in the second measurement result is greater than or equal to a second threshold, receive a first acknowledgment message from the network device; and the processing module is further configured to switch to a first beam corresponding to the second reference signal; or
the transceiver module is further configured to: if signal quality of the second reference signal in the second measurement result is less than a second threshold, receive a first non-acknowledgment message from the network device; and the processing module is further configured to maintain the current serving beam.

In another possible implementation, the transceiver module is further configured to:
receive first indication information from the network device.

The processing module is further configured to:
if the first indication information indicates the communication apparatus to switch to a first beam corresponding to the second reference signal, switch to the first beam; or
if the first indication information indicates the communication apparatus to maintain the current serving beam, maintain the current serving beam.

In another possible implementation, the transceiver module is further configured to: if signal quality of the second reference signal in the second measurement result is greater than or equal to a second threshold, receive first indication information from the network device, where the first indication information indicates the communication apparatus to switch to a first beam corresponding to the second reference signal; and the processing module is further configured to switch to the first beam; or
the transceiver module is further configured to: if signal quality of the second reference signal in the second measurement result is less than a second threshold, receive first indication information from the network device, where the first indication information indicates the communication apparatus to maintain the current serving beam; and the processing module is further configured to maintain the current serving beam.

In another possible implementation, if the communication apparatus maintains the current serving beam, the processing module is further configured to:
continue to perform first-type measurement on the first reference signal.

In another possible implementation, the processing module is further configured to:
perform first-type measurement on a third reference signal, to obtain a third measurement result.

The transceiver module is further configured to:
send the third measurement result to the network device.

The processing module is further configured to:
perform second-type measurement on a fourth reference signal based on the third measurement result, to obtain a fourth measurement result.

The transceiver module is further configured to:
send the fourth measurement result to the network device.

In another possible implementation, the processing module is further configured to:
if a first condition is satisfied, switch to a first beam corresponding to the second reference signal, where the first condition includes: Signal quality of the second reference signal in the second measurement result is greater than or equal to a second threshold, and the signal quality of the second reference signal is greater than signal quality of the fourth reference signal in the fourth measurement result;
if a second condition is satisfied, switch to a second beam corresponding to the fourth reference signal, where the second condition includes: Signal quality of the fourth reference signal in the fourth measurement result is greater than or equal to a second threshold, and the signal quality of the fourth reference signal is greater than signal quality of the second reference signal in the second measurement result; or
if a third condition is satisfied, maintain the current serving beam, where the third condition includes: Both signal quality of the second reference signal in the second measurement result and signal quality of the fourth reference signal in the fourth measurement result are less than a second threshold.

In another possible implementation, the transceiver module is further configured to:
receive a second feedback message from the network device.

The processing module is further configured to:
if the second feedback message is a second acknowledgment message, and signal quality of the second reference signal in the second measurement result is greater than signal quality of the fourth reference signal in the fourth measurement result, switch to a first beam corresponding to the second reference signal;
if the second feedback message is a second acknowledgment message, and signal quality of the fourth reference signal in the fourth measurement result is greater than signal quality of the second reference signal in the second measurement result, switch to a second beam corresponding to the fourth reference signal; or
if the second feedback message is a second non-acknowledgment message, maintain the current serving beam.

In another possible implementation, the transceiver module is further configured to:
if signal quality of the second reference signal in the second measurement result is greater than or equal to a second threshold, and the signal quality of the second reference signal is greater than signal quality of the fourth reference signal in the fourth measurement result, receive a second acknowledgment message from the network device, where the second acknowledgment message indicates the communication apparatus to switch to a first beam corresponding to the second reference signal; and the processing module is further configured to switch to the first beam corresponding to the second reference signal;
the transceiver module is further configured to: if signal quality of the fourth reference signal in the fourth measurement result is greater than or equal to a second threshold, and the signal quality of the fourth reference signal is greater than signal quality of the second reference signal in the second measurement result, receive a second acknowledgment message from the network device, where the second acknowledgment message indicates the communication apparatus to switch to a second beam corresponding to the fourth reference signal; and the processing module is further configured to switch to the second beam corresponding to the fourth reference signal; or
the transceiver module is further configured to: if both signal quality of the second reference signal in the second measurement result and signal quality of the fourth reference signal in the fourth measurement result are less than a second threshold, receive a second non-acknowledgment message from the network device, where the second non-acknowledgment message indicates the communication apparatus to maintain the current serving beam; and the processing module is further configured to maintain the current serving beam.

In another possible implementation, the processing module is further configured to:
If the communication apparatus does not receive a feedback message from the network device for the second measurement result, maintain the current serving beam, and continue to perform first-type measurement on the first reference signal and the third reference signal.

In another possible implementation, the transceiver module is further configured to:
receive second indication information from the network device.

The processing module is further configured to:
if the second indication information indicates the communication apparatus to switch to a first beam corresponding to the second reference signal, switch to the first beam;
if the second indication information indicates the communication apparatus to switch to a second beam corresponding to the fourth reference signal, switch to the second beam; or
if the second indication information indicates the communication apparatus to maintain the current serving beam, maintain the current serving beam.

In another possible implementation, the transceiver module is further configured to: if signal quality of the second reference signal in the second measurement result is greater than or equal to a second threshold, and the signal quality of the second reference signal is greater than signal quality of the fourth reference signal in the fourth measurement result, receive second indication information from the network device, where the second indication information indicates a terminal device to switch to a first beam corresponding to the second reference signal; and the processing module is further configured to switch to the first beam;
the transceiver module is further configured to: if signal quality of the fourth reference signal in the fourth measurement result is greater than or equal to a second threshold, and the signal quality of the fourth reference signal is greater than signal quality of the second reference signal in the second measurement result, receive second indication information from the network device, where the second indication information indicates a terminal device to switch to a second beam corresponding to the fourth reference signal; and the processing module is further configured to switch to the second beam; or
the transceiver module is further configured to: if both signal quality of the second reference signal in the second measurement result and signal quality of the fourth reference signal in the fourth measurement result are less than a second threshold, receive second indication information from the network device, where the second indication information indicates a terminal device to maintain the current serving beam; and the processing module is further configured to maintain the current serving beam.

In another possible implementation, if the communication apparatus maintains the current serving beam, the processing module is further configured to:
continue to perform first-type measurement on the first reference signal and the third reference signal.

In another possible implementation, the transceiver module is further configured to:
receive first configuration information from the network device, where the first configuration information indicates the communication apparatus to perform second-type measurement on the second reference signal based on the first measurement result and report a measurement result, or the first configuration information indicates the communication apparatus to perform second-type measurement on the second reference signal based on the first measurement result.

In another possible implementation, the first-type measurement includes periodic measurement performed by the communication apparatus on a reference signal, and the second-type measurement includes semi-persistent measurement performed by the communication apparatus on a reference signal resource;
the first-type measurement includes periodic measurement performed by the communication apparatus on a reference signal, and the second-type measurement includes aperiodic measurement performed by the communication apparatus on a reference signal; or
the first-type measurement includes semi-persistent measurement performed by the communication apparatus on a reference signal, and the second-type measurement includes aperiodic measurement performed by the communication apparatus on a reference signal.

In another possible implementation, the transceiver module is further configured to:
receive second configuration information from the network device, where the second configuration information indicates the communication apparatus to perform first-type measurement on the first reference signal.

In another possible implementation, the processing module is specifically configured to:
if the signal quality of the second reference signal in the second measurement result is greater than or equal to the second threshold, and the first beam belongs to a first beam set, switch to the first beam, where the first beam set includes a beam used by the communication apparatus to initiate beam switching.

In another possible implementation, the first beam belongs to a first beam set, and the first beam set includes a beam used by a communication apparatus to initiate beam switching.

In another possible implementation, the processing module is further configured to:
update the first beam set according to a first rule.

In another possible implementation, the processing module is specifically configured to:
update the beam in the first beam set to a beam corresponding to one or more TCI-states activated by the network device for the communication apparatus, to obtain an updated first beam set.

In another possible implementation, the transceiver module is further configured to:
receive third indication information from the network device, where the third indication information indicates the one or more TCI-states activated for the communication apparatus; and
send a third acknowledgment message to the network device, where the third acknowledgment message indicates that the communication apparatus successfully receives the third indication information.

In another possible implementation, the first beam set includes a beam corresponding to one or more TCI-states activated by the network device for the communication apparatus.

In another possible implementation, after first preset duration from a moment at which the communication apparatus sends the third determining message, a third beam deleted by the communication apparatus from the first beam set is not used by the communication apparatus to initiate the beam switching; and
within the first preset duration from the moment at which the communication apparatus sends the third determining message, the third beam may still be used by the communication apparatus to initiate the beam switching.

In another possible implementation, the transceiver module is further configured to:
receive fourth indication information from the network device, where the fourth indication information indicates the communication apparatus to enable a function of updating the first beam set by using the TCI-state activated by the network device for the communication apparatus.

In another possible implementation, the processing module is specifically configured to:
determine X TCI-states based on a fifth measurement result, where the fifth measurement result includes a measurement result of one or more reference signal resources that is obtained through measurement and reported by the communication apparatus, each of the one or more reference signal resources corresponds to one TCI-state, the X TCI-states are TCI-states corresponding to the first X reference signal resources with highest signal quality in the fifth measurement result, and X is an integer greater than or equal to 1; and update the beam in the first beam set to beams corresponding to the X TCI-states, to obtain an updated first beam set.

In another possible implementation, the updated first beam set includes a beam corresponding to a fifth reference signal, and the processing module is further configured to:
if measurement results reported by the communication apparatus Y consecutive times do not include a measurement result of the beam corresponding to the fifth reference signal, determine that the beam corresponding to the fifth reference signal is not used by the communication apparatus to initiate the beam switching, where Y is an integer greater than or equal to 1.

A seventh aspect of this application provides a communication apparatus, including:
a transceiver module, configured to: receive a first measurement result from a terminal device, where the first measurement result is a measurement result obtained by performing first-type measurement on a first reference signal by the terminal device; and receive a second measurement result from the terminal device, where the second measurement result is a measurement result obtained by performing second-type measurement on a second reference signal based on the first measurement result by the terminal device.

In a possible implementation, the transceiver module is further configured to:
send first configuration information to the terminal device, where the first configuration information indicates the terminal device to perform second-type measurement on the second reference signal based on the first measurement result and report the measurement result, or the first configuration information indicates the terminal device to perform second-type measurement on the second reference signal based on the first measurement result.

In another possible implementation, the first measurement result includes measurement results of the first reference signal that are reported by the terminal device N consecutive times, and N is an integer greater than or equal to 1; and
the first configuration information indicates: if all signal quality of the first reference signal in the measurement results of the first reference signal that are reported by the terminal device N consecutive times is greater than or equal to a first threshold, the terminal device triggers the second-type measurement on the second reference signal and reporting of the measurement result, where N is an integer greater than or equal to 1; or
the first configuration information indicates: if all signal quality of the first reference signal in the measurement results of the first reference signal that are reported by the terminal device N consecutive times is greater than or equal to signal quality of a reference signal corresponding to a current serving beam of the terminal device, the terminal device triggers the second-type measurement on the second reference signal and reporting of the measurement result.

In another possible implementation, the communication apparatus further includes a processing module, where
the processing module is configured to: if signal quality of the second reference signal in the second measurement result is greater than or equal to a second threshold, determine that the terminal device is to switch to a first beam corresponding to the second reference signal; or
the processing module is configured to: if signal quality of the second reference signal in the second measurement result is less than a second threshold, determine that the terminal device is to maintain the current serving beam.

In another possible implementation, the transceiver module is further configured to:
send a first feedback message to the terminal device, where
the first feedback message is a first acknowledgment message, and the first acknowledgment message indicates the terminal device to switch to a first beam; or the first feedback message is a first non-acknowledgment message, and the first non-acknowledgment message indicates the terminal device to maintain the current serving beam.

In another possible implementation, the transceiver module is further configured to:
if signal quality of the second reference signal in the second measurement result is greater than or equal to a second threshold, send a first acknowledgment message to the terminal device, where the first acknowledgment message indicates the terminal device to switch to a first beam corresponding to the second reference signal; or
if signal quality of the second reference signal in the second measurement result is less than a second threshold, send a first non-acknowledgment message to the terminal device, where the first non-acknowledgment message indicates the terminal device to maintain the current serving beam.

In another possible implementation, the transceiver module is further configured to:
send first indication information to the terminal device, where
the first indication information indicates the terminal device to switch to a first beam, or the first indication information indicates the terminal device to maintain the current serving beam or not to perform beam switching.

In another possible implementation, the transceiver module is further configured to:
if the signal quality of the second reference signal in the second measurement result is greater than or equal to a second threshold, send first indication information to the terminal device, where the first indication information indicates the terminal device to switch to a first beam corresponding to the second reference signal; or
if signal quality of the second reference signal in the second measurement result is less than a second threshold, send first indication information to the terminal device, where the first indication information indicates the terminal device to maintain the current serving beam or not to perform beam switching.

In another possible implementation, the transceiver module is further configured to:
receive a third measurement result from the terminal device, where the third measurement result is a measurement result obtained by performing first-type measurement on a third reference signal by the terminal device; and
receive a fourth measurement result from the terminal device, where the fourth measurement result is a measurement result obtained by performing second-type measurement on a fourth reference signal based on the third measurement result by the terminal device.

In another possible implementation, the processing module is further configured to:
if a first condition is satisfied, determine that the terminal device is to switch to a first beam corresponding to the second reference signal, where the first condition includes: Signal quality of the second reference signal in the second measurement result is greater than or equal to a second threshold, and the signal quality of the second reference signal is greater than signal quality of the fourth reference signal in the fourth measurement result;
if a second condition is satisfied, determine that the terminal device is to switch to a second beam, where the second condition includes: Signal quality of the fourth reference signal in the fourth measurement result is greater than or equal to a second threshold, and the signal quality of the fourth reference signal is greater than signal quality of the second reference signal; or
if a third condition is satisfied, determine that the terminal device is to maintain the current serving beam, where the third condition includes: Both signal quality of the second reference signal in the second measurement result and signal quality of the fourth reference signal in the fourth measurement result are less than a second threshold.

In another possible implementation, the transceiver module is further configured to:
send a second feedback message to the terminal device, where
the second feedback message is a second acknowledgment message, the second acknowledgment message indicates the terminal device to switch to a beam with highest signal quality, and the beam with the highest signal quality is a beam with higher signal quality in a first beam corresponding to the second reference signal and a second beam corresponding to the fourth reference signal; or the second feedback message is a second non-acknowledgment message, and the second non-acknowledgment message indicates the terminal device to maintain the current serving beam.

In another possible implementation, the transceiver module is further configured to:
if signal quality of the second reference signal in the second measurement result is greater than or equal to a second threshold, and the signal quality of the second reference signal is greater than signal quality of the fourth reference signal in the fourth measurement result, send a second acknowledgment message to the terminal device, where the second acknowledgment message indicates the terminal device to switch to a first beam corresponding to the second reference signal;
if signal quality of the fourth reference signal in the fourth measurement result is greater than or equal to a second threshold, and the signal quality of the fourth reference signal is greater than signal quality of the second reference signal in the second measurement result, send a second acknowledgment message to the terminal device, where the second acknowledgment message indicates the terminal device to switch to a second beam corresponding to the fourth reference signal; or
if both signal quality of the second reference signal in the second measurement result and signal quality of the fourth reference signal in the fourth measurement result are less than a second threshold, send a second non-acknowledgment message to the terminal device, where the second non-acknowledgment message indicates the terminal device to maintain the current serving beam.

In another possible implementation, the transceiver module is further configured to:
send second indication information to the terminal device, where
the second indication information indicates the terminal device to switch to a first beam corresponding to the second reference signal, the second indication information indicates the terminal device to switch to a second beam corresponding to the fourth reference signal, or the second indication information indicates the terminal device to maintain the current serving beam.

In another possible implementation, the transceiver module is further configured to:
if signal quality of the second reference signal in the second measurement result is greater than or equal to a second threshold, and the signal quality of the second reference signal is greater than signal quality of the fourth reference signal in the fourth measurement result, send second indication information to the terminal device, where the second indication information indicates the terminal device to switch to a first beam corresponding to the second reference signal;
if signal quality of the fourth reference signal in the fourth measurement result is greater than or equal to a second threshold, and the signal quality of the fourth reference signal is greater than signal quality of the second reference signal in the second measurement result, send second indication information to the terminal device, where the second indication information indicates the terminal device to switch to a second beam corresponding to the fourth reference signal; or
if both signal quality of the second reference signal in the second measurement result and signal quality of the fourth reference signal in the fourth measurement result are less than a second threshold, send second indication information to the terminal device, where the second indication information indicates the terminal device to maintain the current serving beam.

In another possible implementation, the first-type measurement includes periodic measurement performed by the terminal device on a reference signal, and the second-type measurement includes semi-persistent measurement performed by the terminal device on a reference signal resource;
the first-type measurement includes periodic measurement performed by the terminal device on a reference signal, and the second-type measurement includes aperiodic measurement performed by the terminal device on a reference signal; or
the first-type measurement includes semi-persistent measurement performed by the terminal device on a reference signal, and the second-type measurement includes aperiodic measurement performed by the terminal device on a reference signal.

In another possible implementation, the transceiver module is further configured to:
send second configuration information to the terminal device, where the second configuration information indicates the terminal device to perform first-type measurement on the first reference signal.

In another possible implementation, the processing module is specifically configured to:
if the signal quality of the second reference signal in the second measurement result is greater than or equal to the second threshold, and the first beam belongs to a first beam set, determine that the terminal device is to switches to the first beam, where the first beam set includes a beam used by the terminal device to initiate beam switching.

In another possible implementation, the first beam belongs to a first beam set, and the first beam set includes a beam used by the terminal device to initiate beam switching.

In another possible implementation, the processing module is further configured to:
update the first beam set according to a first rule.

In another possible implementation, the processing module is specifically configured to:
update the beam in the first beam set to a beam corresponding to one or more TCI-states activated by the communication apparatus for the terminal device, to obtain an updated first beam set.

In another possible implementation, the transceiver module is further configured to:
send third indication information to a terminal device, where the third indication information indicates the one or more TCI-states activated for the terminal device; and
receive a third acknowledgment message from the terminal device, where the third acknowledgment message indicates that the terminal device successfully receives the third indication information.

In another possible implementation, the first beam set includes a beam corresponding to one or more TCI-states activated by the communication apparatus for the terminal device.

In another possible implementation, after first preset duration from a moment at which the terminal device sends the third determining message, a third beam deleted by the communication apparatus from the first beam set is not used by the terminal device to initiate the beam switching; and
within the first preset duration from the moment at which the terminal device sends the third determining message, the third beam may still be used by the terminal device to initiate the beam switching.

In another possible implementation, the transceiver module is further configured to:
send fourth indication information to the terminal device, where the fourth indication information indicates the terminal device to enable a function of updating the first beam set by using the TCI-state activated by the communication apparatus for the terminal device.

In another possible implementation, the processing module is specifically configured to:
determine X TCI-states based on a fifth measurement result, where the fifth measurement result includes a measurement result of one or more reference signals that is obtained through measurement and reported by the terminal device, each of the one or more reference signals corresponds to one TCI-state, the X TCI-states are TCI-states corresponding to the first X reference signal resources with highest signal quality in the fifth measurement result, and X is an integer greater than or equal to 1; and the communication apparatus updates the beam in the first beam set to beams corresponding to the X TCI-states, to obtain an updated first beam set.

In another possible implementation, the updated first beam set includes a beam corresponding to a fifth reference signal, and the processing module is further configured to:
if none of measurement results reported by the terminal device Y consecutive times include a measurement result of the beam corresponding to the fifth reference signal, determine that the beam corresponding to the fifth reference signal is not used by the terminal device to initiate the beam switching, where Y is an integer greater than or equal to 1.

An eighth aspect of this application provides a communication apparatus, including:
a processing module, configured to: determine a first beam set, where the first beam set includes a beam used by a terminal device to initiate beam switching; and update the first beam set according to a first rule.

In a possible implementation, the processing module is specifically configured to:
update the beam in the first beam set to a beam corresponding to one or more TCI-states activated by a network device for the terminal device, to obtain an updated first beam set.

In another possible implementation, the processing module is specifically configured to:
add, to the first beam set, a beam corresponding to one or more TCI-states activated by a network device for the terminal device, to obtain an updated first beam set.

In another possible implementation, the communication apparatus is the terminal device, and the communication apparatus further includes a transceiver module, where
the transceiver module is configured to: receive third indication information from the network device, where the third indication information indicates the one or more TCI-states activated for the terminal device; and send a third acknowledgment message to the network device, where the third acknowledgment message indicates that the terminal device successfully receives the third indication information.

In another possible implementation, after first preset duration from a moment at which the terminal device sends the third determining message, a third beam deleted by the terminal device from the first beam set is not used by the terminal device to initiate the beam switching; and
within the first preset duration from the moment at which the terminal device sends the third determining message, the third beam may still be used by the terminal device to initiate the beam switching.

In another possible implementation, the communication apparatus is the terminal device, and the transceiver module is further configured to:
receive fourth indication information from the network device, where the fourth indication information indicates the terminal device to enable a function of updating the first beam set by using the TCI-state activated by the network device for the terminal device.

In another possible implementation, the processing module is specifically configured to:
determine X TCI-states based on a fifth measurement result, where the fifth measurement result includes a measurement result of one or more reference signals that is obtained through measurement and reported by the terminal device, each of the one or more reference signals corresponds to one TCI-state, the X TCI-states are TCI-states corresponding to the first X reference signals with highest signal quality in the fifth measurement result, and X is an integer greater than or equal to 1; and update the beam in the first beam set to beams corresponding to the X TCI-states, to obtain an updated first beam set.

In another possible implementation, the updated first beam set includes a beam corresponding to a fifth reference signal, and the processing module is further configured to:
if none of measurement results reported by the terminal device Y consecutive times include a measurement result of the beam corresponding to the fifth reference signal, determine that the beam corresponding to the fifth reference signal is not used by the terminal device to initiate the beam switching, where Y is an integer greater than or equal to 1.

In another possible implementation, the communication apparatus is the terminal device, and the processing module is further configured to:
initiate the beam switching based on the first beam set.

A ninth aspect of this application provides a communication apparatus, including:
a processing module, configured to: perform first-type measurement on a first reference signal, to obtain a first measurement result; and perform second-type measurement on a second reference signal based on the first measurement result, to obtain a second measurement result; and
a transceiver module, further configured to send the second measurement result to a network device.

In a possible implementation, the first measurement result includes measurement results of the first reference signal that are obtained by the communication apparatus through N consecutive times of measurement, and N is an integer greater than or equal to 1; and the processing module is specifically configured to:
if all signal quality of the first reference signal in the measurement results of the first reference signal that are obtained by the communication apparatus through the N consecutive times of measurement is greater than or equal to a first threshold, perform second-type measurement on the second reference signal, to obtain the second measurement result; or
if all signal quality of the first reference signal in the measurement results of the first reference signal that are obtained by the communication apparatus through the N consecutive times of measurement is greater than or equal to signal quality of a reference signal corresponding to a current serving beam of the communication apparatus, perform second-type measurement on the second reference signal, to obtain the second measurement result.

A tenth aspect of this application provides a communication apparatus, including:
a transceiver module, configured to receive a second measurement result from a terminal device, where the second measurement result is a measurement result obtained by performing second-type measurement on a second reference signal based on a first measurement result by the terminal device, and the first measurement result is a measurement result obtained by performing first-type measurement on a first reference signal by the terminal device.

In another possible implementation, the first measurement result includes measurement results of the first reference signal that are obtained by the terminal device through N consecutive times of measurement, and N is an integer greater than or equal to 1; and
first configuration information indicates: if all signal quality of the first reference signal in the measurement results of the first reference signal that are obtained by the terminal device through the N consecutive times of measurement is greater than or equal to a first threshold, the terminal device triggers the second-type measurement on the second reference signal and reporting of the measurement result, where N is an integer greater than or equal to 1; or
first configuration information indicates: if all signal quality of the first reference signal in the measurement results of the first reference signal that are obtained by the terminal device through the N consecutive times of measurement is greater than or equal to signal quality of a reference signal corresponding to a current serving beam of the terminal device, the terminal device triggers the second-type measurement on the second reference signal and reporting of the measurement result.

An eleventh aspect of this application provides a communication apparatus. The communication apparatus includes a processor and a memory. The memory stores a computer program or computer instructions. The processor is configured to invoke and run the computer program or the computer instructions stored in the memory, so that the processor implements any one of the implementations of any one of the first aspect to the fifth aspect.

Optionally, the communication apparatus further includes a transceiver. The processor is configured to control the transceiver to receive and send signals.

A twelfth aspect of this application provides a communication apparatus. The communication apparatus includes a processor. The processor is configured to invoke a computer program or computer instructions in a memory, so that the processor implements any one of the implementations of any one of the first aspect to the fifth aspect.

Optionally, the communication apparatus further includes a transceiver. The processor is configured to control the transceiver to receive and send signals.

A thirteenth aspect of this application provides a communication apparatus. The communication apparatus includes a processor. The processor is configured to perform any one of the implementations of any one of the first aspect to the fifth aspect.

A fourteenth aspect of this application provides a computer program product including instructions. When the computer program product runs on a computer, the computer is enabled to perform any one of implementations of any one of the first aspect to the fifth aspect.

A fifteenth aspect of this application provides a computer-readable storage medium, including computer instructions. When the instructions are run on a computer, the computer is enabled to perform any one of the implementations of any one of the first aspect to the fifth aspect.

A sixteenth aspect of this application provides a chip apparatus, including a processor, configured to invoke a computer program or computer instructions in a memory, so that the processor performs any one of the implementations of any one of the first aspect to the fifth aspect.

Optionally, the processor is coupled to the memory through an interface.

A seventeenth aspect of this application provides a communication system, including the terminal device according to the first aspect and the network device according to the second aspect, or includes the terminal device according to the fourth aspect and the network device according to the fifth aspect.

It can be learned from the foregoing technical solutions that embodiments of this application have the following advantages.

It can be learned from the foregoing technical solutions that the terminal device performs first-type measurement on the first reference signal, to obtain the first measurement result, and sends the first measurement result to the network device. The terminal device performs second-type measurement on the second reference signal based on the first measurement result, to obtain the second measurement result; and sends the second measurement result to the network device. It can be learned that, in the technical solutions in this application, the terminal device triggers, based on the first measurement result obtained through the first-type measurement, the terminal device to perform second-type measurement on the second reference signal and report the second measurement result. The terminal device reports the second measurement result to the network device, and the network device does not need to trigger, by using DCI, the terminal device to report the measurement result, so that the signaling overheads and the latency overheads are reduced. This helps improve the reliability of the second measurement result reported by the terminal device, and avoids the case in which the measurement result reported by the terminal device cannot truly reflect the overall status of the link due to the impact caused by the short-time link quality fluctuation. This helps the network device select the appropriate beam for the terminal device based on the second measurement result, thereby improving the communication quality.

### BRIEF DESCRIPTION OF DRAWINGS

FIG. 1 is a diagram of a communication system according to an embodiment of this application;
FIG. 2 is a diagram of a scenario to which a communication method is applicable according to an embodiment of this application;
FIG. 3 is a diagram of a scenario to which a communication method is applicable according to an embodiment of this application;
FIG. 4 is a diagram of a structure of a media access control control element (media access control control element, MAC CE) that is for activating a TCI and to which a beam usage method is applicable according to an embodiment of this application;
FIG. 5 is a diagram of an embodiment of a communication method according to an embodiment of this application;
FIG. 6 is a diagram of a scenario of a communication method according to an embodiment of this application;
FIG. 7 is a diagram of another embodiment of a communication method according to an embodiment of this application;
FIG. 8 is a diagram of another embodiment of a communication method according to an embodiment of this application;
FIG. 9 is a diagram of another embodiment of a communication method according to an embodiment of this application;
FIG. 10 is a diagram of another embodiment of a communication method according to an embodiment of this application;
FIG. 11 is a diagram of an embodiment of a beam set update method according to an embodiment of this application;
FIG. 12 is a diagram of a scenario of a beam set update method according to an embodiment of this application;
FIG. 13 is a diagram of another embodiment of a beam set update method according to an embodiment of this application;
FIG. 14 is a diagram of a structure of a communication apparatus according to an embodiment of this application;
FIG. 15 is a diagram of another structure of a communication apparatus according to an embodiment of this application;
FIG. 16 is a diagram of another structure of a communication apparatus according to an embodiment of this application;
FIG. 17 is a diagram of another structure of a communication apparatus according to an embodiment of this application;
FIG. 18 is a diagram of a structure of a terminal device according to an embodiment of this application; and
FIG. 19 is a diagram of a structure of a network device according to an embodiment of this application.

### DESCRIPTION OF EMBODIMENTS

Embodiments of this application provide a communication method and a communication apparatus, to reduce signaling overheads.

The following describes technical solutions in this application with reference to accompanying drawings.

The technical solutions in this application may be applied to various communication systems such as a 5G system, a new radio (new radio, NR) system, a long term evolution (long term evolution, LTE) system, an LTE frequency division duplex (frequency division duplex, FDD) system, an LTE time division duplex (time division duplex, TDD) system, a universal mobile communication system (universal mobile telecommunication system, UMTS), a mobile communication system (for example, a 6G mobile communication system) after a 5G network, and a vehicle to everything (vehicle to everything, V2X) communication system.

The communication system to which this application is applicable includes a terminal device and a network device. Communication transmission may be performed between the terminal device and the network device.

The following describes the terminal device and the network device in this application.

The terminal device may be a wireless terminal device that can receive scheduling and indication information of the network device. The terminal device may be a device that provides voice and/or data connectivity for a user, a handheld device with a wireless connection function, or another processing device connected to a wireless modem.

The terminal device is also referred to as user equipment (user equipment, UE), a mobile station (mobile station, MS), a mobile terminal (mobile terminal, MT), or the like. The terminal device is a device that includes a wireless communication function (providing voice/data connectivity for the user), for example, a handheld device or a vehicle-mounted device having a wireless connection function. Currently, some examples of the terminal device are a mobile phone (mobile phone), a tablet computer, a notebook computer, a palmtop computer, a train, an airplane, a mobile internet device (mobile internet device, MID), a wearable device, a virtual reality (virtual reality, VR) device, an augmented reality (augmented reality, AR) device, a wireless terminal in industrial control (industrial control), a wireless terminal in vehicle to everything, a wireless terminal in self driving (self driving), a wireless terminal in remote medical surgery (remote medical surgery), a wireless terminal in a smart grid (smart grid), a wireless terminal in transportation safety (transportation safety), and a wireless terminal in a smart city (smart city). For example, the wireless terminal in the vehicle to everything may be a vehicle-mounted device, an entire vehicle device, a vehicle-mounted module, or a vehicle, and the wireless terminal in the industrial control may be a robot.

The network device may be a device in a wireless network. For example, the network device may be a device that is deployed in a radio access network and that provides the wireless communication function for the terminal device. For example, the network device may be a radio access network (radio access network, RAN) node that connects the terminal device to the wireless network, and may also be referred to as an access network device.

The network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, home evolved NodeB or home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission and reception point, TRP), or the like, or may be a network device in a 5G mobile communication system, for example, a next generation NodeB (next generation NodeB, gNB), a transmission reception point (transmission reception point, TRP), or a TP in an NR system; or one antenna panel or one group of antenna panels (including a plurality of antenna panels) of a base station in the 5G mobile communication system. Alternatively, the network device may be a network node that forms a gNB or a transmission point, for example, a BBU or a distributed unit (distributed unit, DU).

In some deployment, the gNB may include a central unit (centralized unit, CU) and the DU. The gNB may further include an active antenna unit (active antenna unit, AAU). The CU implements some functions of the gNB, and the DU implements some functions of the gNB. For example, the CU is responsible for processing a non-real-time protocol and service, and implementing functions of an RRC layer and a packet data convergence protocol (packet data convergence protocol, PDCP) layer. The DU is responsible for processing a physical layer protocol and a real-time service, and implementing functions of a radio link control (radio link control, RLC) layer, a MAC layer, and a physical (physical, PHY) layer. The AAU implements some physical layer processing functions, radio frequency processing, and a function related to an active antenna. Information at the RRC layer is finally changed to information at the PHY layer, or is changed from information at the PHY layer. Therefore, in this architecture, higher layer signaling (for example, RRC layer signaling) may also be considered to be sent by the DU, or sent by the DU and the AAU. It may be understood that the network device may be a device including one or more of a CU node, a DU node, and an AAU node. In addition, the CU may be classified as a network device in the RAN or a network device in a core network (core network, CN). This is not limited in this application.

The following describes a possible communication system to which the method provided in this application is applicable.

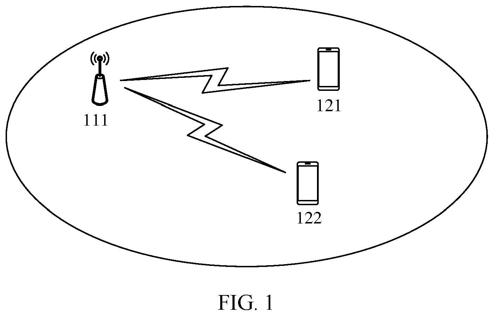

FIG. 1 is a diagram of a communication system according to an embodiment of this application. Refer to FIG. 1. The communication system includes at least one network device and at least one terminal device, for example, a network device 111, a terminal device 121, and a terminal device 122 shown in FIG. 1. The network device 111 may perform transmission with the terminal device 121 and the terminal device 122 by using beams.

In embodiments of this application, a terminal device may initiate beam switching. Specific application scenarios include:
1. The terminal device measures a reference signal of a non-serving beam in a current serving cell, and reports a corresponding measurement result. The terminal device may switch, based on the measurement result or an indication of a network device, from a current serving beam to the beam reported in the measurement result. That is, the terminal device performs beam switching in a same cell.

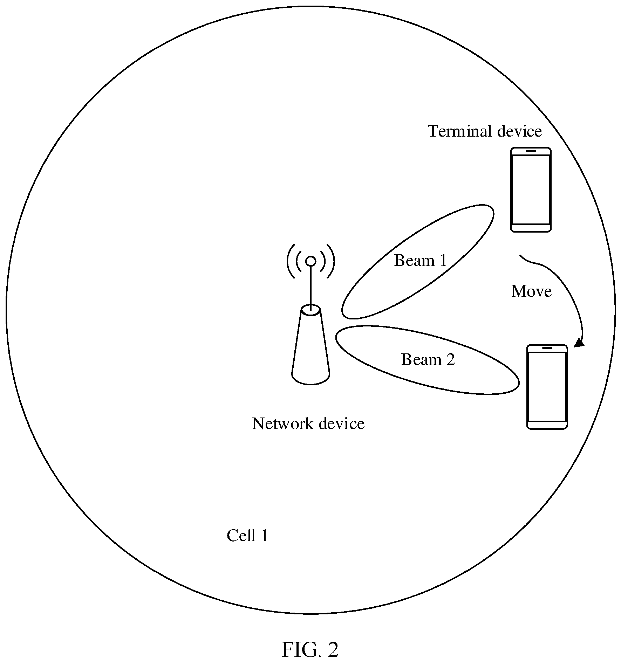

For example, as shown in FIG. 2, a terminal device is in a cell 1 of a network device, and the terminal device accesses a beam 1. The terminal device is in a moving state. The terminal device measures beam quality of a beam 2, and reports a measurement result to the network device. The terminal device may switch from the beam 1 to the beam 2 based on the measurement result or an indication of the network device.

2. The terminal device measures a reference signal in a non-serving cell, and reports a measurement result to a current serving cell. The terminal device may switch, based on the measurement result or an indication of a network device, from a current serving beam to a beam reported in the measurement result. That is, the terminal device switches from a beam in the current serving cell to a beam in another cell.

It should be noted that, after the terminal device performs beam switching, the current serving cell of the terminal device may remain unchanged or may change. For example, the terminal device switches from the current serving cell to a cell corresponding to the beam reported in the measurement result. A scenario in which the current serving cell of the terminal device remains unchanged may be simply understood as that the terminal device receives a signal from an antenna in another cell, but the current serving cell of the terminal device remains unchanged.

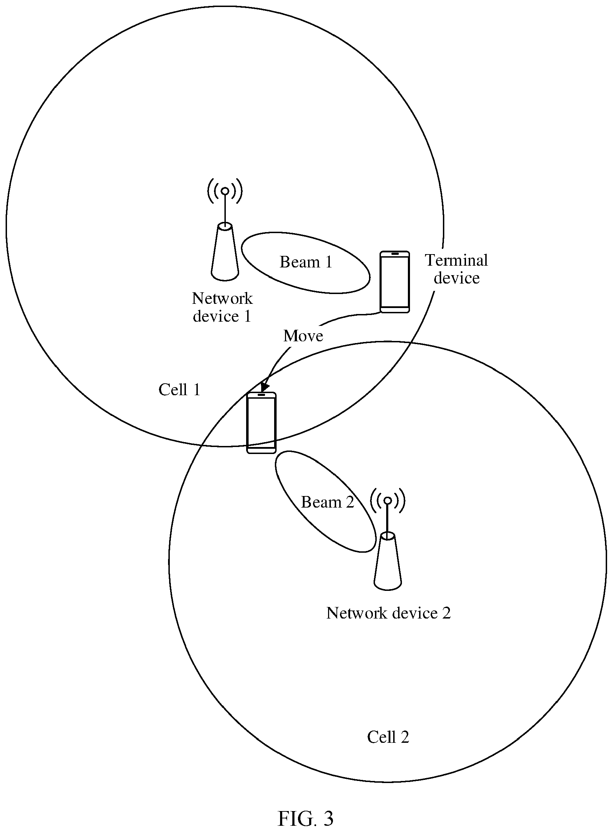

For example, as shown in FIG. 3, a terminal device is in a cell 1 of a network device 1, and the terminal device accesses a beam 1. The terminal device moves to a cell 2 in a network device 2. The terminal device measures beam quality of a beam 2, and reports a measurement result to the network device 1. The terminal device may switch from the beam 1 to the beam 2 based on the measurement result or an indication of the network device 1. In this case, a current serving cell of the terminal device may be the cell 1. That is, the current serving cell of the terminal device remains unchanged. Alternatively, the terminal device may switch from a current serving cell (the cell 1) to the cell 2.

It should be noted that the scenario shown in FIG. 3 is merely an example. In actual application, the current serving cell and the non-serving cell of the terminal device may alternatively be two cells of a same network device. This is not specifically limited in this application.

To facilitate understanding of the technical solutions in this application, the following describes some technical terms in this application.
1. Beam (beam): The beam is a communication resource. The beam may be a wide beam, a narrow beam, or a beam of another type, and a technology for forming the beam may be a beamforming technology or another technical means. The beamforming technology may be specifically a digital beamforming technology, an analog beamforming technology, and a hybrid digital/analog beamforming technology. Different beams may be considered as different resources.

In an NR protocol, the beam may be referred to as a spatial domain filter (spatial domain filter), a spatial filter (spatial filter), a spatial domain parameter (spatial domain parameter), a spatial parameter (spatial parameter), a spatial domain setting (spatial domain setting), a spatial setting (spatial setting), quasi-colocation (quasi-colocation, QCL) information, a QCL assumption, a QCL indication, or the like. The beam may be indicated by a TCI-state parameter or a spatial relation (spatial relation) parameter. Therefore, in this application, the beam may be replaced with the spatial domain filter, the spatial filter, the spatial domain parameter, the spatial parameter, the spatial domain setting, the spatial setting, the QCL information, the QCL assumption, the QCL indication, a TCI-state (including an uplink TCI-state and a downlink TCI-state), a spatial relation, or the like. The foregoing terms are also equivalent to each other. Alternatively, the beam may be replaced with another term that represents the beam. This is not limited in this application.

A beam for sending a signal may be referred to as a transmit beam (transmission beam, Tx beam), a spatial domain transmit filter (spatial domain transmission filter), a spatial transmit filter (spatial transmission filter), a spatial domain transmit parameter (spatial domain transmission parameter), a spatial transmit parameter (spatial transmission parameter), a spatial domain transmit setting (spatial domain transmission setting), or a spatial transmit setting (spatial transmission setting). A downlink transmit beam may be indicated by the TCI-state.

A beam for receiving a signal may be referred to as a receive beam (reception beam, Rx beam), a spatial domain receive filter (spatial domain reception filter), a spatial receive filter (spatial reception filter), a spatial domain receive parameter (spatial domain reception parameter), a spatial receive parameter (spatial reception parameter), a spatial domain receive setting (spatial domain reception setting), or a spatial receive setting (spatial reception setting). An uplink transmit beam may be indicated by any one of the spatial relation, the uplink TCI-state, and a sounding reference signal (sounding reference signal, SRS) resource (representing a transmit beam using an SRS). Therefore, an uplink beam may alternatively be replaced with the SRS resource.

The transmit beam may refer to distribution of signal strength formed in different directions in space after a signal is transmitted through an antenna, and the receive beam may refer to distribution of signal strength, in different directions in space, of a radio signal received from an antenna.

In addition, the beam may be the wide beam, the narrow beam, or the beam of the another type. A technology for forming the beam may be a beamforming technology or another technology. The beamforming technology may be specifically the digital beamforming technology, the analog beamforming technology, the hybrid digital beamforming technology, the hybrid analog beamforming technology, or the like.

The beam usually corresponds to a resource. For example, during beam measurement, a network device measures different beams by using different resources, a terminal device feeds back resource quality obtained through measurement, and the network device learns of quality of the corresponding beams. During data transmission, beam information is also indicated by a resource corresponding to the beam information. For example, the network device indicates information about a physical downlink shared channel (physical downlink shared channel, PDSCH) beam of the terminal device by a TCI field in DCI.

In a possible implementation, a plurality of beams that have same or similar communication features are considered as one beam. The beam may include one or more antenna ports, and is for transmission of a data channel, a control channel, a sounding signal, and the like. The one or more antenna ports forming the beam may alternatively be considered as one antenna port set.

2. Quasi-colocation (quasi-co-location, QCL): A colocation relationship is for representing that a plurality of resources have one or more same or similar communication features. A same or similar communication configuration may be used for the plurality of resources that have the colocation relationship. For example, if two antenna ports have the colocation relationship, a large-scale channel property of transmitting one symbol by one port may be inferred from a large-scale channel property of transmitting one symbol by the other port. The large-scale property may include latency spread, average latency, Doppler spread, a Doppler frequency shift, an average gain, a receive parameter, a receive beam number of a terminal device, transmit/receive channel correlation, a receive angle of arrival, spatial correlation of a receiver antenna, a dominant angle of arrival (Angel-of-Arrival, AoA), an average angle of arrival, AoA spread, and the like. For example, that a colocation indication indicates whether at least two groups of antenna ports have the colocation relationship includes: The colocation indication indicates whether channel state information reference signals sent by the at least two groups of antenna ports are from a same transmission point, or the colocation indication indicates whether channel state information reference signals sent by the at least two groups of antenna ports are from a same beam group.

### 3. TCI-state

The TCI-state indicates a downlink beam. A network device may generate different beams that point to different transmission directions. In downlink data transmission, when sending data to a terminal device by using a specified beam, the network device needs to notify the terminal device of information about the transmit beam used by the network device. In this way, the terminal device can receive, by using a receive beam corresponding to the transmit beam, the data sent by the network device. In the 3rd generation partnership project release 15 (3rd generation partnership project releasel5, 3GPP R15) protocol or the 3GPP R16 protocol, the network device indicates, to the terminal device by using a TCI field in DCI, the related information of the transmit beam used by the network device. Specifically, a size of the TCI field is three bits, and may specifically represent eight different field values (code points). Each value of the TCI field corresponds to one TCI-state index, and the TCI-state index may uniquely identify one TCI-state. The TCI-state includes several parameters, and the related information of the transmit beam may be determined by using these parameters. The TCI-state is configured by the network device for each terminal device, and a structure of the TCI-state is shown as follows:

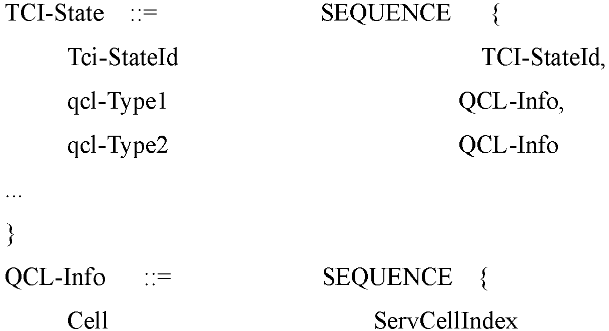

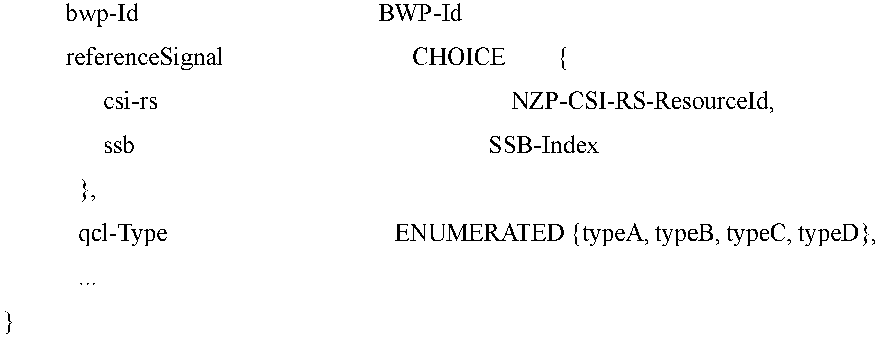

Each TCI-state includes one index of the TCI-state, namely, tci-StateId, and two pieces of QCL-Info. Each piece of QCL-Info includes a cell (cell) field and a bwp-Id that respectively represent a cell and a bandwidth part (bandwidth part, BWP), where the TCI-state is applied to the BWP of the cell. That is, different QCL-Info may be configured for different BWPs of different cells or a same cell. The QCL-Info further includes a reference signal (reference signal) representing forming a quasi-colocation relationship with which reference signal resource. In the 3GPP R15 protocol or the 3GPP R16 protocol, a beam is usually replaced with another term. For example, in both data transmission and channel measurement, the beam corresponds to a reference signal resource, and one beam corresponds to one reference signal resource. Therefore, forming the QCL relationship with which reference signal resource herein is essentially forming the QCL relationship with which beam. The QCL relationship means that two reference signal resources (or two antenna ports, where antenna ports also one-to-one correspond to reference signal resources) have some same spatial parameters. Specifically, which spatial parameters are the same depends on a type of the QCL-Info, that is, another field qcl-Type of the QCL-Info. There may be four values of the qcl-Type: {typeA, typeB, typeC, typeD}. TypeD is used as an example. TypeD represents that the two reference signal resources have same spatial receive parameter information. That is, two beams have a same receive beam. A maximum of one of the two pieces of QCL-Info included in the TCI-state can be TypeD.

The following uses an example to describe in detail how the network device indicates receive beam information of a data transmission beam to the terminal device by using the TCI-state based on the 3GPP R15 protocol or the 3GPP R16 protocol. This includes TCI-state configuration, activation, and indication.

TCI-state configuration: The network device configures a plurality of TCI-states for the terminal device by using RRC signaling. Each of these TCI-states includes a piece of QCL-Info of typeD. Alternatively, the network device may configure a TCI-state that does not include QCL-info of typeD. However, the TCI-states do not indicate the data transmission beam. Therefore, details are not further described herein.

TCI-state activation: After configuring the plurality of TCI-states, the network device further needs to activate a maximum of eight or eight groups of TCI-states by using a MAC-CE, where the eight groups correspond to a scenario of multi-transmission and reception points (multi-transmission and reception points, mTRPs). The eight TCI-states one-to-one correspond to the eight values of the TCI field in the DCI. That is, the eight TCI-states corresponding to the eight values of the TCI field in the DCI are determined by using a MAC CE.

4. Current serving beam of a terminal device: a beam currently used by the terminal device. The terminal device receives a signal (for example, a physical downlink control channel (physical downlink control channel, PDCCH) or a physical downlink shared channel (physical downlink shared channel, PDSCH), based on the serving beam, and/or the terminal device sends an uplink signal, for example, a physical uplink shared channel (physical uplink shared channel, PUSCH), a physical uplink control channel (physical uplink control channel, PUCCH), or an SRS, based on the beam. The terminal device may further receive a channel state information reference (channel state information reference signal, CSI-RS) based on configuration information of a network device and the serving beam.

5. Switching to a first beam by a terminal device: The terminal device selects the first beam. The terminal device uses the first beam as a serving beam from a moment (for example, after preset duration) at which a condition for taking effect is satisfied. That is, the first beam takes effect. The terminal device may perform communication transmission with a network device by using the first beam. That the terminal device switches to a second beam is also understood in a similar way.

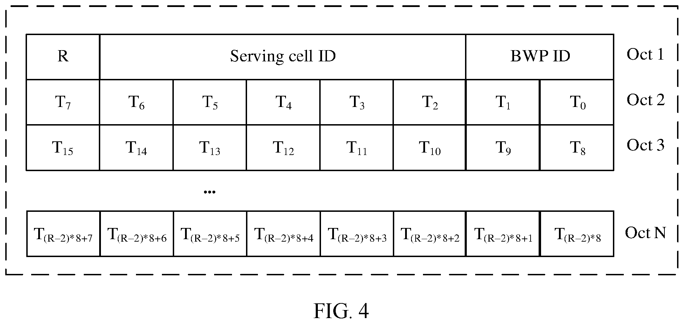

FIG. 4 is a diagram of a structure of a MAC CE for activating a TCI-state and applicable to an embodiment of this application. As shown in FIG. 4, fields TO to T(R-2)*8+07 respectively correspond to TCI-states whose indexes are respectively 0 to (R-2)*8+7 and that are configured in the first step. A size of each field is one bit, and a value may be 0 or 1. The value 1 represents that the TCI-state is activated, and the value 0 indicates that the TCI-state is not activated. Theoretically, each MAC CE may have eight activation fields whose values are 1, and the others are all 0. TCI-states corresponding to the eight fields whose values are 1 are eight TCI-states corresponding to eight values of a TCI field in DCI. For example, a smallest value (000) of the TCI field corresponds to an activated TCI-state whose index is the smallest in the MAC CE. The rest may be deduced by analogy, and there is a one-to-one correspondence. There are many types of MAC CEs. In addition to the MAC CE for activating the TCI-state, there are many MAC CEs for other purposes. This application relates only to a MAC CE for activating the TCI-state or a TCI-state combination. Therefore, unless otherwise specified, the MAC CE in this application is such a MAC CE.

TCI-state indication: A network device indicates a specific TCI-state by using the TCI field in the DCI. For example, a value of a TCI field in DCI sent by the network device to a terminal device is 000, representing that a TCI-state corresponding to 000 is used for a data transmission beam. A reference signal included in QCL-Info of typeD in the TCI-state is a channel state information reference signal (channel state information-reference signal, CSI-RS) whose index is #1, representing that the data transmission beam is the same as a receive beam corresponding to the CSI-RS whose index is #1. The receive beam corresponding to the CSI-RS whose index is #1 may be determined through a beam measurement procedure, and is known to the terminal device. Therefore, the terminal device may determine, based on a specific value of the TCI field, the receive beam corresponding to the data transmission beam, to receive data by using the corresponding receive beam. It should be noted that the two description manners, namely, the TCI-state and the TCI-state, in this specification may be interchanged.

In this application, beam quality of a beam may be represented by using signal quality of a reference signal corresponding to the beam, or may be represented in another manner. This is not specifically limited in this application. In the following embodiments, an example in which the beam quality of the beam is represented by using the signal quality of the reference signal corresponding to the beam is used to describe the technical solutions in this application.

The technical solutions in this application are described below with reference to specific embodiments.

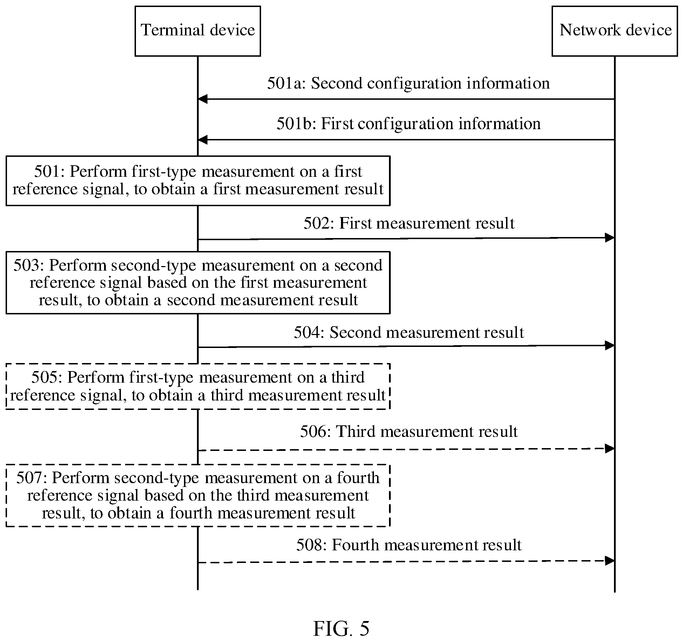

FIG. 5 is a diagram of an embodiment of a communication method according to an embodiment of this application. Refer to FIG. 5. The method includes the following steps.

501: A terminal device performs first-type measurement on a first reference signal, to obtain a first measurement result.

Optionally, the first reference signal includes a channel state information reference signal CSI-RS or a synchronization signal (synchronization signal and physical broadcasting channel block, SSB).

The first-type measurement includes periodic (Period) measurement performed by the terminal device on a reference signal or semi-persistent or semi-persistent (semi-persistent) measurement performed by the terminal device on the reference signal.

Specifically, the terminal device receives the first reference signal from a network device, and performs first-type measurement on the first reference signal, to obtain the first measurement result. The first measurement result includes signal quality of the first reference signal. The first reference signal corresponds to a first beam, and the signal quality of the first reference signal represents beam quality of the first beam.

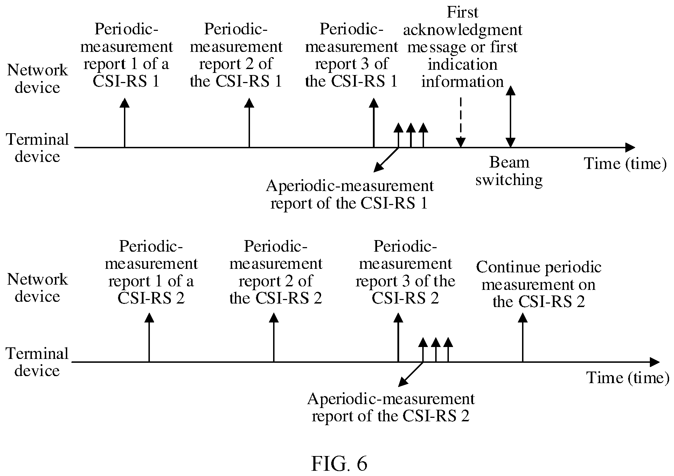

For example, as shown in FIG. 6, the terminal device periodically measures a CSI-RS 1 sent by the network device, and reports a measurement result of the CSI-RS 1 to the terminal device. The measurement result of the CSI-RS 1 includes signal quality of the CSI-RS 1, for example, reference signal received power (reference signal received power, RSRP) or reference signal received quality (reference signal received quality, RSRQ) of the CSI-RS 1. The CSI-RS 1 corresponds to the first beam, and the RSRP or the RSRQ of the CSI-RS 1 represents the beam quality of the first beam.

The first measurement result may include a measurement result that is of the CSI-RS 1 and that is obtained by the terminal device through one or more times of measurement. For example, the first measurement result includes a periodic-measurement report 1 of the CSI-RS 1, a periodic-measurement report 2 of the CSI-RS 1, and a periodic-measurement report 3 of the CSI-RS 1.

Optionally, the network device needs to configure a reference signal resource, for example, a periodic reference signal resource or a semi-persistent reference signal resource, of the first reference signal for the terminal device. The semi-persistent reference signal resource is also periodic, but may be activated or deactivated by the network device by using signaling. Therefore, the reference signal resource may be referred to as the semi-persistent reference signal resource.

The reference signal resource of the first reference signal corresponds to the first beam. For a relationship between the beam and the resource, refer to the foregoing related descriptions of the term beam. 501 may alternatively be replaced with: The terminal device performs first-type measurement on the reference signal resource of the first reference signal, to obtain the first measurement result; or the terminal device performs first-type measurement on the first beam, to obtain the first measurement result.

Optionally, the embodiment shown in FIG. 5 further includes 501a, and 501a is performed before 501.

501a: The network device sends second configuration information to the terminal device. Accordingly, the terminal device receives the second configuration information from the network device.

The second configuration information indicates the terminal device to perform first-type measurement on the first reference signal. For example, the second configuration information includes the reference signal resource of the first reference signal.

Optionally, the second configuration information further indicates the terminal device to report the measurement result obtained by performing first-type measurement on the first reference signal by the terminal device. In this implementation, the second configuration information further includes an uplink resource used by the terminal device to report the measurement result.

It should be noted that the network device may configure, for the terminal device by using same configuration information or different configuration information, the reference signal resource of the first reference signal and the uplink resource used by the terminal device to report the measurement result. Herein, the technical solution in this application is described by using an example in which the network device configures, by using the second configuration information, the reference signal resource of the first reference signal and the uplink resource used by the terminal device to report the measurement result.

It should be noted that 501a shows a manner in which the network device indicates, by using the second configuration information, the terminal device to perform first-type measurement on the first reference signal. In actual application, the network device may indicate, by using separate indication information, the terminal device to perform first-type measurement on the first reference signal.

502: The terminal device sends the first measurement result to the network device. Accordingly, the network device receives the first measurement result from the terminal device.

In a possible implementation, after the network device obtains the first measurement result, if the first measurement result satisfies a corresponding condition, the network device may send a second reference signal on a specific time-frequency resource, so that the terminal device performs second-type measurement on the second reference signal, to obtain a second measurement result.

Optionally, the first measurement result includes measurement results of the first reference signal that are reported by the terminal device N consecutive times, and N is an integer greater than or equal to 1.

For example, if all signal quality of the first reference signal in the measurement results of the first reference signal that are reported by the terminal device N consecutive times is greater than or equal to a first threshold, the network device sends the second reference signal.

For example, if all signal quality of the first reference signal in the measurement results of the first reference signal that are reported by the terminal device N consecutive times is greater than or equal to signal quality of a reference signal corresponding to a current serving beam of the terminal device, the network device sends the second reference signal.

Optionally, the terminal device may report the second measurement result to the network device on a corresponding time-frequency resource. After the network device obtains the first measurement result, the network device may learn that the terminal device is to report the second measurement result on the time-frequency resource. Therefore, the network device may reserve the time-frequency resource, and does not need to perform other scheduling by using the time-frequency resource.

503: The terminal device performs second-type measurement on the second reference signal based on the first measurement result, to obtain the second measurement result.

Specifically, the terminal device receives the second reference signal from the network device, and performs second-type measurement on the second reference signal based on the first measurement result, to obtain the second measurement result.

Optionally, the first reference signal and the second reference signal are a same reference signal; or there is a QCL relationship between the first reference signal and the second reference signal. For example, the first reference signal and the second reference signal have same QCL TypeD. That is, the terminal device assumes that the first reference signal and the second reference signal may be received by using a same spatial receive parameter.

Both the reference signal resource corresponding to the first reference signal and a reference signal resource corresponding to the second reference signal correspond to the first beam. For a relationship between the beam and the resources, refer to the foregoing related descriptions of the term beam.

503 may alternatively be replaced with: The terminal device performs second-type measurement on the reference signal resource of the second reference signal based on the first measurement result, to obtain the second measurement result; or the terminal device performs second-type measurement on the first beam based on the first measurement result obtained by performing first-type measurement on the first beam by the terminal device, to obtain the second measurement result.

For example, as shown in FIG. 6, the first reference signal and the second reference signal each are the CSI-RS 1, and a reference signal resource occupied by the CSI-RS 1 is a periodic reference signal resource that is of the CSI-RS 1 and that is configured by the network device for the terminal device in 501a. Alternatively, the reference signal resource occupied by the second reference signal is another reference signal resource specified by the network device, and the reference signal resource may be an aperiodic reference signal resource.

The following describes several possible forms of the first-type measurement and the second-type measurement.
1. The first-type measurement includes the periodic measurement performed by the terminal device on the reference signal, and the second-type measurement includes semi-persistent measurement performed by the terminal device on a reference signal.
2. The first-type measurement includes the periodic measurement performed by the terminal device on the reference signal, and the second-type measurement includes aperiodic measurement performed by the terminal device on a reference signal.
3. The first-type measurement includes the semi-persistent measurement performed by the terminal device on the reference signal, and the second-type measurement includes aperiodic measurement performed by the terminal device on a reference signal.

In 503, the second measurement result may be a measurement result obtained by performing second-type measurement on the second reference signal one or more times by the terminal device. For example, as shown in FIG. 6, the terminal device performs aperiodic measurement on the CSI-RS 1 three times, to obtain the second measurement result, and reports the second measurement result to the network device.

It should be noted that, the second measurement result includes a report identifier (identifier, ID), and the report ID is associated with a report ID in the first measurement result. In this way, the network device determines that the second measurement result is a measurement result obtained by performing the second-type measurement based on the first measurement result. That is, the network device may determine that the first measurement result is a measurement result of the first beam and that the second measurement result is a measurement result obtained by triggering, by the terminal device based on the first measurement result, to perform second-type measurement on the first beam. In this way, the network device determines the beam quality of the first beam.

The following describes two possible implementations of 503.

Implementation 1: The first measurement result includes the measurement results of the first reference signal that are reported by the terminal device N consecutive times, and N is the integer greater than or equal to 1. 503 specifically includes:
If all the signal quality of the first reference signal in the measurement results of the first reference signal that are reported by the terminal device N consecutive times is greater than or equal to the first threshold, the terminal device performs second-type measurement on the second reference signal, to obtain the second measurement result. Alternatively, if all the signal quality of the first reference signal in the measurement results of the first reference signal that are reported by the terminal device N consecutive times is greater than the first threshold, the terminal device performs second-type measurement on the second reference signal, to obtain the second measurement result. That is, signal quality of the second reference signal is for representing the beam quality of the first beam corresponding to the second reference signal.

It should be noted that, that the terminal device reports the measurement results of the first reference signal N consecutive times includes: The terminal device periodically measures the first reference signal, the terminal device separately measures the first reference signal in N consecutive periodicities to obtain corresponding measurement results, and the terminal device separately reports a measurement result corresponding to each of the N consecutive periodicities. Therefore, the measurement results of the first reference signal that are reported by the terminal device N consecutive times include the measurement results respectively corresponding to the N periodicities.

For example, as shown in FIG. 6, if signal quality of the CSI-RS 1 in a measurement result that is of the CSI-RS 1 and that is reported each time in measurement results of the CSI-RS 1 that are periodically reported by the terminal device three consecutive times is greater than or equal to the first threshold, the terminal device performs aperiodic measurement on the CSI-RS 1, to obtain the second measurement result. As shown in FIG. 6, the terminal device may perform aperiodic measurement on the CSI-RS 1 a plurality of times, to obtain the second measurement result.

It should be noted that, optionally, the following factors may be considered for setting a value of the first threshold: a location of the terminal device and an expected transmission rate of the terminal device. The first threshold may usually fall within an interval of [-60 dB, -90 dB].

For example, if the location of the terminal device is distant, the first threshold may be small. If the expected transmission rate is high, the first threshold may be large.

Implementation 2: The first measurement result includes the measurement results of the first reference signal that are reported by the terminal device N consecutive times, and N is the integer greater than or equal to 1. 503 specifically includes:
If all the signal quality of the first reference signal in the measurement results of the first reference signal that are reported by the terminal device N consecutive times is greater than or equal to the signal quality of the reference signal corresponding to the current serving beam of the terminal device, the terminal device performs second-type measurement on the second reference signal, to obtain the second measurement result. Alternatively, if all the signal quality of the first beam corresponding to the first reference signal in the measurement results of the first reference signal that are reported by the terminal device N consecutive times is greater than the signal quality of the current serving beam of the terminal device, the terminal device performs second-type measurement on the second reference signal, to obtain the second measurement result. For the measurement results of the first reference signal that are reported by the terminal device N consecutive times, refer to the foregoing related descriptions. That is, signal quality of the second reference signal is for representing the beam quality of the first beam corresponding to the second reference signal.

For example, as shown in FIG. 2, the current serving beam of the terminal device is a beam 1. In FIG. 6, if signal quality of the CSI-RS 1 in a measurement result that is of the CSI-RS 1 and that is reported each time in measurement results of the CSI-RS 1 that are periodically reported by the terminal device three consecutive times is greater than or equal to the signal quality of the current serving beam of the terminal device, the terminal device performs aperiodic measurement on the CSI-RS 1, to obtain the second measurement result.

It should be noted that the implementation 1 and the implementation 2 show two possible trigger conditions for triggering the terminal device to perform second-type measurement on the second reference signal. In actual application, there may further be another trigger condition. This is not specifically limited in this application.

If the condition shown in the implementation 1 or the implementation 2 is not satisfied, the terminal device does not perform second-type measurement on the second reference signal, and continues to perform first-type measurement on the first reference signal.

Optionally, the embodiment shown in FIG. 5 further includes 501b, and 501b may be performed before 501.

501b: The network device sends first configuration information to the terminal device. Accordingly, the terminal device receives the first configuration information from the network device.

The first configuration information indicates the terminal device to perform second-type measurement on the second reference signal based on the first measurement result and report the measurement result. For example, the first configuration information includes at least one of the following: the reference signal resource of the second reference signal and an uplink resource used by the terminal device to report the second measurement result.

For example, the network device may indicate, by using the first configuration information: When all the signal quality of the first reference signal in the measurement results of the first reference signal that are reported by the terminal device N consecutive times is greater than or equal to the first threshold, the terminal device triggers the second-type measurement on the second reference signal and reporting of the measurement result; or when all the signal quality of the first reference signal in the measurement results of the first reference signal that are reported by the terminal device N consecutive times is greater than the first threshold, the terminal device triggers the second-type measurement on the second reference signal and reporting of the measurement result.

For example, the network device may configure, by using the first configuration information: When all the signal quality of the first reference signal in the measurement results of the first reference signal that are reported by the terminal device N consecutive times is greater than or equal to the signal quality of the reference signal corresponding to the current serving beam of the terminal device, the terminal device triggers the second-type measurement on the second reference signal and reporting of the measurement result; or when all the signal quality of the first reference signal in the measurement results of the first reference signal that are reported by the terminal device N consecutive times is greater than the signal quality of the reference signal corresponding to the current serving beam of the terminal device, the terminal device triggers the second-type measurement on the second reference signal and reporting of the measurement result.

It should be noted that, in 501b, a manner in which the network device configures, for the terminal device by using same configuration information, the reference signal resource of the second reference signal and the uplink resource used by the terminal device to report the second measurement result is used. In actual application, the network device may respectively configure, for the terminal device by using different configuration information, the reference signal resource of the second reference signal and the uplink resource used by the terminal device to report the second measurement result. This is not specifically limited in this application. That is, the network device configures the reference signal resource of the second reference signal by using one piece of configuration information, but does not associate the reference signal resource with the reporting configuration. The network device configures, by using another piece of configuration information, the uplink resource used by the terminal device to report the second measurement result.

It should be noted that 501b shows a manner in which the network device indicates, by using the first configuration information, the terminal device to perform second-type measurement on the second reference signal based on the first measurement result and report the measurement result. In actual application, the network device may alternatively indicate, by using separate indication information, the terminal device to perform second-type measurement on the second reference signal based on the first measurement result and report the measurement result. This is not specifically limited in this application.

There may be no fixed execution sequence between 501b and 501a. 501a may be first performed, and then 501b is performed; 501b may be first performed, and then 501a is performed; or 501a and 501b are simultaneously performed based on a case. This is not specifically limited in this application.

504: The terminal device sends the second measurement result to the network device.

Specifically, the terminal device may report the second measurement result by using the uplink resource that is configured by using the first configuration information in 501b and that is for reporting the second measurement result. In 502, the network device receives the first measurement result from the terminal device, and the network device determines, based on the first measurement result, that the terminal device is to report the second measurement result. Therefore, the network device may receive the second measurement result of the terminal device on the uplink resource that is configured by using the first configuration information and that is for reporting the second measurement result.

For example, as shown in FIG. 6, the terminal device performs aperiodic measurement on the CSI-RS 1, to obtain an aperiodic-measurement result of the CSI-RS 1, and reports the measurement result to the network device.

It can be learned that the terminal device performs first-type measurement on the first reference signal, to obtain the first measurement result. The terminal device triggers, based on the first measurement result, the terminal device to perform second-type measurement on the second reference signal, and reports the second measurement result. The terminal device reports the second measurement result to the network device. The network device does not need to trigger, by using DCI, the terminal device to report the measurement result, so that signaling overheads are reduced. The terminal device performs second-type measurement on the second reference signal based on the first measurement result, and reports the second measurement result. This helps improve reliability of the measurement result reported by the terminal device, and avoids a case in which the measurement result reported by the terminal device cannot truly reflect an overall status of a link due to impact caused by a short-time link quality fluctuation. This helps the network device select, for the terminal device based on the measurement result, an appropriate beam to which the terminal device is to switch, thereby reducing latency overheads of beam switching performed by the terminal device, and improving communication quality.

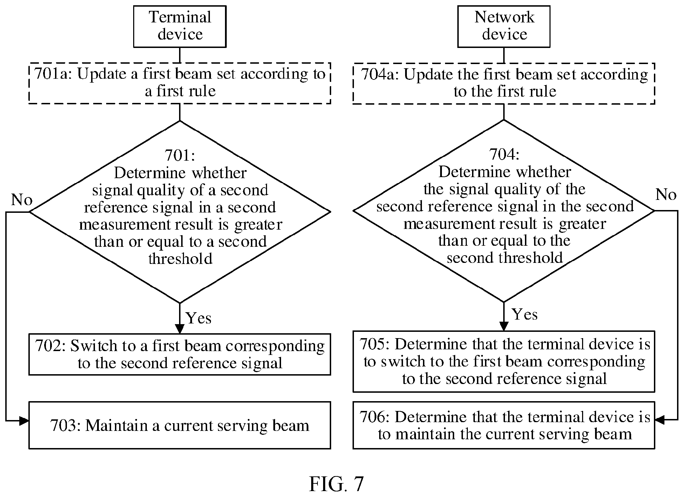

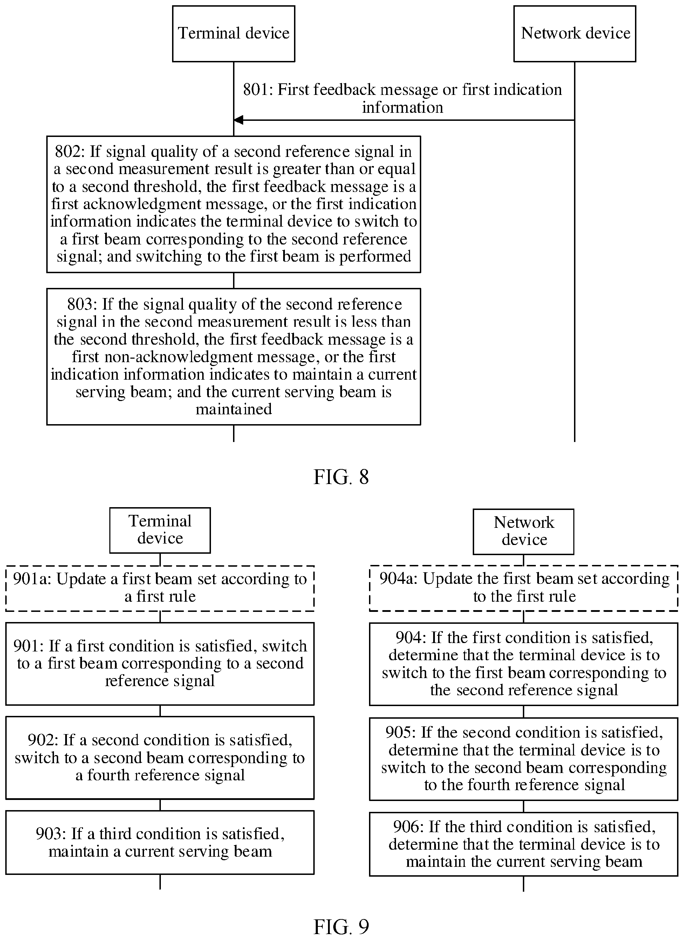

Optionally, based on the foregoing process of 501 to 504, the terminal device may initiate the beam switching. Specifically, the terminal device initiates the beam switching in a plurality of manners. This is not specifically limited in this application. The following describes, by using embodiments shown in FIG. 7 and FIG. 8, two possible implementations in which the terminal device initiates the beam switching based on the foregoing process of 501 to 504.

Optionally, the embodiment shown in FIG. 5 further includes 505 to 508. There is no fixed sequence between 505 to 508 and 501 to 504. 505 to 508 may be first performed, and then 501 to 504 are performed; 501 to 504 may be first performed, and then 505 to 508 are performed; or 501 to 504 and 505 to 508 are simultaneously performed based on a case. This is not specifically limited in this application.

505: The terminal device performs first-type measurement on a third reference signal, to obtain a third measurement result.

For the first-type measurement, refer to the related descriptions in 501. Details are not described herein again.

Specifically, the terminal device receives the third reference signal from the network device, and performs first-type measurement on the third reference signal, to obtain the third measurement result.

A reference signal resource of the third reference signal corresponds to a second beam. For a relationship between the beam and the resource, refer to the foregoing related descriptions of the term beam. 505 may be replaced with: The terminal device performs first-type measurement on the reference signal of the third reference signal, to obtain the third measurement result; or the terminal device performs first-type measurement on the second beam, to obtain the third measurement result.

Optionally, the third measurement result includes a measurement result obtained by performing first-type measurement on the third reference signal one or more times by the terminal device. For example, as shown in FIG. 6, the terminal device measures a CSI-RS 2 three times, to obtain the third measurement result. The third measurement result includes a periodic-measurement report 1 of the CSI-RS 2, a periodic-measurement report 2 of the CSI-RS 2, and a periodic-measurement report 3 of the CSI-RS 2.

The reference signal resource of the third reference signal corresponds to the second beam. For the relationship between the beam and the resource, refer to the foregoing related descriptions of the term beam. 505 may alternatively be replaced with: The terminal device performs first-type measurement on the third reference signal, to obtain the third measurement result; or the terminal device performs first-type measurement on the second beam, to obtain the third measurement result. Optionally, the terminal device sends the third measurement result to the network device.

In a possible implementation, the second configuration information in 501a further indicates the terminal device to perform first-type measurement on the third reference signal. For example, the second configuration information further includes the reference signal resource of the third reference signal.

Optionally, the second configuration information further indicates the terminal device to report the measurement result obtained by performing first-type measurement on the third reference signal by the terminal device. For example, the second configuration information further includes the reference signal resource of the third reference signal.

The foregoing implementation shows that the network device configures, by using same configuration information, the terminal device to perform first-type measurement on the first reference signal and the third reference signal and report the corresponding measurement results. In actual application, the network device may respectively configure, by using different configuration information, the terminal device to perform first-type measurement on the first reference signal and report the measurement result and the terminal device to perform first-type measurement on the third reference signal and report the measurement result. This is not specifically limited in this application.

Optionally, for the third reference signal, the network device may configure, by using same configuration information or different configuration information, the terminal device to perform first-type measurement on the third reference signal and the terminal device to report the measurement result obtained by performing first-type measurement on the third reference signal.

506: The terminal device sends the third measurement result to the network device. Accordingly, the network device receives the third measurement result from the terminal device.

506 is similar to 502. For details, refer to the related descriptions in 502. Details are not described herein again.

507: The terminal device performs second-type measurement on a fourth reference signal based on the third measurement result, to obtain a fourth measurement result.

Specifically, the terminal device receives the fourth reference signal from the network device, and performs second-type measurement on the fourth reference signal based on the third measurement result, to obtain the fourth measurement result.

Optionally, the third reference signal and the fourth reference signal are a same reference signal, or there is a QCL relationship between the third reference signal and the fourth reference signal.

Both the reference signal resource corresponding to the third reference signal and a reference signal resource corresponding to the fourth reference signal correspond to the second beam. For a relationship between the beam and the resources, refer to the foregoing related descriptions of the term beam.

507 may alternatively be replaced with: The terminal device performs second-type measurement on the fourth reference signal based on the third measurement result, to obtain the fourth measurement result; or the terminal device performs second-type measurement on the second beam based on the third measurement result, to obtain the fourth measurement result.

For several possible forms of the first-type measurement and the second-type measurement, refer to the related descriptions in 502. Details are not described herein again.

Specific implementations of 507 are similar to those of 503. For details, refer to the implementations provided in 503. Details are not described herein again.

The foregoing implementation shows that the network device configures, by using same configuration information, the terminal device to perform second-type measurement on the second reference signal and the fourth reference signal and report the corresponding measurement results. In actual application, the network device may respectively configure, by using different configuration information, the terminal device to perform second-type measurement on the second reference signal and report the measurement result and the terminal device to perform second-type measurement on the fourth reference signal and report the measurement result. This is not specifically limited in this application.

Optionally, for the fourth reference signal, the network device may configure, by using same configuration information or different configuration information, the terminal device to perform second-type measurement on the fourth reference signal and the terminal device to report the measurement result obtained by performing second-type measurement on the fourth reference signal.

In 507, optionally, the fourth measurement result includes a measurement result obtained by performing second-type measurement on the fourth reference signal one or more times by the terminal device. For example, as shown in FIG. 6, the terminal device performs aperiodic measurement on the CSI-RS 2 three times, to obtain the fourth measurement result.

Optionally, the first configuration information further indicates the terminal device to perform second-type measurement on the fourth reference signal based on the third measurement result and report the measurement result. For example, the first configuration information further includes at least one of the following: the reference signal resource of the fourth reference signal and an uplink resource used by the terminal device to report the fourth measurement result.

508: The terminal device sends the fourth measurement result to the network device. Accordingly, the network device receives the fourth measurement result from the terminal device.

Specifically, the terminal device may report the fourth measurement result by using the uplink resource that is configured by using the first configuration information in 501b and that is for reporting the fourth measurement result. In 506, the network device receives the third measurement result from the terminal device, and the network device may determine, based on the third measurement result, that the terminal device is to report the fourth measurement result. Therefore, the network device may receive the fourth measurement result of the terminal device on the uplink resource that is configured by using the first configuration information and that is for reporting the fourth measurement result.

For example, as shown in FIG. 6, the terminal device performs aperiodic measurement on the CSI-RS 2, to obtain an aperiodic measurement result of the CSI-RS 2, and reports the measurement result to the network device.

It should be noted that the terminal device may simultaneously or separately report the second measurement result in 504 and the fourth measurement result in 508 to the network device. This may specifically depend on a reporting configuration actually indicated by the network device for the terminal device.

It can be learned that, according to the technical solution in this application, the terminal device implements corresponding measurement on a plurality of beams, and reports corresponding measurement results, and the network device does not need to trigger, by using the DCI, the terminal device to report the measurement results, so that the signaling overheads are reduced. The terminal device performs second-type measurement on each beam based on a measurement result obtained by performing first-type measurement on the beam, and reports the measurement result. This helps improve reliability of the measurement result reported by the terminal device, and avoids the case in which the measurement result reported by the terminal device cannot truly reflect the overall status of the link due to the impact caused by the short-time link quality fluctuation. This helps the network device select, for the terminal device based on the measurement result, the appropriate beam to which the terminal device is to switch, thereby reducing the latency overheads of the beam switching performed by the terminal device, and improving the communication quality.

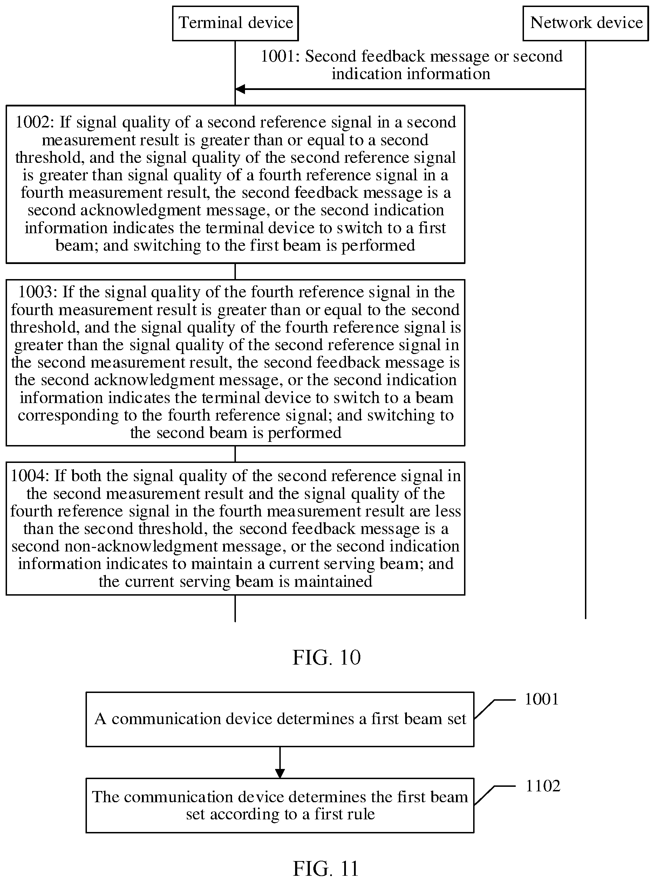

Optionally, based on the foregoing process of 501 to 508, the terminal device may initiate the beam switching. Specifically, the terminal device initiates the beam switching in a plurality of manners. This is not specifically limited in this application. The following describes, by using embodiments shown in FIG. 9 and FIG. 10, two possible implementations in which the terminal device initiates the beam switching based on the foregoing process of 501 to 508.

The following describes several possible scenarios in which the terminal device may initiate the beam switching based on the foregoing process of 501 to 508.
1. The terminal device simultaneously reports the second measurement result and the fourth measurement result.

In this scenario, the second measurement result and the fourth measurement result may be measurement results obtained by the terminal device within specific duration. The terminal device may initiate the beam switching based on the second measurement result and the fourth measurement result. For a specific implementation, refer to related descriptions in the embodiments shown in FIG. 9 and FIG. 10 below.

It should be noted that, if a time interval between time at which the terminal device obtains the second measurement result and time at which the terminal device obtains the fourth measurement result is greater than the specific duration, the terminal device does not simultaneously report the second measurement result and the fourth measurement result. The terminal device performs 501 to 504, and the terminal device may initiate the beam switching based on the second measurement result. For example, if the signal quality of the second reference signal is good, the terminal device may switch to the first beam corresponding to the second reference signal. After time greater than the specific duration, the terminal device performs 505 to 508, and the terminal device may initiate the beam switching again based on the fourth measurement result. For example, the terminal device switches, based on the second measurement result, to the first beam corresponding to the second reference signal. The terminal device obtains the fourth measurement result, and determines that signal quality of the fourth reference signal in the fourth measurement result is greater than the signal quality of the second reference signal. The terminal device may switch from the first beam corresponding to the second reference signal to the second beam corresponding to the fourth reference signal.

2. The terminal device separately reports the second measurement result and the fourth measurement result.

In this scenario, the second measurement result and the fourth measurement result may be measurement results obtained by the terminal device within specific duration. The terminal device may initiate the beam switching based on the second measurement result and the fourth measurement result. For the network device, if the network device receives the second measurement result and the fourth measurement result within the specific duration, the network device determines, based on the second measurement result and the fourth measurement result, the beam to which the terminal device is to switch.

It should be noted that, if the network device does not receive another measurement result of the terminal device within the specific duration after receiving the second measurement result, the network device determines, based on the second measurement result, the beam to which the terminal device is to switch. After time greater than the specific duration, if the network device receives the fourth measurement result, the network device may determine, based on the fourth measurement result, the beam to which the terminal device is to switch.

In 501 to 508, descriptions are provided by using a process in which the terminal device performs corresponding measurement on two beams (the first beam corresponding to the first reference signal and the second beam corresponding to the third reference signal) and reports measurement results by using the technical solution in this application as an example. In actual application, the terminal device may measure more beams, and report corresponding measurement results, so that the terminal device or the network device determines, in a plurality of beams, a beam to be used by the terminal device, to improve the communication quality.

It should be noted that, if the second measurement result and the fourth measurement result are the measurement results obtained by the terminal device within the specific duration, and the signal quality of the second reference signal in the second measurement result is the same as or close to the signal quality of the fourth reference signal in the fourth measurement result, the terminal device may report only the second measurement result or report only the fourth measurement result.

This application further provides an embodiment. This embodiment is similar to the embodiment shown in FIG. 5. This embodiment includes: A terminal device performs first-type measurement on a first reference signal, to obtain a first measurement result. The terminal device performs second-type measurement on a second reference signal based on the first measurement result, to obtain a second measurement result. The terminal device sends the second measurement result to a network device. Accordingly, the network device receives the second measurement result from the terminal device. That is, the terminal device in this embodiment does not perform 502 and 506.

Optionally, the first measurement result includes measurement results of the first reference signal that are obtained by the terminal device through N consecutive times of measurement, and N is an integer greater than or equal to 1; and a processing module is specifically configured to:
If all signal quality of the first reference signal in the measurement results of the first reference signal that are obtained by the terminal device through the N consecutive times of measurement is greater than or equal to a first threshold, the terminal device performs second-type measurement on the second reference signal, to obtain the second measurement result; or
if all signal quality of the first reference signal in the measurement results of the first reference signal that are obtained by the terminal device through the N consecutive times of measurement is greater than or equal to signal quality of a reference signal corresponding to a current serving beam of the terminal device, the terminal device performs second-type measurement on the second reference signal, to obtain the second measurement result.

FIG. 7 is a diagram of another embodiment of a communication method according to an embodiment of this application. Refer to FIG. 7. The method includes the following steps.

701: A terminal device determines whether signal quality of a second reference signal in a second measurement result is greater than or equal to a second threshold; and if yes, performs 702; or if no, performs 703.

For a manner of setting a value of the second threshold, refer to the manner of setting the value of the first threshold in the embodiment shown in FIG. 5. For details, refer to the related descriptions in the embodiment shown in FIG. 5.

701 may alternatively be replaced with: The terminal device determines whether the signal quality of the second reference signal in the second measurement result is greater than the second threshold; and if yes, performs 702; or if no, performs 703.

Optionally, the embodiment shown in FIG. 7 further includes 701a, and 701a may be performed before 701.

701a: The terminal device updates a first beam set according to a first rule.

The first beam set includes a beam set used by the terminal device to initiate beam switching. For a detailed process of 701a, refer to related descriptions in 1102 in an embodiment shown in FIG. 11 below. Details are not described herein again.

Based on 701a, optionally, 701 specifically includes: The terminal device determines whether the signal quality of the second reference signal in the second measurement result is greater than or equal to the second threshold and whether a first beam belongs to the first beam set; and if yes, performs 702; or if no, performs 703.

If the signal quality of the second reference signal in the second measurement result is greater than or equal to the second threshold, and the first beam belongs to the first beam set, the terminal device switches to the first beam corresponding to the second reference signal. If the signal quality of the second reference signal in the second measurement result is less than the second threshold, or the first beam does not belong to the first beam set, the terminal device maintains a current serving beam. Optionally, the terminal device continues to perform first-type measurement on a first reference signal.

702: The terminal device switches to the first beam corresponding to the second reference signal.

If the signal quality of the second reference signal in the second measurement result is greater than or equal to the second threshold, the terminal device switches to the first beam corresponding to the second reference signal. Alternatively, if the signal quality of the second reference signal in the second measurement result is greater than the second threshold, the terminal device switches to the first beam corresponding to the second reference signal. For example, as shown in FIG. 2, the terminal device switches from the beam 1 to the beam 2.

It should be noted that the terminal device switches to the first beam corresponding to the second reference signal, and the first beam takes effect after specific preset duration. That the first beam takes effect may be understood as: The terminal device performs communication transmission with a network device by using the first beam.

703: The terminal device maintains the current serving beam.

If the signal quality of the second reference signal in the second measurement result is less than the second threshold, the terminal device maintains the current serving beam. Alternatively, if the signal quality of the second reference signal in the second measurement result is less than or equal to the second threshold, the terminal device maintains the current serving beam.

Optionally, the terminal device continues to perform first-type measurement on the first reference signal.

704: The network device determines whether the signal quality of the second reference signal in the second measurement result is greater than or equal to the second threshold; and if yes, performs 705; or if no, performs 706.

704 is similar to 701. For details, refer to the related descriptions in 701.

Optionally, the embodiment shown in FIG. 7 further includes 704a, and 704a may be performed before 704.

704a: The network device updates the first beam set according to the first rule.

Based on 704a, optionally, 704 specifically includes: The network device determines whether the signal quality of the second reference signal in the second measurement result is greater than or equal to the second threshold and whether the first beam belongs to the first beam set; and if yes, performs 705; or if no, performs 706.

For a detailed process of 704a, refer to the related descriptions in 1102 in the embodiment shown in FIG. 11 below. Details are not described herein again.

705: The network device determines that the terminal device is to switch to the first beam.

The network device determines that the terminal device is to switch to the first beam corresponding to the second reference signal. After the specific preset duration, the network device performs communication transmission with the terminal device by using the first beam.

706: The network device determines that the terminal device is to maintain the current serving beam.

If the network device determines that the terminal device is to maintain the current serving beam, the network device still performs communication transmission with the terminal device by using the serving beam.

Currently, in a solution in which the terminal device initiates the beam switching based on a measurement result of the terminal device at a layer 1, if measurement and measurement result reporting are performed a plurality of times, corresponding signaling overheads are caused. If measurement and measurement result reporting are performed a small quantity of times, it is difficult to avoid a case in which the measurement result reported by the terminal device cannot truly reflect an overall status of a link due to impact caused by a short-time link quality fluctuation. Consequently, reliability of the measurement result reported by the terminal device is low. Consequently, the terminal device or the network device cannot determine, based on the measurement result, a beam to which the terminal device is to switch and that is more applicable to the terminal device, and communication quality of the terminal device is affected. The embodiment shown in FIG. 7 shows a process in which the terminal device determines, based on the foregoing process of 501 to 504, whether to initiate the beam switching, and a process in which the network device determines, based on the foregoing process of 501 to 504, whether the terminal device is to initiate the beam switching. The terminal device and the network device determine, based on the second measurement result, whether to initiate the beam switching. Because the second measurement result is obtained by performing second-type measurement on the second reference signal based on a first measurement result by the terminal device, it can be learned that reliability of the measurement result reported by the terminal device is high, and the case in which the measurement result reported by the terminal device cannot truly reflect the overall status of the link due to the impact caused by the short-time link quality fluctuation is avoided. This helps the terminal device use an appropriate beam, and improves reliability of triggering the terminal device to perform beam switching, to improve the communication quality of the terminal device. The terminal device and the network device separately determine, based on the second measurement result, whether the terminal device is to initiate the beam switching, and the network device does not need to indicate a beam to the terminal device, so that the signaling overheads and latency overheads are reduced. The terminal device does not need to send, to the network device, a beam to which the terminal device intends to switch, so that a case in which a network always reserves an uplink resource used by the terminal device to report the beam to which the terminal device intends to switch is avoided. Uplink resource overheads are reduced, and system performance is improved.

It should be noted that there is no fixed execution sequence between 701 to 703 and 704 to 706. 701 to 703 may be first performed, and then 704 to 706 are performed; 704 to 706 may be first performed, and then 701 to 703 are performed; or 701 to 703 and 704 to 706 are simultaneously performed based on a case. This is not specifically limited in this application.

FIG. 8 is a diagram of another embodiment of a communication method according to an embodiment of this application. Refer to FIG. 8. The method includes the following steps.

801: A network device sends a first feedback message or first indication information to a terminal device. Accordingly, the terminal device receives the first feedback message or the first indication information from the network device.

In a possible implementation, the first feedback message is a first acknowledgment (acknowledgment, ACK) message, or the first indication information indicates the terminal device to switch to a first beam.

For example, if signal quality of a second reference signal in a second measurement result is greater than or equal to a second threshold, the network device may send a first ACK or the first indication information to the terminal device. The first indication information indicates the terminal device to switch to the first beam corresponding to the second reference signal. The network device may determine that the terminal device is to switch to the first beam corresponding to the second reference signal. After preset duration after the network device sends the first ACK or the first indication information, the network device may perform communication transmission with the terminal device by using the first beam. Within the preset duration, the network device may still perform communication transmission with the terminal device by using a current serving beam of the terminal device.

In another possible implementation, the first feedback message is a first non-acknowledgment (non-acknowledgment, NACK) message, or the first indication information is used by the terminal device to maintain a current serving beam or not to perform beam switching.

For example, if signal quality of a second reference signal in a second measurement result is less than a second threshold, the network device may feed back a first NACK or the first indication information to the terminal device, where the first indication information indicates the terminal device to maintain the current serving beam. The network device may determine that the terminal device is to maintain the current serving beam. The network device still performs communication transmission with the terminal device by using the serving beam.

802: If the signal quality of the second reference signal in the second measurement result is greater than or equal to the second threshold, the first feedback message is the first acknowledgment message, or the first indication information is used by the terminal device to switch to the first beam corresponding to the second reference signal; and the terminal device switches to the first beam.

The terminal device switches to the first beam. After preset duration after the terminal device receives the first feedback message or the first indication information, the terminal device may perform communication transmission with the network device by using the first beam. Within the preset duration, the terminal device may still perform communication transmission with the network device by using the current serving beam of the terminal device.

803: If the signal quality of the second reference signal in the second measurement result is less than the second threshold, the first feedback message is the first non-acknowledgment message, or the first indication information is used by the terminal device to maintain the current serving beam; and the terminal device maintains the current serving beam.

Optionally, the terminal device continues to perform first-type measurement on a first reference signal.

Optionally, that the first indication information is used by the terminal device to maintain the current serving beam is alternatively described as: The first indication information indicates the terminal device not to perform beam switching.

In a case of 803, the terminal device still performs communication transmission with the network device by using the serving beam.

Currently, in a solution in which the terminal device initiates the beam switching based on a measurement result of the terminal device at a layer 1, if measurement and measurement result reporting are performed a plurality of times, corresponding signaling overheads are caused. If measurement and measurement result reporting are performed a small quantity of times, it is difficult to avoid a case in which the measurement result reported by the terminal device cannot truly reflect an overall status of a link due to impact caused by a short-time link quality fluctuation. Consequently, reliability of the measurement result reported by the terminal device is low. Consequently, the terminal device or the network device cannot determine, based on the measurement result, a beam to which the terminal device is to switch and that is more applicable to the terminal device, and communication quality of the terminal device is affected. The embodiment shown in FIG. 8 shows that based on the foregoing process of 501 to 504, the network device determines the first feedback message or the first indication information based on the second measurement result, and sends the first feedback message or the first indication information to the terminal device. Because the second measurement result is obtained by performing second-type measurement on the second reference signal based on a first measurement result by the terminal device, it can be learned that reliability of the measurement result reported by the terminal device is high, and the case in which the measurement result reported by the terminal device cannot truly reflect the overall status of the link due to the impact caused by the short-time link quality fluctuation is avoided. This helps the terminal device use an appropriate beam, and improves reliability of triggering the terminal device to perform beam switching, to improve the communication quality of the terminal device. The terminal device does not need to send, to the network device, a beam to which the terminal device intends to switch, so that a case in which a network always reserves an uplink resource used by the terminal device to report the beam to which the terminal device intends to switch is avoided. Uplink resource overheads are reduced, and system performance is improved.

This application further provides another implementation. After 504, if the terminal device does not receive a feedback message from the network device for the second measurement result, the terminal device may maintain the current serving beam. Optionally, the terminal device continues to perform first-type measurement on the first reference signal.

This application further provides another implementation. After 504, the terminal device receives DCI from the network device. If a beam indicated by the DCI is the first beam corresponding to the second reference signal, the terminal device switches to the first beam. The DCI may be understood as a response of the network device to the second measurement result. The terminal device does not need to feed back an ACK for the DCI. The terminal device directly switches to the first beam, and the first beam takes effect after specific preset duration. That is, the terminal device uses the first beam as a serving beam, and the terminal device communicates with the network device by using the first beam.

Optionally, if a beam indicated by the DCI is not the first beam corresponding to the second reference signal, the terminal device switches to the beam indicated by the DCI, and the terminal device feeds back an ACK to the network device for the DCI. After specific preset duration, the beam indicated by the DCI takes effect. That is, the terminal device uses the beam indicated by the DCI as a serving beam, and the terminal device communicates with the network device by using the beam indicated by the DCI.

FIG. 9 is a diagram of another embodiment of a communication method according to an embodiment of this application. Refer to FIG. 9. The method includes the following steps.

901: If a first condition is satisfied, a terminal device determines to switch to a first beam corresponding to a second reference signal.

The first condition includes: Signal quality of the second reference signal in a second measurement result is greater than or equal to a second threshold, and the signal quality of the second reference signal is greater than signal quality of a fourth reference signal; or signal quality of the second reference signal in a second measurement result is greater than a second threshold.

Optionally, the signal quality of the fourth reference signal in a fourth measurement result is greater than or equal to the second threshold.

For a manner of setting a value of the second threshold, refer to the manner of setting the value of the first threshold in the embodiment shown in FIG. 5. For details, refer to the related descriptions in the embodiment shown in FIG. 5.

902: If a second condition is satisfied, the terminal device determines to switch to a second beam corresponding to the fourth reference signal.

The second condition includes: The signal quality of the fourth reference signal in the fourth measurement result is greater than or equal to the second threshold, and the signal quality of the fourth reference signal is greater than the signal quality of the second reference signal; or the signal quality of the fourth reference signal in the fourth measurement result is greater than the second threshold, and the signal quality of the fourth reference signal is greater than the signal quality of the second reference signal.

Optionally, the signal quality of the second reference signal in the second measurement result is greater than or equal to the second threshold.

It should be noted that, optionally, if both the signal quality of the second reference signal in the second measurement result and the signal quality of the fourth reference signal in the fourth measurement result are greater than or equal to the second threshold, and the signal quality of the second reference signal in the second measurement result is equal to the signal quality of the fourth reference signal in the fourth measurement result, the terminal device may switch to a beam with a smaller index or a larger index in the first beam corresponding to the second reference signal and the second beam corresponding to the fourth reference signal.

903: If a third condition is satisfied, the terminal device maintains a current serving beam.

Optionally, the terminal device continues to perform first-type measurement on a first reference signal and a third reference signal.

The third condition includes: Both the signal quality of the second reference signal in the second measurement result and the signal quality of the fourth reference signal in the fourth measurement result are less than the second threshold; or both the signal quality of the second reference signal in the second measurement result and the signal quality of the fourth reference signal in the fourth measurement result are less than or equal to the second threshold.

Optionally, the embodiment shown in FIG. 9 further includes 901a, and 901a may be performed before 901.

901a: The terminal device updates a first beam set according to a first rule.

The first beam set includes a beam used by the terminal device to initiate beam switching. For a detailed process of 901a, refer to related descriptions in 1102 in an embodiment shown in FIG. 11 below. Details are not described herein again.

Based on 901a, optionally, 901 specifically includes:
If the first condition is satisfied, and the first beam belongs to the first beam set, the terminal device switches to the first beam.

It should be noted that, if both the signal quality of the second reference signal in the second measurement result and the signal quality of the fourth reference signal in the fourth measurement result are greater than or equal to the second threshold, the second beam corresponding to the fourth reference signal belongs to the first beam set, and the first beam corresponding to the first reference signal does not belong to the first beam set, the terminal device switches to the second beam. Optionally, the signal quality of the second reference signal is less than the signal quality of the fourth reference signal.

It should be noted that, if both the signal quality of the second reference signal in the second measurement result and the signal quality of the fourth reference signal in the fourth measurement result are greater than or equal to the second threshold, and neither the first beam corresponding to the second reference signal nor the second beam corresponding to the fourth reference signal belongs to the first beam set, the terminal device maintains the current serving beam. Optionally, the terminal device continues to perform first-type measurement on the first reference signal and the third reference signal.

Based on 901a, optionally, 902 specifically includes:
If the second condition is satisfied, and the second beam corresponding to the fourth reference signal belongs to the first beam set, the terminal device switches to the second beam.

It should be noted that, if both the signal quality of the fourth reference signal in the fourth measurement result and the signal quality of the fourth reference signal in the fourth measurement result are greater than or equal to the second threshold, the first beam corresponding to the second reference signal belongs to the first beam set, and the second beam corresponding to the fourth reference signal does not belong to the first beam set, the terminal device switches to the first beam corresponding to the second reference signal. Optionally, the signal quality of the fourth reference signal is greater than the signal quality of the second reference signal.

It should be noted that, if both the signal quality of the fourth reference signal in the fourth measurement result and the signal quality of the fourth reference signal in the fourth measurement result are greater than or equal to the second threshold, and neither the first beam corresponding to the second reference signal nor the second beam corresponding to the fourth reference signal belongs to the first beam set, the terminal device maintains the current serving beam. Optionally, the terminal device continues to perform first-type measurement on the first reference signal and the third reference signal. Optionally, the signal quality of the fourth reference signal is greater than the signal quality of the second reference signal.

904: If the first condition is satisfied, a network device determines that the terminal device is to switch to the first beam corresponding to the second reference signal.

905: If the second condition is satisfied, the network device determines that the terminal device is to switch to the second beam corresponding to the fourth reference signal.

906: If the third condition is satisfied, the network device determines that the terminal device is to maintain the current serving beam.

904 to 906 are similar to 901 to 903. For details, refer to the related descriptions in 901 to 903. Details are not described herein again.

Optionally, the embodiment shown in FIG. 9 further includes 904a, and 904a may be performed before 704.

904a: The network device updates the first beam set according to the first rule.

For a detailed process of 904a, refer to the related descriptions in 1102 in the embodiment shown in FIG. 11 below. Details are not described herein again.

Based on 904a, optionally, 904 specifically includes:
If the first condition is satisfied, and the first beam corresponding to the second reference signal belongs to the first beam set, the network device determines that the terminal device is to switch to the first beam.

It should be noted that, if both the signal quality of the second reference signal in the second measurement result and the signal quality of the fourth reference signal in the fourth measurement result are greater than or equal to the second threshold, the second beam corresponding to the fourth reference signal belongs to the first beam set, and the first beam corresponding to the second reference signal does not belong to the first beam set, the network device determines that the terminal device is to switch to the second beam. Optionally, the signal quality of the second reference signal is greater than the signal quality of the fourth reference signal.

It should be noted that, if both the signal quality of the second reference signal in the second measurement result and the signal quality of the fourth reference signal in the fourth measurement result are greater than or equal to the second threshold, and neither the first beam corresponding to the second reference signal nor the second beam corresponding to the fourth reference signal belongs to the first beam set, the network device determines that the terminal device is to maintain the current serving beam.

Based on 901a, optionally, 902 specifically includes:
If the second condition is satisfied, and the second beam corresponding to the fourth reference signal belongs to the first beam set, the network device determines that the terminal device is to switch to the second beam.

It should be noted that, if both the signal quality of the fourth reference signal in the fourth measurement result and the signal quality of the fourth reference signal in the fourth measurement result are greater than or equal to the second threshold, the first beam corresponding to the second reference signal belongs to the first beam set, and the second beam corresponding to the fourth reference signal does not belong to the first beam set, the network device determines that the terminal device is to switch to the first beam. Optionally, the signal quality of the second reference signal is greater than the signal quality of the fourth reference signal.

It should be noted that, if both the signal quality of the fourth reference signal in the fourth measurement result and the signal quality of the fourth reference signal in the fourth measurement result are greater than or equal to the second threshold, and neither the first beam corresponding to the second reference signal nor the second beam corresponding to the fourth reference signal belongs to the first beam set, the network device determines that the terminal device is to maintain the current serving beam. Optionally, the signal quality of the fourth reference signal is greater than the signal quality of the second reference signal.

The embodiment shown in FIG. 9 shows a process in which the terminal device determines, based on the foregoing process of 501 to 508, whether to initiate the beam switching, and a process in which the network device determines, based on the foregoing process of 501 to 508, whether the terminal device is to initiate the beam switching. Both the terminal device and the network device determine, based on the second measurement result and the fourth measurement result, whether to initiate the beam switching. Because the second measurement result is obtained by performing second-type measurement on the second reference signal based on a first measurement result by the terminal device, and the fourth measurement result is obtained by performing second-type measurement on the fourth reference signal based on a third measurement result by the terminal device, it can be learned that reliability of the measurement result reported by the terminal device is high, and a case in which the measurement result reported by the terminal device cannot truly reflect an overall status of a link due to impact caused by a short-time link quality fluctuation is avoided. This helps the terminal device use an appropriate beam. That is, reliability of triggering the terminal device to perform beam switching is improved, to improve communication quality of the terminal device. The terminal device triggers, based on the first-type measurement on a plurality of beams, reporting of measurement results obtained through the second-type measurement corresponding to the plurality of beams, to select a beam with high signal quality from the plurality of beams as a beam to which the terminal device is to switch, to further improve the communication quality of the terminal device. Both the terminal device and the network device determine, based on the second measurement result and the fourth measurement result, whether to initiate the beam switching, and the network device does not need to indicate a beam to the terminal device, so that signaling overheads and latency overheads are reduced. The terminal device does not need to send, to the network device, a beam to which the terminal device intends to switch, so that a case in which a network always reserves an uplink resource used by the terminal device to report the beam to which the terminal device intends to switch is avoided. Uplink resource overheads are reduced, and system performance is improved.

It should be noted that there is no fixed execution sequence between 901 to 903 and 904 to 906. 901 to 903 may be first performed, and then 904 to 906 are performed; 904 to 906 may be first performed, and then 901 to 903 are performed; or 901 to 903 and 904 to 906 are simultaneously performed based on a case. This is not specifically limited in this application.

FIG. 10 is a diagram of another embodiment of a communication method according to an embodiment of this application. Refer to FIG. 10. The method includes the following steps.

1001: A network device sends a second feedback message or second indication information to a terminal device.

In a possible implementation, the second feedback message is a second acknowledgment message, and the second acknowledgment message indicates the terminal device to switch to a beam with higher signal quality in a first beam corresponding to a second reference signal and a second beam corresponding to a fourth reference signal.

For example, if signal quality of the second reference signal in a second measurement result is greater than or equal to a second threshold, and the signal quality of the second reference signal in the second measurement result is greater than signal quality of the fourth reference signal in a fourth measurement result, the network device may send the second acknowledgment message to the terminal device. After the terminal device receives the second acknowledgment message, the terminal device may switch to the first beam. The network device determines that the terminal device is to switch to the first beam. After preset duration, the network device and the terminal device may perform communication transmission by using the first beam.

For example, if signal quality of the fourth reference signal in a fourth measurement result is greater than or equal to a second threshold, and the signal quality of the fourth reference signal in the fourth measurement result is greater than signal quality of the second reference signal in a second measurement result, the network device may send the second acknowledgment message to the terminal device. After the terminal device receives the second acknowledgment message, the terminal device may switch to the second beam. The network device determines that the terminal device is to switch to the second beam. After preset duration, the network device and the terminal device may perform communication transmission by using the second beam.

In another possible implementation, the second indication information indicates the terminal device to switch to a first beam corresponding to a second reference signal.

For example, if signal quality of the second reference signal in a second measurement result is greater than or equal to a second threshold, and the signal quality of the second reference signal in the second measurement result is greater than signal quality of a fourth reference signal in a fourth measurement result, the network device may send the second indication information to the terminal device, where the second indication information indicates the terminal device to switch to the first beam corresponding to the second reference signal. The terminal device may switch to the first beam. The network device may determine that the terminal device is to switch to the first beam. After preset duration, the network device and the terminal device may perform communication transmission by using the first beam.

For example, if signal quality of a fourth reference signal in a fourth measurement result is greater than or equal to a second threshold, and the signal quality of the fourth reference signal in the fourth measurement result is greater than signal quality of the second reference signal in a second measurement result, the network device may send the second indication information to the terminal device, where the second indication information indicates the terminal device to switch to a second beam corresponding to the fourth reference signal. After the terminal device receives the second indication information, the terminal device may switch to the second beam. The network device determines that the terminal device is to switch to the second beam. After preset duration, the network device and the terminal device may perform communication transmission by using the second beam.

In another possible implementation, the second feedback message is a second non-acknowledgment message, and the second non-acknowledgment message indicates the terminal device to maintain a current serving beam, or indicates the terminal device not to perform beam switching.

For example, if both signal quality of a second reference signal in a second measurement result and signal quality of a fourth reference signal in a fourth measurement result are less than a second threshold, the network device may send the second non-acknowledgment message to the terminal device. After the terminal device receives the second non-acknowledgment message, the terminal device maintains the current serving beam.

In another possible implementation, the second indication information is used by the terminal device to maintain a current serving beam or not to perform beam switching.

For example, if both signal quality of a second reference signal in a second measurement result and signal quality of a fourth reference signal in a fourth measurement result are less than a second threshold, the network device may indicate the terminal device to maintain the current serving beam or indicate the terminal device not to perform beam switching. In this case, after the terminal device receives the second indication information, the terminal device may maintain the current serving beam.

1002: If the signal quality of the second reference signal in the second measurement result is greater than or equal to the second threshold, and the signal quality of the second reference signal in the second measurement result is greater than the signal quality of the fourth reference signal in the fourth measurement result, the second feedback message is the second acknowledgment message, or the second indication information indicates the terminal device to switch to the first beam corresponding to the second reference signal; and the terminal device switches to the first beam.

In a case of 1002, the terminal device switches to the first beam. After preset duration after the terminal device receives the second feedback message or the second indication information, the terminal device may perform communication transmission with the network device by using the first beam. Within the preset duration, the terminal device may still perform communication transmission with the network device by using the current serving beam of the terminal device.

1003: If the signal quality of the fourth reference signal in the fourth measurement result is greater than or equal to the second threshold, and the signal quality of the second reference signal in the second measurement result is less than the signal quality of the fourth reference signal in the fourth measurement result, the second feedback message is the second acknowledgment message, or the second indication information indicates the terminal device to switch to the second beam corresponding to the fourth reference signal; and the terminal device switches to the second beam.

In a case of 1003, the terminal device switches to the second beam. After preset duration after the terminal device receives the second feedback message or the second indication information, the terminal device may perform communication transmission with the network device by using the second beam. Within the preset duration, the terminal device may still perform communication transmission with the network device by using the current serving beam of the terminal device.

1004: If both the signal quality of the second reference signal in the second measurement result and the signal quality of the fourth reference signal in the fourth measurement result are less than the second threshold, the second feedback message is the second non-acknowledgment message, or the second indication information indicates the terminal device to maintain the current serving beam or not to perform beam switching; and the terminal device maintains the current serving beam.

Optionally, the terminal device continues to perform first-type measurement on a first reference signal and a third reference signal.

In a case of 1004, the terminal device still performs communication transmission with the network device by using the current serving beam of the terminal device.

The embodiment shown in FIG. 10 shows that based on the foregoing process of 501 to 508, the network device determines the second feedback message or the second indication information based on the second measurement result and the fourth measurement result, and sends the second feedback message or the second indication information to the terminal device. Because the second measurement result is obtained by performing second-type measurement on the second reference signal based on a first measurement result by the terminal device, and the fourth measurement result is obtained by performing second-type measurement on the fourth reference signal based on a third measurement result by the terminal device, it can be learned that reliability of the measurement result reported by the terminal device is high, and a case in which the measurement result reported by the terminal device cannot truly reflect an overall status of a link due to impact caused by a short-time link quality fluctuation is avoided. In this way, an appropriate beam is determined for the terminal device. That is, reliability of triggering the terminal device to perform beam switching is improved, to improve communication quality of the terminal device. The terminal device triggers, based on the first-type measurement on a plurality of beams, reporting of measurement results obtained through the second-type measurement corresponding to the plurality of beams, to select a beam with high signal quality from the plurality of beams as a beam to which the terminal device is to switch, to improve the communication quality of the terminal device. The terminal device does not need to send, to the network device, a beam to which the terminal device intends to switch, so that a case in which a network always reserves an uplink resource used by the terminal device to report the beam to which the terminal device intends to switch is avoided. Uplink resource overheads are reduced, and system performance is improved.

FIG. 11 is a diagram of an embodiment of a beam set update method according to an embodiment of this application. Refer to FIG. 11. The beam set update method includes the following steps.

1101: A communication device determines a first beam set.

The first beam set includes a beam used by a terminal device to initiate beam switching. The first beam set may also be referred to as a candidate beam set or a beam switching set. Specifically, a name of the first beam set is not limited in this application.

In a possible implementation, the beam in the first beam set may be considered as a beam that the terminal device reports, that is, switches. For example, if the terminal device reports a measurement result of a beam 1, it indicates that the terminal device 1 switches to the beam 1. The terminal device may perform communication by using the beam 1.

The communication device is a network device or the terminal device. For example, the communication device is the terminal device. 1101 specifically includes: The terminal device receives third configuration information from a network device, where the third configuration information is for configuring the first beam set for the terminal device. Optionally, the third configuration information is carried in an RRC message.

1102: The communication device updates the first beam set according to a first rule.

Specifically, the communication device may update the first beam set based on one or more TCI-states activated by the network device for the terminal device and/or a fifth measurement result.

Each of the one or more TCI-states corresponds to one or more beams. For detailed descriptions of the TCI-state, refer to the foregoing related descriptions.

The fifth measurement result includes a measurement result of one or more reference signals that is obtained through measurement and reported by the terminal device. Each of the one or more reference signals corresponds to one TCI-state, and each TCI-state corresponds to one or more beams.

The following describes several possible implementations in which the communication device updates the first beam set based on the one or more TCI-states activated by the network device for the terminal device and/or the fifth measurement result.
1. The communication device updates the beam in the first beam set to a beam corresponding to the one or more TCI-states activated by the network device for the terminal device, to obtain an updated first beam set.

Specifically, the network device may send third indication information to the terminal device, where the first indication information is for activating the one or more TCI-states for the terminal device, and each TCI-state corresponds to the one or more beams. For the detailed descriptions of the TCI-state, refer to the foregoing related descriptions. For example, if eight TCI-states are activated in the first indication information, the communication device uses beams corresponding to the eight TCI-states as beams in the updated first beam set. Optionally, the first indication information is carried in a MAC CE.

Optionally, the one or more TCI-states do not include a TCI-state that has been indicated as corresponding to a serving beam of the terminal device.

After the terminal device successfully receives the third indication information, the terminal device may feed back a third acknowledgment message to the network device, to indicate that the terminal device successfully receives the third indication information. For example, the third acknowledgment message is a third ACK.

Optionally, after first preset duration from a moment at which the terminal device sends a first determining message, a third beam deleted by the terminal device from the first beam set is not used by the terminal device to initiate the beam switching; and within the first preset duration from the moment at which the terminal device sends the first determining message, the third beam may still be used by the terminal device to initiate the beam switching. For example, the first preset duration is 3 ms (milliseconds).

2. The communication device adds, to the first beam set, a beam corresponding to the one or more TCI-states activated by the network device for the terminal device, to obtain an updated first beam set.

In this implementation, the communication device adds the beam corresponding to the one or more TCI-states to the first beam set, to update the first beam set.

3. The communication device determines X TCI-states based on the fifth measurement result, and updates the beam in the first beam set to beams corresponding to the X TCI-states, to obtain an updated first beam set.

The X TCI-states are TCI-states corresponding to the first X reference signals with highest signal quality in the fifth measurement result, and X is an integer greater than or equal to 1. Each of the X TCI-states corresponds to one or more beams.

The following describes the following two possible meanings of a TCI-state corresponding to a reference signal.
1. The reference signal is a reference signal that has QCL TypeD in a TCI-state configuration.

It can be learned from the foregoing descriptions of the TCI-state that the TCI-state includes configuration information of the reference signal, and the configuration information includes QCL TypeD of the reference signal. The TCI-state corresponding to the reference signal may be understood as that the reference signal is a reference signal in the TCI-state configuration.

2. The reference signal and a reference signal in a TCI-state configuration have same QCL TypeD.

It can be learned from the foregoing descriptions of the TCI-state that the TCI-state includes configuration information of the reference signal, and the configuration information includes QCL TypeD of the reference signal. The reference signal and the reference signal in the TCI-state configuration have same QCL TypeD.

Optionally, the updated first beam set includes a beam corresponding to a fifth reference signal. If none of measurement results reported by the terminal device Y consecutive times include a measurement result of the beam corresponding to the fifth reference signal anymore, the communication device determines that the beam corresponding to the fifth reference signal is not used by the terminal device to initiate the beam switching, where Y is an integer greater than or equal to 1.

A measurement result of a beam with high signal quality is usually reported in the reported measurement result. However, none of measurement results reported by the terminal device Y consecutive times include the measurement result of the beam corresponding to the fifth reference signal. It may be considered that, for the terminal device, signal quality of the beam corresponding to the fifth reference signal is low, and the beam corresponding to the fifth reference signal is not applicable to the beam switching performed by the terminal device.

4. The communication device uses a union set of a beam corresponding to the one or more TCI-states activated by the network device for the terminal device and beams corresponding to X TCI-states as beams included in an updated first beam set; or the communication device adds, to the first beam set, a union set of a beam corresponding to the one or more TCI-states activated by the network device for the terminal device and beams corresponding to X TCI-states, to obtain an updated first beam set.

For the one or more TCI-states, refer to the related descriptions in the foregoing implementation 1. For the X TCI-states, refer to the related descriptions in the foregoing implementation 2. For related descriptions of whether a beam may be used by the terminal device to initiate the beam switching, refer to the related descriptions in the foregoing implementation 1 and implementation 2.

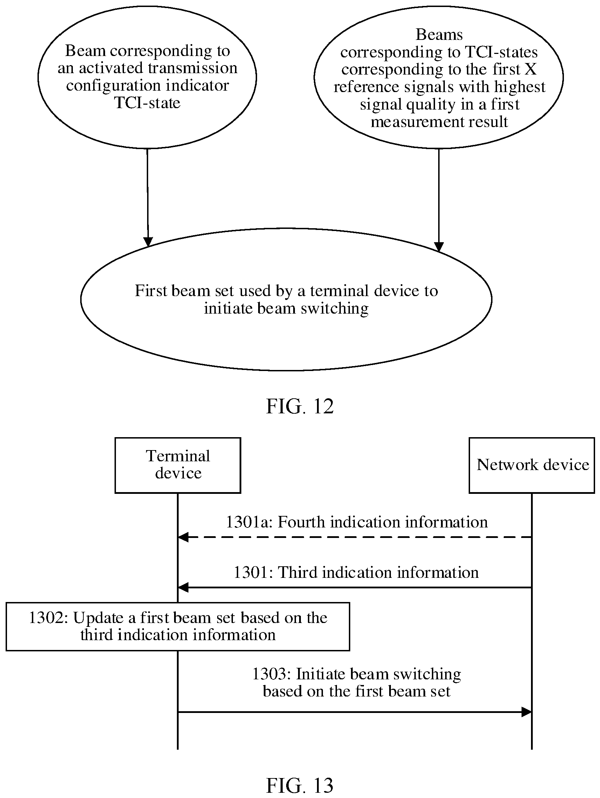

For example, as shown in FIG. 12, the communication device uses the union set of the beam corresponding to the one or more TCI-states activated by the network device for the terminal device and the beams corresponding to the X TCI-states as the beams included in the updated first beam set.

It should be noted that, optionally, the communication device may alternatively use an intersection set of the beam corresponding to the one or more TCI-states activated by the network device for the terminal device and the beams corresponding to the X TCI-states as the beams included in the updated first beam set. Alternatively, the communication device adds, to the first beam set, an intersection set of the beam corresponding to the one or more TCI-states activated by the network device for the terminal device and the beams corresponding to the X TCI-states, to obtain the updated first beam set. This is not specifically limited in this application.

It can be learned that, a mechanism for updating the first beam set is introduced in the technical solution in this application, so that signaling overheads for configuring the first beam set by the network device for the terminal device are reduced. Generally, the network device configures the first beam set for the terminal device by using an RRC message. However, long time is needed for the network device to update the first beam set by using the RRC message. Consequently, latency of updating the first beam set is long. However, using the manner of updating the first beam set shown in this application helps quickly update the first beam set and improve real-time performance of the beam in the first beam set.

The following describes the technical solution in this application in a case in which a communication device is a terminal device. FIG. 13 is a diagram of another embodiment of a beam set update method according to an embodiment of this application. The method includes the following steps.

1301: A network device sends third indication information to a terminal device. Accordingly, the terminal device receives the third indication information from the network device.

For related descriptions of the third indication information, refer to the related descriptions in the embodiment shown in FIG. 12. Details are not described herein again.

Optionally, the embodiment shown in FIG. 13 further includes 1301a, and 1301a may be performed before 1302.

1301a: The network device sends fourth indication information to the terminal device. Accordingly, the terminal device receives the fourth indication information from the network device.

The fourth indication information indicates the terminal device to enable a function of updating a first beam set by using a TCI-state activated by the network device for the terminal device.

It should be noted that the network device may alternatively indicate, based on indication information, the terminal device to disable the function. After the function is disabled, a beam corresponding to the activated TCI-state cannot be used by the terminal device to initiate beam switching.

For the third indication information, refer to the related descriptions in 1201 in the embodiment shown in FIG. 12.

1302: The terminal device updates the first beam set based on the third indication information.

Optionally, the terminal device updates the first beam set based on the third indication information and a fifth measurement result.

1302 is similar to a process in which the communication device updates the first beam set in the embodiment shown in FIG. 12. For details, refer to the related descriptions in the embodiment shown in FIG. 12.

1303: The terminal device initiates the beam switching based on the first beam set.

A communication apparatus provided in embodiments of this application is described below.

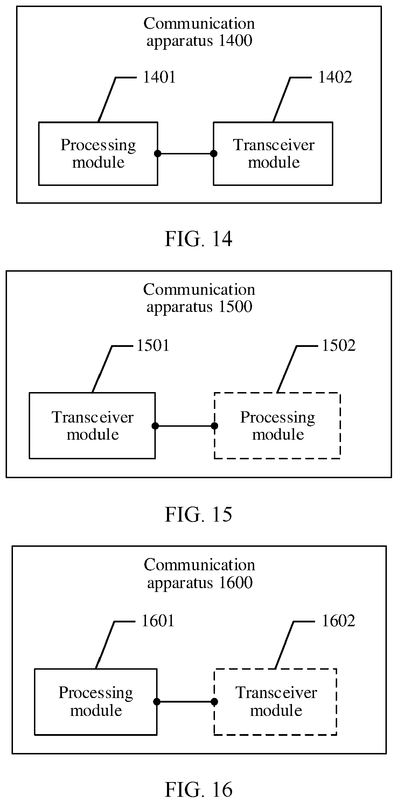

FIG. 14 is a diagram of a structure of a communication apparatus according to an embodiment of this application. Refer to FIG. 14. The communication apparatus may be configured to perform the processes performed by the terminal device in the embodiments shown in FIG. 5 and FIG. 7 to FIG. 10. For details, refer to the related descriptions in the foregoing method embodiments.

The communication apparatus 1400 includes a processing module 1401 and a transceiver module 1402. The transceiver module 1402 may implement a corresponding communication function, and the processing module 1401 is configured to perform data processing. The transceiver module 1402 may also be referred to as a communication interface or a communication module.

Optionally, the communication apparatus 1400 may further include a storage module. The storage module may be configured to store instructions and/or data. The processing module 1401 may read the instructions and/or the data in the storage module, so that the communication apparatus implements the foregoing method embodiments.

The communication apparatus module 1400 may be configured to perform the actions performed by the terminal device in the foregoing method embodiments. The communication apparatus 1400 may be a terminal device or a part that may be configured in the terminal device. The processing module 1401 is configured to perform processing-related operations on a terminal device side in the foregoing method embodiments. Optionally, the transceiver module 1402 is configured to perform receiving-related operations on the terminal device side in the foregoing method embodiments.

Optionally, the transceiver module 1402 may include a sending module and a receiving module. The sending module is configured to perform the sending operations in the foregoing method embodiments. The receiving module is configured to perform the receiving operations in the foregoing method embodiments.

It should be noted that the communication apparatus 1400 may include a sending module but not include a receiving module. Alternatively, the communication apparatus 1400 may include a receiving module but not include a sending module. This may be specifically determined depending on whether the foregoing solutions performed by the communication apparatus 1400 include a sending action and a receiving action.

The processing module 1401 is configured to perform first-type measurement on a first reference signal, to obtain a first measurement result;
the transceiver module 1402 is configured to send the first measurement result to a network device;
the processing module 1401 is further configured to perform second-type measurement on a second reference signal based on the first measurement result, to obtain a second measurement result; and
the transceiver module 1402 is further configured to send the second measurement result to the network device.

In a possible implementation, the first measurement result includes measurement results of the first reference signal that are reported by the communication apparatus 1400 N consecutive times, and N is an integer greater than or equal to 1; and the processing module 1401 is specifically configured to:
if all signal quality of the first reference signal in the measurement results of the first reference signal that are reported by the communication apparatus 1400 N consecutive times is greater than or equal to a first threshold, perform second-type measurement on the second reference signal, to obtain the second measurement result; or
if all signal quality of the first reference signal in the measurement results of the first reference signal that are reported by the communication apparatus 1400 N consecutive times is greater than or equal to signal quality of a reference signal corresponding to a current serving beam of the communication apparatus 1400, perform second-type measurement on the second reference signal, to obtain the second measurement result.

In another possible implementation, the processing module 1401 is further configured to:
if signal quality of the second reference signal in the second measurement result is greater than or equal to a second threshold, switch to a first beam; or
if signal quality of the second reference signal in the second measurement result is less than a second threshold, maintain the current serving beam.

In another possible implementation, the transceiver module 1402 is further configured to:
receive a first feedback message from the network device.

The processing module 1401 is further configured to:
if the first feedback message is a first acknowledgment message, switch to a first beam corresponding to the second reference signal; or
if the first feedback message is a first non-acknowledgment message, maintain the current serving beam.

In another possible implementation, the transceiver module 1402 is further configured to: if signal quality of the second reference signal in the second measurement result is greater than or equal to a second threshold, receive a first acknowledgment message from the network device; and the processing module 1401 is further configured to switch to a first beam corresponding to the second reference signal; or
the transceiver module 1402 is further configured to: if signal quality of the second reference signal in the second measurement result is less than a second threshold, receive a first non-acknowledgment message from the network device; and the processing module 1401 is further configured to maintain the current serving beam.

In another possible implementation, the transceiver module 1402 is further configured to:
receive first indication information from the network device.

The processing module 1401 is further configured to:
if the first indication information indicates the communication apparatus 1400 to switch to a first beam corresponding to the second reference signal, switch to the first beam; or
if the first indication information indicates the communication apparatus 1400 to maintain the current serving beam, maintain the current serving beam.

In another possible implementation, the transceiver module 1402 is further configured to: if signal quality of the second reference signal in the second measurement result is greater than or equal to a second threshold, receive first indication information from the network device, where the first indication information indicates the communication apparatus 1400 to switch to a first beam corresponding to the second reference signal; and the processing module 1401 is further configured to switch to the first beam; or
the transceiver module 1402 is further configured to: if signal quality of the second reference signal in the second measurement result is less than a second threshold, receive first indication information from the network device, where the first indication information indicates the communication apparatus 1400 to maintain the current serving beam; and the processing module 1401 is further configured to maintain the current serving beam.

In another possible implementation, if the communication apparatus 1400 maintains the current serving beam, the processing module 1401 is further configured to:
continue to perform first-type measurement on the first reference signal.

In another possible implementation, the processing module 1401 is further configured to:
perform first-type measurement on a third reference signal, to obtain a third measurement result.

The transceiver module 1402 is further configured to:
send the third measurement result to the network device; and
perform second-type measurement on a fourth reference signal based on the third measurement result, to obtain a fourth measurement result.

The transceiver module 1402 is further configured to:
send the fourth measurement result to the network device.

In another possible implementation, the processing module 1401 is further configured to:
if a first condition is satisfied, switch to a first beam corresponding to the second reference signal, where the first condition includes: Signal quality of the second reference signal in the second measurement result is greater than or equal to a second threshold, and the signal quality of the second reference signal is greater than signal quality of the fourth reference signal in the fourth measurement result;
if a second condition is satisfied, switch to a second beam corresponding to the fourth reference signal, where the second condition includes: Signal quality of the fourth reference signal in the fourth measurement result is greater than or equal to a second threshold, and the signal quality of the fourth reference signal is greater than signal quality of the second reference signal; or
if a third condition is satisfied, maintain the current serving beam, where the third condition includes: Both signal quality of the second reference signal in the second measurement result and signal quality of the fourth reference signal in the fourth measurement result are less than a second threshold.

In another possible implementation, the transceiver module 1402 is further configured to:
receive a second feedback message from the network device.

The processing module 1401 is further configured to:
if the second feedback message is a second acknowledgment message, and signal quality of the second reference signal in the second measurement result is greater than signal quality of the fourth reference signal in the fourth measurement result, switch to a first beam corresponding to the second reference signal;
if the second feedback message is a second acknowledgment message, and signal quality of the fourth reference signal in the fourth measurement result is greater than signal quality of the second reference signal in the second measurement result, switch to a second beam corresponding to the fourth reference signal; or
if the second feedback message is a second non-acknowledgment message, maintain the current serving beam.

In another possible implementation, the transceiver module 1402 is further configured to:
receive second indication information from the network device.

The processing module 1401 is further configured to:
if the second indication information indicates the communication apparatus 1400 to switch to a first beam corresponding to the second reference signal, switch to the first beam;
if the second indication information indicates the communication apparatus 1400 to switch to a second beam corresponding to the fourth reference signal, switch to the second beam; or
if the second indication information indicates the communication apparatus 1400 to maintain the current serving beam, maintain the current serving beam.

In another possible implementation, the transceiver module 1402 is further configured to:
if signal quality of the second reference signal in the second measurement result is greater than or equal to a second threshold, and the signal quality of the second reference signal is greater than signal quality of the fourth reference signal in the fourth measurement result, receive a second acknowledgment message from the network device, where the second acknowledgment message indicates the communication apparatus 1400 to switch to a first beam corresponding to the second reference signal; and the processing module 1401 is further configured to switch to the first beam corresponding to the second reference signal;
the transceiver module 1402 is further configured to: if signal quality of the fourth reference signal in the fourth measurement result is greater than or equal to a second threshold, and the signal quality of the fourth reference signal is greater than signal quality of the second reference signal in the second measurement result, receive a second acknowledgment message from the network device, where the second acknowledgment message indicates the communication apparatus 1400 to switch to a second beam corresponding to the fourth reference signal; and the processing module 1401 is further configured to switch to the second beam corresponding to the fourth reference signal; or
the transceiver module 1402 is further configured to: if both signal quality of the second reference signal in the second measurement result and signal quality of the fourth reference signal in the fourth measurement result are less than a second threshold, receive a second non-acknowledgment message from the network device, where the second non-acknowledgment message indicates the communication apparatus 1400 to maintain the current serving beam; and the processing module 1401 is further configured to maintain the current serving beam.

In another possible implementation, the transceiver module 1402 is further configured to: if signal quality of the second reference signal in the second measurement result is greater than or equal to a second threshold, and the signal quality of the second reference signal is greater than signal quality corresponding to the fourth reference signal in the fourth measurement result, receive second indication information from the network device, where the second indication information indicates the communication apparatus 1400 to switch to a first beam corresponding to the second reference signal; and the processing module 1401 is further configured to switch to the first beam;
the transceiver module 1402 is further configured to: if signal quality of the fourth reference signal in the fourth measurement result is greater than or equal to a second threshold, and the signal quality of the fourth reference signal is greater than signal quality of the second reference signal in the second measurement result, receive second indication information from the network device, where the second indication information indicates the communication apparatus 1400 to switch to a second beam corresponding to the fourth reference signal; and the processing module 1401 is further configured to switch to the second beam; or
the transceiver module 1402 is further configured to: if both signal quality of the second reference signal in the second measurement result and signal quality of the fourth reference signal in the fourth measurement result are less than a second threshold, receive second indication information from the network device, where the second indication information indicates the communication apparatus 1400 to maintain the current serving beam; and the processing module 1401 is further configured to maintain the current serving beam.

In another possible implementation, if the communication apparatus 1400 maintains the current serving beam, the processing module 1401 is further configured to:
continue to perform first-type measurement on the first reference signal and the third reference signal.

In another possible implementation, the transceiver module 1402 is further configured to:
receive first configuration information from the network device, where the first configuration information indicates the communication apparatus 1400 to perform second-type measurement on the second reference signal based on the first measurement result and report a measurement result, or the first configuration information indicates the communication apparatus 1400 to perform second-type measurement on the second reference signal based on the first measurement result.

In another possible implementation, the first-type measurement includes periodic measurement performed by the communication apparatus 1400 on a reference signal, and the second-type measurement includes semi-persistent measurement performed by the communication apparatus 1400 on a reference signal resource;
the first-type measurement includes periodic measurement performed by the communication apparatus 1400 on a reference signal, and the second-type measurement includes aperiodic measurement performed by the communication apparatus 1400 on a reference signal; or
the first-type measurement includes semi-persistent measurement performed by the communication apparatus 1400 on a reference signal, and the second-type measurement includes aperiodic measurement performed by the communication apparatus 1400 on a reference signal.

In another possible implementation, the transceiver module 1402 is further configured to:
receive second configuration information from the network device, where the second configuration information indicates the communication apparatus 1400 to perform first-type measurement on the first reference signal.

In another possible implementation, the processing module 1401 is specifically configured to:
if the signal quality of the second reference signal in the second measurement result is greater than or equal to the second threshold, and the first beam corresponding to the second reference signal belongs to a first beam set, switch to the first beam, where the first beam set includes a beam used by the communication apparatus 1400 to initiate beam switching.

In another possible implementation, the processing module 1401 is further configured to:
update the first beam set according to a first rule.

In another possible implementation, the processing module 1401 is specifically configured to:
update the beam in the first beam set to a beam corresponding to one or more TCI-states activated by the network device for the communication apparatus 1400, to obtain an updated first beam set.

In another possible implementation, the transceiver module 1402 is further configured to:
receive third indication information from the network device, where the third indication information indicates the one or more TCI-states activated for the communication apparatus 1400; and
send a third acknowledgment message to the network device, where the third acknowledgment message indicates that the communication apparatus 1400 successfully receives the third indication information.

In another possible implementation, after first preset duration from a moment at which the communication apparatus 1400 sends the third determining message, a third beam deleted by the communication apparatus 1400 from the first beam set is not used by the communication apparatus 1400 to initiate the beam switching; and
within the first preset duration from the moment at which the communication apparatus 1400 sends the third determining message, the third beam may still be used by the communication apparatus 1400 to initiate the beam switching.

In another possible implementation, the transceiver module 1402 is further configured to:
receive fourth indication information from the network device, where the fourth indication information indicates the communication apparatus 1400 to enable a function of updating the first beam set by using the TCI-state activated by the network device for the communication apparatus 1400.

In another possible implementation, the processing module 1401 is specifically configured to:
determine X TCI-states based on a fifth measurement result, where the fifth measurement result includes a measurement result of one or more reference signal resources that is obtained through measurement and reported by the communication apparatus 1400, each of the one or more reference signal resources corresponds to one TCI-state, the X TCI-states are TCI-states corresponding to the first X reference signal resources with highest signal quality in the fifth measurement result, and X is an integer greater than or equal to 1; and update the beam in the first beam set to beams corresponding to the X TCI-states, to obtain an updated first beam set.

In another possible implementation, the updated first beam set includes a beam corresponding to a fifth reference signal, and the processing module 1401 is further configured to:
if measurement results reported by the communication apparatus 1400 Y consecutive times do not include a measurement result of the beam corresponding to the fifth reference signal, determine that the beam corresponding to the fifth reference signal is not used by the communication apparatus 1400 to initiate the beam switching, where Y is an integer greater than or equal to 1.

It should be understood that a specific process in which the modules perform the foregoing corresponding processes has been described in detail in the foregoing method embodiments. For brevity, details are not described herein again.

The processing module 1401 in the foregoing embodiments may be implemented by at least one processor or processor-related circuit. The transceiver module 1402 may be implemented by a transceiver or a transceiver-related circuit. The transceiver module 1402 may also be referred to as the communication module or the communication interface. The storage module may be implemented by at least one memory.

Optionally, the communication apparatus shown in FIG. 14 may be further configured to perform the following solution.

The processing module 1401 is configured to: perform first-type measurement on a first reference signal, to obtain a first measurement result; and perform second-type measurement on a second reference signal based on the first measurement result, to obtain a second measurement result; and
the transceiver module 1402 is configured to send the second measurement result to a network device.

In a possible implementation, the first measurement result includes measurement results of the first reference signal that are obtained by the communication apparatus 1400 through N consecutive times of measurement, and N is an integer greater than or equal to 1; and the processing module 1401 is specifically configured to:
if all signal quality of the first reference signal in the measurement results of the first reference signal that are obtained by the communication apparatus 1400 through the N consecutive times of measurement is greater than or equal to a first threshold, perform second-type measurement on the second reference signal, to obtain the second measurement result; or
if all signal quality of the first reference signal in the measurement results of the first reference signal that are obtained by the communication apparatus 1400 through the N consecutive times of measurement is greater than or equal to signal quality of a reference signal corresponding to a current serving beam of the communication apparatus 1400, perform second-type measurement on the second reference signal, to obtain the second measurement result.

Another communication apparatus provided in embodiments of this application is described below.

FIG. 15 is a diagram of a structure of a communication apparatus according to an embodiment of this application. Refer to FIG. 15. The communication apparatus may be configured to perform the processes performed by the network device in the embodiments shown in FIG. 5 and FIG. 7 to FIG. 10. For details, refer to the related descriptions in the foregoing method embodiments.

The communication apparatus 1500 includes a transceiver module 1501. Optionally, the communication apparatus 1500 further includes a processing module 1502. The transceiver module 1501 may implement a corresponding communication function, and the processing module 1502 is configured to perform data processing. The transceiver module 1501 may also be referred to as a communication interface or a communication module.

Optionally, the communication apparatus 1500 may further include a storage module. The storage module may be configured to store instructions and/or data. The processing module 1502 may read the instructions and/or the data in the storage module, so that the communication apparatus implements the foregoing method embodiments.

The communication apparatus 1500 may be configured to perform the actions performed by the network device in the foregoing method embodiments. The communication apparatus 1500 may be a network device or a part that may be configured in the network device. The transceiver module 1501 is configured to perform receiving-related operations on a network device side in the foregoing method embodiments, and the processing module 1502 is configured to perform processing-related operations on the network device side in the foregoing method embodiments.

Optionally, the transceiver module 1501 may include a sending module and a receiving module. The sending module is configured to perform the sending operations in the foregoing method embodiments. The receiving module is configured to perform the receiving operations in the foregoing method embodiments.

It should be noted that the communication apparatus 1500 may include a sending module but not include a receiving module. Alternatively, the communication apparatus 1500 may include a receiving module but not include a sending module. This may be specifically determined depending on whether the foregoing solutions performed by the communication apparatus 1500 include a sending action and a receiving action.

The transceiver module 1501 is configured to: receive a first measurement result from a terminal device, where the first measurement result is a measurement result obtained by performing first-type measurement on a first reference signal by the terminal device; and receive a second measurement result from the terminal device, where the second measurement result is a measurement result obtained by performing second-type measurement on a second reference signal based on the first measurement result by the terminal device.

In a possible implementation, the transceiver module 1501 is further configured to:
send first configuration information to the terminal device, where the first configuration information indicates the terminal device to perform second-type measurement on the second reference signal based on the first measurement result and report the measurement result.

In another possible implementation, the first configuration information indicates: if all signal quality of the first reference signal in measurement results of the first reference signal that are reported by the terminal device N consecutive times is greater than or equal to a first threshold, the terminal device triggers the second-type measurement on the second reference signal and reporting of the measurement result, where N is an integer greater than or equal to 1; or
the first configuration information indicates: if all signal quality of the first reference signal in measurement results of the first reference signal that are reported by the terminal device N consecutive times is greater than or equal to signal quality of a reference signal corresponding to a current serving beam of the terminal device, the terminal device triggers the second-type measurement on the second reference signal and reporting of the measurement result.

In another possible implementation, the communication apparatus further includes a processing module 1502, where
the processing module 1502 is configured to: if signal quality of the second reference signal in the second measurement result is greater than or equal to a second threshold, determine that the terminal device is to switch to a first beam corresponding to the second reference signal; or if signal quality of the second reference signal in the second measurement result is less than a second threshold, determine that the terminal device is to maintain the current serving beam.

In another possible implementation, the transceiver module 1501 is further configured to:
send a first feedback message to the terminal device, where
the first feedback message is a first acknowledgment message, and the first acknowledgment message indicates the terminal device to switch to a first beam; or the first feedback message is a first non-acknowledgment message, and the first non-acknowledgment message indicates the terminal device to maintain the current serving beam.

In another possible implementation, the transceiver module 1501 is further configured to:
if signal quality of the second reference signal in the second measurement result is greater than or equal to a second threshold, send a first acknowledgment message to the terminal device, where the first acknowledgment message indicates the terminal device to switch to a first beam corresponding to the second reference signal; or
if signal quality of the second reference signal in the second measurement result is less than a second threshold, send a first non-acknowledgment message to the terminal device, where the first non-acknowledgment message indicates the terminal device to maintain the current serving beam.

In another possible implementation, the transceiver module 1501 is further configured to:
send first indication information to the terminal device, where
the first indication information indicates the terminal device to switch to a first beam corresponding to the second reference signal, or the first indication information indicates the terminal device to maintain the current serving beam or not to perform beam switching.

In another possible implementation, the transceiver module 1501 is further configured to:
if the signal quality of the second reference signal in the second measurement result is greater than or equal to a second threshold, send first indication information to the terminal device, where the first indication information indicates the terminal device to switch to a first beam corresponding to the second reference signal; or
if signal quality of the second reference signal in the second measurement result is less than a second threshold, send first indication information to the terminal device, where the first indication information indicates the terminal device to maintain the current serving beam or not to perform beam switching.

In another possible implementation, the transceiver module 1501 is further configured to:
receive a third measurement result from the terminal device, where the third measurement result is a measurement result obtained by performing first-type measurement on a third reference signal by the terminal device; and
receive a fourth measurement result from the terminal device, where the fourth measurement result is a measurement result obtained by performing second-type measurement on a fourth reference signal based on the third measurement result by the terminal device.

In another possible implementation, the processing module 1502 is further configured to:
if a first condition is satisfied, determine that the terminal device is to switch to a first beam corresponding to the second reference signal, where the first condition includes: Signal quality of the second reference signal in the second measurement result is greater than or equal to a second threshold, and the signal quality of the second reference signal is greater than signal quality of the fourth reference signal in the fourth measurement result;
if a second condition is satisfied, determine that the terminal device is to switch to a second beam corresponding to the fourth reference signal, where the second condition includes: Signal quality of the second reference signal in the fourth measurement result is greater than or equal to a second threshold, and the signal quality of the fourth reference signal is greater than signal quality of the second reference signal; or
if a third condition is satisfied, determine that the terminal device is to maintain the current serving beam, where the third condition includes: Both signal quality of the second reference signal in the second measurement result and signal quality of the fourth reference signal in the fourth measurement result are less than a second threshold.

In another possible implementation, the transceiver module 1501 is further configured to:
send a second feedback message to the terminal device, where
the second feedback message is a second acknowledgment message, the second acknowledgment message indicates the terminal device to switch to a beam with highest signal quality, and the beam with the highest signal quality is a beam with higher signal quality in a first beam corresponding to the second reference signal and a second beam corresponding to the fourth reference signal; or the second feedback message is a second non-acknowledgment message, and the second non-acknowledgment message indicates the terminal device to maintain the current serving beam.

In another possible implementation, the transceiver module 1501 is further configured to:
if signal quality of the second reference signal in the second measurement result is greater than or equal to a second threshold, and the signal quality of the second reference signal is greater than signal quality of the fourth reference signal in the fourth measurement result, send a second acknowledgment message to the terminal device, where the second acknowledgment message indicates the terminal device to switch to a first beam corresponding to the second reference signal;
if signal quality of the fourth reference signal in the fourth measurement result is greater than or equal to a second threshold, and the signal quality of the fourth reference signal is greater than signal quality of the second reference signal in the second measurement result, send a second acknowledgment message to the terminal device, where the second acknowledgment message indicates the terminal device to switch to a second beam corresponding to the fourth reference signal; or
if both signal quality of the second reference signal in the second measurement result and signal quality of the fourth reference signal in the fourth measurement result are less than a second threshold, send a second non-acknowledgment message to the terminal device, where the second non-acknowledgment message indicates the terminal device to maintain the current serving beam.

In another possible implementation, the transceiver module 1501 is further configured to:
send second indication information to the terminal device, where
the second indication information indicates the terminal device to switch to a first beam corresponding to the second reference signal, the second indication information indicates the terminal device to switch to a second beam corresponding to the fourth reference signal, or the second indication information indicates the terminal device to maintain the current serving beam.

In another possible implementation, the transceiver module 1501 is further configured to:
if signal quality of the second reference signal in the second measurement result is greater than or equal to a second threshold, and the signal quality of the second reference signal is greater than signal quality of the fourth reference signal in the fourth measurement result, send second indication information to the terminal device, where the second indication information indicates the terminal device to switch to a first beam corresponding to the second reference signal;
if signal quality of the fourth reference signal in the fourth measurement result is greater than or equal to a second threshold, and the signal quality of the fourth reference signal is greater than signal quality of the second reference signal in the second measurement result, send second indication information to the terminal device, where the second indication information indicates the terminal device to switch to a second beam corresponding to the fourth reference signal; or
if both signal quality of the second reference signal in the second measurement result and signal quality of the fourth reference signal in the fourth measurement result are less than a second threshold, send second indication information to the terminal device, where the second indication information indicates the terminal device to maintain the current serving beam.

In another possible implementation, the first-type measurement includes periodic measurement performed by the terminal device on a reference signal, and the second-type measurement includes semi-persistent measurement performed by the terminal device on a reference signal resource;
the first-type measurement includes periodic measurement performed by the terminal device on a reference signal, and the second-type measurement includes aperiodic measurement performed by the terminal device on a reference signal; or
the first-type measurement includes semi-persistent measurement performed by the terminal device on a reference signal, and the second-type measurement includes aperiodic measurement performed by the terminal device on a reference signal.

In another possible implementation, the transceiver module 1501 is further configured to:
send second configuration information to the terminal device, where the second configuration information indicates the terminal device to perform first-type measurement on the first reference signal.

In another possible implementation, the processing module 1502 is specifically configured to:
if the signal quality of the second reference signal in the second measurement result is greater than or equal to the second threshold, and the first beam belongs to a first beam set, determine that the terminal device is to switches to the first beam, where the first beam set includes a beam used by the terminal device to initiate beam switching.

In another possible implementation, the first beam belongs to a first beam set, and the first beam set includes a beam used by the terminal device to initiate beam switching.

In another possible implementation, the processing module 1502 is further configured to:
update the first beam set according to a first rule.

In another possible implementation, the processing module 1502 is specifically configured to:
update the beam in the first beam set to a beam corresponding to one or more TCI-states activated by the communication apparatus for the terminal device, to obtain an updated first beam set.

In another possible implementation, the transceiver module 1501 is further configured to:
send third indication information to a terminal device, where the third indication information indicates the one or more TCI-states activated for the terminal device; and
receive a third acknowledgment message from the terminal device, where the third acknowledgment message indicates that the terminal device successfully receives the third indication information.

In another possible implementation, after first preset duration from a moment at which the terminal device sends the third determining message, a third beam deleted by the communication apparatus from the first beam set is not used by the terminal device to initiate the beam switching; and
within the first preset duration from the moment at which the terminal device sends the third determining message, the third beam may still be used by the terminal device to initiate the beam switching.

In another possible implementation, the transceiver module 1501 is further configured to:
send fourth indication information to the terminal device, where the fourth indication information indicates the terminal device to enable a function of updating the first beam set by using the TCI-state activated by the communication apparatus for the terminal device.

In another possible implementation, the processing module 1502 is specifically configured to:
determine X TCI-states based on a fifth measurement result, where the fifth measurement result includes a measurement result of one or more reference signals that is obtained through measurement and reported by the terminal device, each of the one or more reference signals corresponds to one TCI-state, the X TCI-states are TCI-states corresponding to the first X reference signal resources with highest signal quality in the fifth measurement result, and X is an integer greater than or equal to 1; and the communication apparatus updates the beam in the first beam set to beams corresponding to the X TCI-states, to obtain an updated first beam set.

In another possible implementation, the updated first beam set includes a beam corresponding to a fifth reference signal, and the processing module 1502 is further configured to:
if none of measurement results reported by the terminal device Y consecutive times include a measurement result of the beam corresponding to the fifth reference signal, determine that the beam corresponding to the fifth reference signal is not used by the terminal device to initiate the beam switching, where Y is an integer greater than or equal to 1.

It should be understood that a specific process in which the modules perform the foregoing corresponding processes has been described in detail in the foregoing method embodiments. For brevity, details are not described herein again.

The processing module 1502 in the foregoing embodiments may be implemented by at least one processor or processor-related circuit. The transceiver module 1501 may be implemented by a transceiver or a transceiver-related circuit. The transceiver module 1501 may also be referred to as the communication module or the communication interface. The storage module may be implemented by at least one memory.

Optionally, the communication apparatus shown in FIG. 15 may be further configured to perform the following solution.

The transceiver module 1501 is configured to receive a second measurement result from a terminal device, where the second measurement result is a measurement result obtained by performing second-type measurement on a second reference signal based on a first measurement result by the terminal device, and the first measurement result is a measurement result obtained by performing first-type measurement on a first reference signal by the terminal device.

In a possible implementation, first configuration information indicates: if all signal quality of the first reference signal in measurement results of the first reference signal that are obtained by the terminal device through N consecutive times of measurement is greater than or equal to a first threshold, the terminal device triggers the second-type measurement on the second reference signal and reporting of the measurement result, where N is an integer greater than or equal to 1; or
first configuration information indicates: if all signal quality of the first reference signal in measurement results of the first reference signal that are obtained by the terminal device through the N consecutive times of measurement is greater than or equal to signal quality of a reference signal corresponding to a current serving beam of the terminal device, the terminal device triggers the second-type measurement on the second reference signal and reporting of the measurement result.

Another communication apparatus provided in embodiments of this application is described below.

FIG. 16 is a diagram of a structure of a communication apparatus according to an embodiment of this application. Refer to FIG. 16. The communication apparatus may be configured to perform the process performed by the communication device in the embodiment shown in FIG. 11 and the process performed by the network device or the terminal device in the embodiment shown in FIG. 13. For details, refer to the related descriptions in the foregoing method embodiments.

The communication apparatus 1600 includes a processing module 1601. Optionally, the communication apparatus 1600 further includes a transceiver module 1602. The transceiver module 1602 may implement a corresponding communication function, and the processing module 1601 is configured to perform data processing. The transceiver module 1602 may also be referred to as a communication interface or a communication module.

Optionally, the communication apparatus 1600 may further include a storage module. The storage module may be configured to store instructions and/or data. The processing module 1601 may read the instructions and/or the data in the storage module, so that the communication apparatus implements the foregoing method embodiments.

The communication apparatus 1600 may be configured to perform the actions performed by the communication device in the foregoing method embodiment shown in FIG. 11. The communication apparatus 1600 may be a communication device or a part that may be configured in the communication device. The transceiver module 1602 is configured to perform receiving-related operations on a communication device side in the foregoing method embodiments, and the processing module 1601 is configured to perform processing-related operations on the communication device side in the foregoing method embodiments.

The communication apparatus 1600 may be configured to perform the actions performed by the network device or the terminal device in the foregoing method embodiment shown in FIG. 13. The communication apparatus 1600 may be a network device or a terminal device, or a part that may be configured in the network device or the terminal device. The transceiver module 1602 is configured to perform a receiving-related operation on a terminal device or network device side in the foregoing method embodiment shown in FIG. 13, and the processing module 1601 is configured to perform a processing-related operation on the terminal device side or network device side in the foregoing method embodiment shown in FIG. 13.

Optionally, the transceiver module 1602 may include a sending module and a receiving module. The sending module is configured to perform the sending operations in the foregoing method embodiments. The receiving module is configured to perform the receiving operations in the foregoing method embodiments.

It should be noted that the communication apparatus 1600 may include a sending module but not include a receiving module. Alternatively, the communication apparatus 1600 may include a receiving module but not include a sending module. This may be specifically determined depending on whether the foregoing solutions performed by the communication apparatus 1600 include a sending action and a receiving action.

The processing module 1601 is configured to: determine a first beam set, where the first beam set includes a beam used by a terminal device to initiate beam switching; and update the first beam set according to a first rule.

In a possible implementation, the processing module 1601 is specifically configured to:
update the beam in the first beam set to a beam corresponding to one or more TCI-states activated by a network device for the terminal device, to obtain an updated first beam set.

In another possible implementation, the communication apparatus is the terminal device, and the communication apparatus further includes the transceiver module 1602, where

The transceiver module 1602 is configured to: receive third indication information from the network device, where the third indication information indicates the one or more TCI-states activated for the terminal device; and send a third acknowledgment message to the network device, where the third acknowledgment message indicates that the terminal device successfully receives the third indication information.

In another possible implementation, after first preset duration from a moment at which the terminal device sends the third determining message, a third beam deleted by the terminal device from the first beam set is not used by the terminal device to initiate the beam switching; and
within the first preset duration from the moment at which the terminal device sends the third determining message, the third beam may still be used by the terminal device to initiate the beam switching.

In another possible implementation, the communication apparatus is the terminal device, and the transceiver module 1602 is further configured to:
receive fourth indication information from the network device, where the fourth indication information indicates the terminal device to enable a function of updating the first beam set by using the TCI-state activated by the network device for the terminal device.

In another possible implementation, the processing module 1601 is specifically configured to:
determine X TCI-states based on a fifth measurement result, where the fifth measurement result includes a measurement result of one or more reference signals that is obtained through measurement and reported by the terminal device, each of the one or more reference signals corresponds to one TCI-state, the X TCI-states are TCI-states corresponding to the first X reference signals with highest signal quality in the fifth measurement result, and X is an integer greater than or equal to 1; and update the beam in the first beam set to beams corresponding to the X TCI-states, to obtain an updated first beam set.

In another possible implementation, the updated first beam set includes a beam corresponding to a fifth reference signal, and the processing module 1601 is further configured to:
if none of measurement results reported by the terminal device Y consecutive times include a measurement result of the beam corresponding to the fifth reference signal, determine that the beam corresponding to the fifth reference signal is not used by the terminal device to initiate the beam switching, where Y is an integer greater than or equal to 1.

In another possible implementation, the communication apparatus is the terminal device, and the processing module 1601 is further configured to:
initiate the beam switching based on the first beam set.

It should be understood that a specific process in which the modules perform the foregoing corresponding processes has been described in detail in the foregoing method embodiments. For brevity, details are not described herein again.

The processing module 1601 in the foregoing embodiments may be implemented by at least one processor or processor-related circuit. The transceiver module 1602 may be implemented by a transceiver or a transceiver-related circuit. The transceiver module 1602 may also be referred to as the communication module or the communication interface. The storage module may be implemented by at least one memory.

An embodiment of this application further provides a communication apparatus 1700. The communication apparatus 1700 includes a processor 1710. The processor 1710 is coupled to a memory 1720. The memory 1720 is configured to store a computer program or instructions and/or data. The processor 1710 is configured to execute the computer program or the instructions and/or the data stored in the memory 1720, so that the methods in the foregoing method embodiments are performed.

Optionally, the communication apparatus 1700 includes one or more processors 1710.

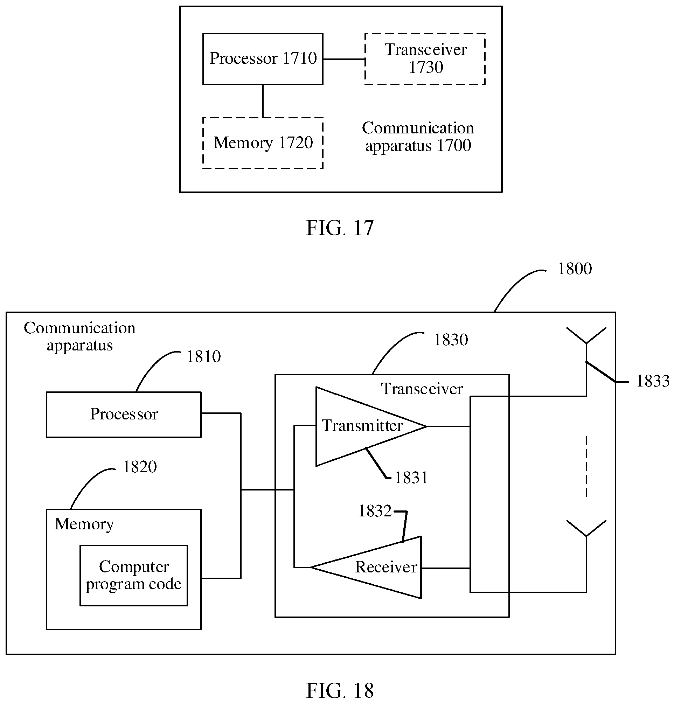

Optionally, as shown in FIG. 17, the communication apparatus 1700 may further include the memory 1720.

Optionally, the communication apparatus 1700 may include one or more memories 1720.

Optionally, the memory 1720 may be integrated with the processor 1710, or the memory 1720 and the processor 1710 are separately disposed.

Optionally, as shown in FIG. 17, the communication apparatus 1700 may further include a transceiver 1730, and the transceiver 1730 is configured to receive and/or send a signal. For example, the processor 1710 is configured to control the transceiver 1730 to receive and/or send a signal.

In a solution, the communication apparatus 1700 is configured to implement the operations performed by the network device, the terminal device, or the communication device in the foregoing method embodiments.

For example, the processor 1710 is configured to implement the processing-related operations performed by the network device, the terminal device, or the communication device in the foregoing method embodiments, and the transceiver 1730 is configured to implement the operations related to sending and receiving performed by the network device, the terminal device, or the communication device in the foregoing method embodiments.

This application further provides a communication apparatus 1800. The communication apparatus 1800 may be a terminal device, a processor of the terminal device, or a chip. The communication apparatus 1800 may be configured to perform the operations performed by the terminal device or the communication device in the foregoing method embodiments.

When the communication apparatus 1800 is the terminal device, FIG. 18 is a simplified diagram of a structure of a terminal device. As shown in FIG. 18, the terminal device includes a processor, a memory, and a transceiver. The memory may store computer program code. The transceiver includes a transmitter 1831, a receiver 1832, a radio frequency circuit (not shown in the figure), an antenna 1833, and an input/output apparatus (not shown in the figure).

The processor is mainly configured to: process a communication protocol and communication data, control the terminal device, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to send and receive a radio frequency signal in a form of an electromagnetic wave. The input/output apparatus, for example, a touchscreen, a display screen, or a keyboard, is mainly configured to receive data input by a user and output data to the user. It should be noted that some types of terminal devices may not have the input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives a radio frequency signal through the antenna, converts the radio frequency signal into a baseband signal, and outputs the baseband signal to the processor. The processor converts the baseband signal into data, and processes the data. For ease of description, FIG. 18 shows only one memory, one processor, and one transceiver. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have sending and receiving functions may be considered as a transceiver module of the terminal device, and the processor that has a processing function may be considered as a processing module of the terminal device.

As shown in FIG. 18, the terminal device includes the processor 1810, the memory 1820, and the transceiver 1830. The processor 1810 may also be referred to as a processing unit, a processing board, a processing module, a processing apparatus, or the like. The transceiver 1830 may also be referred to as a transceiver unit, a transceiver, a transceiver apparatus, or the like.

Optionally, a component configured to implement a receiving function in the transceiver 1830 may be considered as a receiving module, and a component configured to implement a sending function in the transceiver 1830 may be considered as a sending module. That is, the transceiver 1830 includes a receiver and a transmitter. The transceiver may also be sometimes referred to as a transceiver, a transceiver module, a transceiver circuit, or the like. The receiver may also be sometimes referred to as a receiver, a receiving module, a receiving circuit, or the like. The transmitter may also be sometimes referred to as a transmitter, a transmitting module, a transmitting circuit, or the like.

For example, in an implementation, the processor 1810 is configured to perform processing actions on a terminal device side in the embodiment shown in FIG. 5, and the transceiver 1830 is configured to perform sending and receiving actions on the terminal device side in FIG. 4. For example, the processor 1810 is configured to perform 501 and 503 in the embodiment shown in FIG. 5, and the transceiver 1830 is configured to perform 502 and 504 in the embodiment shown in FIG. 5.

For example, in an implementation, the processor 1810 is configured to perform processing actions on a terminal device side in the embodiment shown in FIG. 7. For example, the processor 1810 is configured to perform 701 to 703 in the embodiment shown in FIG. 7.

For example, in an implementation, the processor 1810 is configured to perform processing actions on a terminal device side in the embodiment shown in FIG. 8, and the transceiver 1830 is configured to perform sending and receiving actions on the terminal device side in FIG. 8. For example, the transceiver 1830 is configured to perform 801 in the embodiment shown in FIG. 8, and the processor 1810 is configured to perform 802 and 803 in the embodiment shown in FIG. 8.

For example, in an implementation, the processor 1810 is configured to perform processing actions on a terminal device side in the embodiment shown in FIG. 9. For example, the processor 1810 is configured to perform 901 to 903 in the embodiment shown in FIG. 9.

For example, in an implementation, the processor 1810 is configured to perform processing actions on a terminal device side in the embodiment shown in FIG. 10, and the transceiver 1830 is configured to perform sending and receiving actions on the terminal device side in FIG. 10. For example, the transceiver 1830 is configured to perform 1001 in the embodiment shown in FIG. 10, and the processor 1810 is configured to perform 1002 and 1003 in the embodiment shown in FIG. 10.

For example, in an implementation, the processor 1810 is configured to perform processing actions on a terminal device side in the embodiment shown in FIG. 11. For example, the processor 1810 is configured to perform 1001 and 1002 in the embodiment shown in FIG. 11.

For example, in an implementation, the processor 1810 is configured to perform processing actions on a terminal device side in the embodiment shown in FIG. 13, and the transceiver 1830 is configured to perform sending and receiving actions on the terminal device side in FIG. 13. For example, the transceiver 1830 is configured to perform 1301 and 1303 in the embodiment shown in FIG. 13, and the processor 1810 is configured to perform 1302 in the embodiment shown in FIG. 13.

It should be understood that FIG. 18 is merely an example rather than a limitation. The terminal device including the transceiver module and the processing module may not depend on the structure shown in FIG. 14 or FIG. 16.

When the communication apparatus 1800 is the chip, the chip includes a processor, a memory, and a transceiver. The transceiver may be an input/output circuit or a communication interface. The processor may be a processing module, a microprocessor, or an integrated circuit integrated on the chip. The sending operation of the terminal device in the foregoing method embodiments may be understood as an output of the chip, and the receiving operation of the terminal device in the foregoing method embodiments may be understood as an input of the chip.

This application further provides a communication apparatus 1900. The communication apparatus 1900 may be a network device or a chip. The communication apparatus 1900 may be configured to perform the operations performed by the network device in the foregoing method embodiments shown in FIG. 5, FIG. 7 to FIG. 10, and FIG. 13, or may be configured to perform the operations performed by the communication device in the foregoing method embodiment shown in FIG. 11.

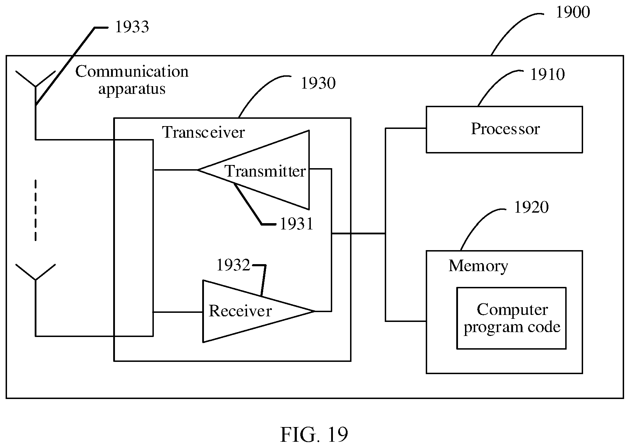

When the communication apparatus 1900 is the network device, for example, a base station, FIG. 19 is a simplified diagram of a structure of a base station. The base station includes a part 1910, a part 1920, and a part 1930. The part 1910 is mainly configured to perform baseband processing, control the base station, and the like. The part 1910 is usually a control center of the base station, may be usually referred to as a processor, and is configured to control the base station to perform processing operations on a network device side in the foregoing method embodiments. The part 1920 is mainly configured to store computer program code and data. The part 1930 is mainly configured to send and receive a radio frequency signal, and perform conversion between the radio frequency signal and a baseband signal. The part 1930 may be usually referred to as a transceiver module, a transceiver, a transceiver circuit, a transceiver, or the like. The transceiver module in the part 1930 may also be referred to as a transceiver, a transceiver, or the like, and includes an antenna 1933 and a radio frequency circuit (not shown). The radio frequency circuit is mainly configured to perform radio frequency processing. Optionally, in the part 1930, a component configured to implement a receiving function may be considered as a receiver, and a component configured to implement a sending function may be considered as a transmitter. That is, the part 1930 includes a receiver 1932 and a transmitter 1931. The receiver may also be referred to as a receiving module, a receiver, a receiving circuit, or the like, and the transmitter may be referred to as a transmitting module, a transmitter, a transmitting circuit, or the like.

The part 1910 and the part 1920 may include one or more boards, and each board may include one or more processors and one or more memories. The processor is configured to read and execute a program in the memory to implement a baseband processing function and control the base station. If there are a plurality of boards, the boards may be interconnected with each other to enhance a processing capability. In an optional implementation, a plurality of boards may share one or more processors, or a plurality of boards share one or more memories, or a plurality of boards share one or more processors at the same time.

For example, in an implementation, the transceiver module in the part 1930 is configured to perform the processes related to sending and receiving performed by the network device in the embodiments shown in FIG. 5 and FIG. 7 to FIG. 10. The processor in the part 1910 is configured to perform the processing-related processes performed by the network device in the embodiments shown in FIG. 5 and FIG. 7 to FIG. 10.

In another implementation, the processor in the part 1910 is configured to perform the processing-related processes performed by the communication device in the embodiment shown in FIG. 11.

In another implementation, the transceiver module in the part 1930 is configured to perform the processes related to sending and receiving performed by the network device in the embodiment shown in FIG. 13.

It should be understood that FIG. 19 is merely an example rather than a limitation. The network device including the processor, the memory, and the transceiver may not depend on the structure shown in FIG. 14 or FIG. 15.

When the communication apparatus 1900 is the chip, the chip includes a transceiver, a memory, and a processor. The transceiver may be an input/output circuit or a communication interface. The processor is a processor, a microprocessor, or an integrated circuit integrated on the chip. The sending operation of the network device in the foregoing method embodiments may be understood as an output of the chip, and the receiving operation of the network device in the foregoing method embodiments may be understood as an input of the chip.

An embodiment of this application further provides a computer-readable storage medium, including computer instructions. When the computer instructions are run on a computer, the methods shown in the foregoing method embodiments are enabled to be performed.

An embodiment of this application further provides a computer program product including instructions. When the computer program product runs on a computer, the methods shown in the foregoing method embodiments are enabled to be performed.

An embodiment of this application further provides a communication system. The communication system includes the terminal device and the network device in the foregoing embodiments.

An embodiment of this application further provides a chip apparatus, including a processor, configured to invoke a computer program or computer instructions stored in a memory, so that the processor performs the methods provided in the embodiments shown in FIG. 5, FIG. 7 to FIG. 11, and FIG. 13.

In a possible implementation, an input of the chip apparatus corresponds to the receiving operation in the embodiments shown in FIG. 5, FIG. 7 to FIG. 11, and FIG. 13, and an output of the chip apparatus corresponds to the sending operation in the embodiments shown in FIG. 5, FIG. 7 to FIG. 11, and FIG. 13.

Optionally, the processor is coupled to the memory through an interface.

Optionally, the chip apparatus further includes the memory, and the memory stores the computer program or the computer instructions.

The processor mentioned anywhere above may be a general-purpose central processing unit, a microprocessor, an application-specific integrated circuit (application-specific integrated circuit, ASIC), or one or more integrated circuits for controlling program execution of the methods provided in the embodiments shown in FIG. 5, FIG. 7 to FIG. 11, and FIG. 13. The memory mentioned anywhere above may be a read-only memory (read-only memory, ROM), another type of static storage device that can store static information and instructions, a random access memory (random access memory, RAM), or the like.

It may be clearly understood by persons skilled in the art that for convenient and brief description, for explanations and beneficial effects of related content in any communication apparatus provided above, refer to the corresponding method embodiment provided above. Details are not described herein.

In this application, the terminal device or the network device may include a hardware layer, an operating system layer running above the hardware layer, and an application layer running above the operating system layer. The hardware layer may include hardware such as a central processing unit (central processing unit, CPU), a memory management unit (memory management unit, MMU), and a memory (also referred to as a main memory). An operating system at the operating system layer may be any one or more computer operating systems that implement service processing through a process (process), for example, a Linux operating system, a Unix operating system, an Android operating system, an iOS operating system, or a Windows operating system. The application layer may include applications such as a browser, an address book, word processing software, and instant messaging software.

It may be clearly understood by persons skilled in the art that, for the purpose of convenient and brief description, for a detailed working process of the foregoing system, apparatus, and module, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiment is merely an example. For example, the division into the modules is merely logical function division and may be other division during actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electrical, mechanical, or other forms.

The modules described as separate parts may or may not be physically separate, and parts displayed as modules may or may not be physical modules, that is, may be located in one position, or may be distributed on a plurality of network modules. Some or all the modules may be selected according to actual needs to achieve the objectives of the solutions of embodiments.

In addition, function modules in embodiments of this application may be integrated into one processing module, or each of the modules may exist alone physically, or two or more modules are integrated into one module. The integrated module may be implemented in a form of hardware, or may be implemented in a form of a software function module.

When the integrated module is implemented in the form of the software function module and sold or used as an independent product, the integrated module may be stored in a computer-readable storage medium. Based on such an understanding, the technical solutions in this application essentially, the part contributing, or all or some of the technical solutions may be implemented in the form of a software product. The computer software product is stored in a storage medium and includes several instructions for instructing a computer device (which may be a personal computer, a server, a network device, or the like) to perform all or some of the processes of the methods in embodiments of this application. The foregoing storage medium includes any medium that can store program code, such as a USB flash drive, a removable hard disk, a read-only memory, a random access memory, a magnetic disk, or an optical disc.

In conclusion, the foregoing embodiments are merely for describing the technical solutions in this application, but not for limiting this application. Although this application is described in detail with reference to the foregoing embodiments, persons of ordinary skill in the art should understand that they may still make modifications to the technical solutions recorded in the foregoing embodiments or make equivalent replacements to some technical features thereof. Such modifications or replacements do not make the essence of the corresponding technical solutions depart from the scope of the technical solutions in embodiments of this application.

## Claims

1. A communication method, wherein the method comprises:
performing, by a terminal device, first-type measurement on a first reference signal, to obtain a first measurement result;
sending, by the terminal device, the first measurement result to a network device;
performing, by the terminal device, second-type measurement on a second reference signal based on the first measurement result, to obtain a second measurement result; and
sending, by the terminal device, the second measurement result to the network device.

2. The method according to claim 1, wherein the first measurement result comprises measurement results of the first reference signal that are reported by the terminal device N consecutive times, and N is an integer greater than or equal to 1; and
the performing, by the terminal device, second-type measurement on a second reference signal based on the first measurement result, to obtain a second measurement result comprises:
if all signal quality of the first reference signal in the measurement results of the first reference signal that are reported by the terminal device N consecutive times is greater than or equal to a first threshold, performing, by the terminal device, second-type measurement on the second reference signal, to obtain the second measurement result; or
if all signal quality of the first reference signal in the measurement results of the first reference signal that are reported by the terminal device N consecutive times is greater than or equal to signal quality of a reference signal corresponding to a current serving beam of the terminal device, performing, by the terminal device, second-type measurement on the second reference signal, to obtain the second measurement result.

3. The method according to claim 1 or 2, wherein after the sending, by the terminal device, the second measurement result to the network device, the method further comprises:
if signal quality of the second reference signal in the second measurement result is greater than or equal to a second threshold, switching, by the terminal device, to a first beam corresponding to the second reference signal; or
if signal quality of the second reference signal in the second measurement result is less than a second threshold, maintaining, by the terminal device, the current serving beam.

4. The method according to claim 1 or 2, wherein after the sending, by the terminal device, the second measurement result to the network device, the method further comprises:
if signal quality of the second reference signal in the second measurement result is greater than or equal to a second threshold, receiving, by the terminal device, a first acknowledgment message from the network device, and switching, by the terminal device, to a first beam corresponding to the second reference signal; or
if signal quality of the second reference signal in the second measurement result is less than a second threshold, receiving, by the terminal device, a first non-acknowledgment message from the network device, and maintaining, by the terminal device, the current serving beam.

5. The method according to claim 1 or 2, wherein after the sending, by the terminal device, the second measurement result to the network device, the method further comprises:
if signal quality of the second reference signal in the second measurement result is greater than or equal to a second threshold, receiving, by the terminal device, first indication information from the network device, wherein the first indication information indicates the terminal device to switch to a first beam corresponding to the second reference signal; and switching, by the terminal device, to the first beam; or
if signal quality of the second reference signal in the second measurement result is less than a second threshold, receiving, by the terminal device, first indication information from the network device, wherein the first indication information indicates the terminal device to maintain the current serving beam; and maintaining, by the terminal device, the current serving beam.

6. The method according to claim 1 or 2, wherein the method further comprises:
performing, by the terminal device, first-type measurement on a third reference signal, to obtain a third measurement result;
sending, by the terminal device, the third measurement result to the network device;
performing, by the terminal device, second-type measurement on a fourth reference signal based on the third measurement result, to obtain a fourth measurement result; and
sending, by the terminal device, the fourth measurement result to the network device.

7. The method according to claim 6, wherein after the sending, by the terminal device, the fourth measurement result to the network device, the method further comprises:
if signal quality of the second reference signal in the second measurement result is greater than or equal to a second threshold, and the signal quality of the second reference signal is greater than signal quality of the fourth reference signal in the fourth measurement result, switching, by the terminal device, to a first beam corresponding to the second reference signal;
if signal quality of the fourth reference signal in the fourth measurement result is greater than or equal to a second threshold, and the signal quality of the fourth reference signal is greater than signal quality of the second reference signal in the second measurement result, switching, by the terminal device, to a second beam corresponding to the fourth reference signal; or
if both signal quality of the second reference signal in the second measurement result and signal quality of the fourth reference signal in the fourth measurement result are less than a second threshold, maintaining, by the terminal device, the current serving beam.

8. The method according to claim 6, wherein after the sending, by the terminal device, the fourth measurement result to the network device, the method further comprises:
if signal quality of the second reference signal in the second measurement result is greater than or equal to a second threshold, and the signal quality of the second reference signal is greater than signal quality of the fourth reference signal in the fourth measurement result, receiving, by the terminal device, a second acknowledgment message from the network device, wherein the second acknowledgment message indicates the terminal device to switch to a first beam corresponding to the second reference signal; and switching, by the terminal device, to the first beam corresponding to the second reference signal;
if signal quality of the fourth reference signal in the fourth measurement result is greater than or equal to a second threshold, and the signal quality of the fourth reference signal is greater than signal quality of the second reference signal in the second measurement result, receiving, by the terminal device, a second acknowledgment message from the network device, and switching, by the terminal device, to a second beam corresponding to the fourth reference signal; or
if both signal quality of the second reference signal in the second measurement result and signal quality of the fourth reference signal in the fourth measurement result are less than a second threshold, receiving, by the terminal device, a second non-acknowledgment message from the network device, and maintaining, by the terminal device, the current serving beam.

9. The method according to claim 6, wherein after the sending, by the terminal device, the fourth measurement result to the network device, the method further comprises:
if signal quality of the second reference signal in the second measurement result is greater than or equal to a second threshold, and the signal quality of the second reference signal is greater than signal quality corresponding to the fourth reference signal in the fourth measurement result, receiving, by the terminal device, second indication information from the network device, wherein the second indication information indicates the terminal device to switch to a first beam corresponding to the second reference signal; and switching, by the terminal device, to the first beam;
if signal quality of the fourth reference signal in the fourth measurement result is greater than or equal to a second threshold, and the signal quality of the fourth reference signal is greater than signal quality of the second reference signal in the second measurement result, receiving, by the terminal device, second indication information from the network device, wherein the second indication information indicates the terminal device to switch to a second beam corresponding to the fourth reference signal; and switching, by the terminal device, to the second beam; or
if both signal quality of the second reference signal in the second measurement result and signal quality of the fourth reference signal in the fourth measurement result are less than a second threshold, receiving, by the terminal device, second indication information from the network device, wherein the second indication information indicates the terminal device to maintain the current serving beam; and maintaining, by the terminal device, the current serving beam.

10. The method according to any one of claims 1 to 9, wherein the method further comprises:
receiving, by the terminal device, first configuration information from the network device, wherein the first configuration information indicates the terminal device to perform second-type measurement on the second reference signal based on the first measurement result and report a measurement result.

11. The method according to any one of claims 1 to 10, wherein the first-type measurement comprises periodic measurement performed by the terminal device on a reference signal, and the second-type measurement comprises semi-persistent measurement performed by the terminal device on a reference signal resource;
the first-type measurement comprises periodic measurement performed by the terminal device on a reference signal, and the second-type measurement comprises aperiodic measurement performed by the terminal device on a reference signal; or
the first-type measurement comprises semi-persistent measurement performed by the terminal device on a reference signal, and the second-type measurement comprises aperiodic measurement performed by the terminal device on a reference signal.

12. A communication method, wherein the method comprises:
receiving, by a network device, a first measurement result from a terminal device, wherein the first measurement result is a measurement result obtained by performing first-type measurement on a first reference signal by the terminal device; and
receiving, by the network device, a second measurement result from the terminal device, wherein the second measurement result is a measurement result obtained by performing second-type measurement on a second reference signal based on the first measurement result by the terminal device.

13. The method according to claim 12, wherein the method further comprises:
sending, by the network device, first configuration information to the terminal device, wherein the first configuration information indicates the terminal device to perform second-type measurement on the second reference signal based on the first measurement result and report the measurement result.

14. The method according to claim 13, wherein the first measurement result comprises measurement results of the first reference signal that are reported by the terminal device N consecutive times, and N is an integer greater than or equal to 1; and
the first configuration information indicates: if all signal quality of the first reference signal in the measurement results of the first reference signal that are reported by the terminal device N consecutive times is greater than or equal to a first threshold, the terminal device triggers the second-type measurement on the second reference signal and reporting of the measurement result, wherein N is an integer greater than or equal to 1; or
the first configuration information indicates: if all signal quality of the first reference signal in the measurement results of the first reference signal that are reported by the terminal device N consecutive times is greater than or equal to signal quality of a reference signal corresponding to a current serving beam of the terminal device, the terminal device triggers the second-type measurement on the second reference signal and reporting of the measurement result.

15. The method according to any one of claims 12 to 14, wherein after the receiving, by the network device, a second measurement result from the terminal device, the method further comprises:
if signal quality of the second reference signal in the second measurement result is greater than or equal to a second threshold, determining, by the network device, that the terminal device is to switch to a first beam corresponding to the second reference signal; or
if signal quality of the second reference signal in the second measurement result is less than a second threshold, determining, by the network device, that the terminal device is to maintain the current serving beam.

16. The method according to any one of claims 12 to 14, wherein after the receiving, by the network device, a second measurement result from the terminal device, the method further comprises:
if signal quality of the second reference signal in the second measurement result is greater than or equal to a second threshold, sending, by the network device, a first acknowledgment message to the terminal device, wherein the first acknowledgment message indicates the terminal device to switch to a first beam corresponding to the second reference signal; or
if signal quality of the second reference signal in the second measurement result is less than a second threshold, sending, by the network device, a first non-acknowledgment message to the terminal device, wherein the first non-acknowledgment message indicates the terminal device to maintain the current serving beam.

17. The method according to any one of claims 12 to 14, wherein after the receiving, by the network device, a second measurement result from the terminal device, the method further comprises:
if the signal quality of the second reference signal in the second measurement result is greater than or equal to a second threshold, sending, by the network device, first indication information to the terminal device, wherein the first indication information indicates the terminal device to switch to a first beam corresponding to the second reference signal; or
if signal quality of the second reference signal in the second measurement result is less than a second threshold, sending, by the network device, first indication information to the terminal device, wherein the first indication information indicates the terminal device to maintain the current serving beam or not to perform beam switching.

18. The method according to any one of claims 12 to 14, wherein the method further comprises:
sending, by the network device, a third measurement result to the terminal device, wherein the third measurement result is a measurement result obtained by performing first-type measurement on a third reference signal by the terminal device; and
receiving, by the network device, a fourth measurement result from the terminal device, wherein the fourth measurement result is a measurement result obtained by performing second-type measurement on a fourth reference signal based on the third measurement result by the terminal device.

19. The method according to claim 18, wherein after the receiving, by the network device, a fourth measurement result from the terminal device, the method further comprises:
if signal quality of the second reference signal in the second measurement result is greater than or equal to a second threshold, and the signal quality of the second reference signal is greater than signal quality of the fourth reference signal in the fourth measurement result, determining, by the network device, that the terminal device is to switch to a first beam corresponding to the second reference signal;
if signal quality of the fourth reference signal in the fourth measurement result is greater than or equal to a second threshold, and the signal quality of the fourth reference signal is greater than signal quality of the second reference signal in the second measurement result, determining, by the network device, that the terminal device is to switch to a second beam corresponding to the fourth reference signal; or
if both signal quality of the second reference signal in the second measurement result and signal quality of the fourth reference signal in the fourth measurement result are less than a second threshold, determining, by the network device, that the terminal device is to maintain the current serving beam.

20. The method according to claim 18, wherein after the receiving, by the network device, a fourth measurement result from the terminal device, the method further comprises:
if signal quality of the second reference signal in the second measurement result is greater than or equal to a second threshold, and the signal quality of the second reference signal is greater than signal quality of the fourth reference signal in the fourth measurement result, sending, by the network device, a second acknowledgment message to the terminal device, wherein the second acknowledgment message indicates the terminal device to switch to a first beam corresponding to the second reference signal;
if signal quality of the fourth reference signal in the fourth measurement result is greater than or equal to a second threshold, and the signal quality of the fourth reference signal is greater than signal quality of the second reference signal in the second measurement result, sending, by the network device, a second acknowledgment message to the terminal device, wherein the second acknowledgment message indicates the terminal device to switch to a second beam corresponding to the fourth reference signal; or
if both signal quality of the second reference signal in the second measurement result and signal quality of the fourth reference signal in the fourth measurement result are less than a second threshold, sending, by the network device, a second non-acknowledgment message to the terminal device, wherein the second non-acknowledgment message indicates the terminal device to maintain the current serving beam.

21. The method according to claim 18, wherein after the receiving, by the network device, a fourth measurement result from the terminal device, the method further comprises:
if signal quality of the second reference signal in the second measurement result is greater than or equal to a second threshold, and the signal quality of the second reference signal is greater than signal quality of the fourth reference signal in the fourth measurement result, sending, by the network device, second indication information to the terminal device, wherein the second indication information indicates the terminal device to switch to a first beam corresponding to the second reference signal;
if signal quality of the fourth reference signal in the fourth measurement result is greater than or equal to a second threshold, and the signal quality of the fourth reference signal is greater than signal quality of the second reference signal in the second measurement result, sending, by the network device, second indication information to the terminal device, wherein the second indication information indicates the terminal device to switch to a second beam corresponding to the fourth reference signal; or
if both signal quality of the second reference signal in the second measurement result and signal quality of the fourth reference signal in the fourth measurement result are less than a second threshold, sending, by the network device, second indication information to the terminal device, wherein the second indication information indicates the terminal device to maintain the current serving beam.

22. The method according to any one of claims 12 to 21, wherein
the first-type measurement comprises periodic measurement performed by the terminal device on a reference signal, and the second-type measurement comprises semi-persistent measurement performed by the terminal device on a reference signal resource;
the first-type measurement comprises periodic measurement performed by the terminal device on a reference signal, and the second-type measurement comprises aperiodic measurement performed by the terminal device on a reference signal; or
the first-type measurement comprises semi-persistent measurement performed by the terminal device on a reference signal, and the second-type measurement comprises aperiodic measurement performed by the terminal device on a reference signal.

23. A communication apparatus, wherein the communication apparatus comprises:
a processing module, configured to perform first-type measurement on a first reference signal, to obtain a first measurement result; and
a transceiver module, configured to send the first measurement result to a network device, wherein
the processing module is further configured to send the first measurement result to the network device; and
the transceiver module is further configured to send the second measurement result to the network device.

24. The communication apparatus according to claim 23, wherein the first measurement result comprises measurement results of the first reference signal that are reported by the communication apparatus N consecutive times, and N is an integer greater than or equal to 1; and
the processing module is specifically configured to:
if all signal quality of the first reference signal in the measurement results of the first reference signal that are reported by the communication apparatus N consecutive times is greater than or equal to a first threshold, perform second-type measurement on the second reference signal, to obtain the second measurement result; or
if all signal quality of the first reference signal in the measurement results of the first reference signal that are reported by the communication apparatus N consecutive times is greater than or equal to signal quality of a reference signal corresponding to a current serving beam of the communication apparatus, perform second-type measurement on the second reference signal, to obtain the second measurement result.

25. The communication apparatus according to claim 23 or 24, wherein the processing module is further configured to:
if signal quality of the second reference signal in the second measurement result is greater than or equal to a second threshold, switch to a first beam corresponding to the second reference signal; or
if signal quality of the second reference signal in the second measurement result is less than a second threshold, maintain the current serving beam.

26. The communication apparatus according to claim 23 or 24, wherein
if signal quality of the second reference signal in the second measurement result is greater than or equal to a second threshold, the transceiver module is further configured to receive a first acknowledgment message from the network device; and the processing module is further configured to switch to a first beam corresponding to the second reference signal; or
if signal quality of the second reference signal in the second measurement result is less than a second threshold, the transceiver module is further configured to receive a first non-acknowledgment message from the network device; and the processing module is further configured to maintain the current serving beam.

27. The communication apparatus according to claim 23 or 24, wherein
if signal quality of the second reference signal in the second measurement result is greater than or equal to a second threshold, the transceiver module is further configured to receive first indication information from the network device, wherein the first indication information indicates the communication apparatus to switch to a first beam corresponding to the second reference signal; and the processing module is further configured to switch to the first beam; or
if signal quality of the second reference signal in the second measurement result is less than a second threshold, the transceiver module is further configured to receive first indication information from the network device, wherein the first indication information indicates the communication apparatus to maintain the current serving beam; and the processing module is further configured to maintain the current serving beam.

28. The communication apparatus according to claim 23 or 24, wherein the processing module is further configured to:
perform first-type measurement on a third reference signal, to obtain a third measurement result;
the transceiver module is further configured to send the third measurement result to the network device;
the processing module is further configured to perform second-type measurement on a fourth reference signal based on the third measurement result, to obtain a fourth measurement result; and
the transceiver module is further configured to send the fourth measurement result to the network device.

29. The communication apparatus according to claim 28, wherein the processing module is further configured to:
if signal quality of the second reference signal in the second measurement result is greater than or equal to a second threshold, and the signal quality of the second reference signal is greater than signal quality of the fourth reference signal in the fourth measurement result, switch to a first beam corresponding to the second reference signal;
if signal quality of the fourth reference signal in the fourth measurement result is greater than or equal to a second threshold, and the signal quality of the fourth reference signal is greater than signal quality of the second reference signal in the second measurement result, switch to a second beam corresponding to the fourth reference signal; or
if both signal quality of the second reference signal in the second measurement result and signal quality of the fourth reference signal in the fourth measurement result are less than a second threshold, maintain the current serving beam.

30. The communication apparatus according to claim 28, wherein
if signal quality of the second reference signal in the second measurement result is greater than or equal to a second threshold, and the signal quality of the second reference signal is greater than signal quality of the fourth reference signal in the fourth measurement result, the transceiver module is further configured to receive a second acknowledgment message from the network device, wherein the second acknowledgment message indicates the communication apparatus to switch to a first beam corresponding to the second reference signal; and the processing module is further configured to switch to the first beam corresponding to the second reference signal;
if signal quality of the fourth reference signal in the fourth measurement result is greater than or equal to a second threshold, and the signal quality of the fourth reference signal is greater than signal quality of the second reference signal in the second measurement result, the transceiver module is further configured to receive a second acknowledgment message from the network device; and the processing module is further configured to switch to a second beam corresponding to the fourth reference signal; or
if both signal quality of the second reference signal in the second measurement result and signal quality of the fourth reference signal in the fourth measurement result are less than a second threshold, the transceiver module is further configured to receive a second non-acknowledgment message from the network device; and the processing module is further configured to maintain the current serving beam.

31. The communication apparatus according to claim 28, wherein
if signal quality of the second reference signal in the second measurement result is greater than or equal to a second threshold, and the signal quality of the second reference signal is greater than signal quality corresponding to the fourth reference signal in the fourth measurement result, the transceiver module is further configured to receive second indication information from the network device, wherein the second indication information indicates the communication apparatus to switch to a first beam corresponding to the second reference signal; and the processing module is further configured to switch to the first beam;
if signal quality of the fourth reference signal in the fourth measurement result is greater than or equal to a second threshold, and the signal quality of the fourth reference signal is greater than signal quality of the second reference signal in the second measurement result, the transceiver module is further configured to receive second indication information from the network device, wherein the second indication information indicates the communication apparatus to switch to a second beam corresponding to the fourth reference signal; and the processing module is further configured to switch to the second beam; or
if both signal quality of the second reference signal in the second measurement result and signal quality of the fourth reference signal in the fourth measurement result are less than a second threshold, the transceiver module is further configured to receive second indication information from the network device, wherein the second indication information indicates the communication apparatus to maintain the current serving beam; and the processing module is further configured to maintain the current serving beam.

32. The communication apparatus according to any one of claims 23 to 31, wherein the transceiver module is further configured to:
receive first configuration information from the network device, wherein the first configuration information indicates the communication apparatus to perform second-type measurement on the second reference signal based on the first measurement result and report a measurement result.

33. The communication apparatus according to any one of claims 23 to 32, wherein the first-type measurement comprises periodic measurement performed by the communication apparatus on a reference signal, and the second-type measurement comprises semi-persistent measurement performed by the communication apparatus on a reference signal resource;
the first-type measurement comprises periodic measurement performed by the communication apparatus on a reference signal, and the second-type measurement comprises aperiodic measurement performed by the communication apparatus on a reference signal; or
the first-type measurement comprises semi-persistent measurement performed by the communication apparatus on a reference signal, and the second-type measurement comprises aperiodic measurement performed by the communication apparatus on a reference signal.

34. A communication apparatus, wherein the communication apparatus comprises:
a transceiver module, configured to: receive a first measurement result from a terminal device, wherein the first measurement result is a measurement result obtained by performing first-type measurement on a first reference signal by the terminal device; and receive a second measurement result from the terminal device, wherein the second measurement result is a measurement result obtained by performing second-type measurement on a second reference signal based on the first measurement result by the terminal device.

35. The communication apparatus according to claim 34, wherein the transceiver module is further configured to:
send first configuration information to the terminal device, wherein the first configuration information indicates the terminal device to perform second-type measurement on the second reference signal based on the first measurement result and report the measurement result.

36. The communication apparatus according to claim 35, wherein the first measurement result comprises measurement results of the first reference signal that are reported by the terminal device N consecutive times, and N is an integer greater than or equal to 1; and
the first configuration information indicates: if all signal quality of the first reference signal in the measurement results of the first reference signal that are reported by the terminal device N consecutive times is greater than or equal to a first threshold, the terminal device triggers the second-type measurement on the second reference signal and reporting of the measurement result, wherein N is an integer greater than or equal to 1; or
the first configuration information indicates: if all signal quality of the first reference signal in the measurement results of the first reference signal that are reported by the terminal device N consecutive times is greater than or equal to signal quality of a reference signal corresponding to a current serving beam of the terminal device, the terminal device triggers the second-type measurement on the second reference signal and reporting of the measurement result.

37. The communication apparatus according to any one of claims 34 to 36, wherein the communication apparatus further comprises a processing module, wherein
the processing module is configured to: if signal quality of the second reference signal in the second measurement result is greater than or equal to a second threshold, determine that the terminal device is to switch to a first beam corresponding to the second reference signal; or
the processing module is configured to: if signal quality of the second reference signal in the second measurement result is less than a second threshold, determine that the terminal device is to maintain the current serving beam.

38. The communication apparatus according to any one of claims 34 to 36, wherein the transceiver module is further configured to: if signal quality of the second reference signal in the second measurement result is greater than or equal to a second threshold, send a first acknowledgment message to the terminal device, wherein the first acknowledgment message indicates the terminal device to switch to a first beam corresponding to the second reference signal; or
the transceiver module is further configured to: if signal quality of the second reference signal in the second measurement result is less than a second threshold, send a first non-acknowledgment message to the terminal device, wherein the first non-acknowledgment message indicates the terminal device to maintain the current serving beam.

39. The communication apparatus according to any one of claims 34 to 36, wherein
the transceiver module is further configured to: if the signal quality of the second reference signal in the second measurement result is greater than or equal to a second threshold, send first indication information to the terminal device, wherein the first indication information indicates the terminal device to switch to a first beam corresponding to the second reference signal; or
the transceiver module is further configured to: if signal quality of the second reference signal in the second measurement result is less than a second threshold, send first indication information to the terminal device, wherein the first indication information indicates the terminal device to maintain the current serving beam or not to perform beam switching.

40. The communication apparatus according to any one of claims 34 to 36, wherein the transceiver module is further configured to:
send a third measurement result to the terminal device, wherein the third measurement result is a measurement result obtained by performing first-type measurement on a third reference signal by the terminal device; and
receive a fourth measurement result from the terminal device, wherein the fourth measurement result is a measurement result obtained by performing second-type measurement on a fourth reference signal based on the third measurement result by the terminal device.

41. The communication apparatus according to claim 40, wherein the communication apparatus further comprises a processing module, wherein
the processing module is configured to: if signal quality of the second reference signal in the second measurement result is greater than or equal to a second threshold, and the signal quality of the second reference signal is greater than signal quality of the fourth reference signal in the fourth measurement result, determine that the terminal device is to switch to a first beam corresponding to the second reference signal;
the processing module is configured to: if signal quality of the fourth reference signal in the fourth measurement result is greater than or equal to a second threshold, and the signal quality of the fourth reference signal is greater than signal quality of the second reference signal in the second measurement result, determine that the terminal device is to switch to a second beam corresponding to the fourth reference signal; or
the processing module is configured to: if both signal quality of the second reference signal in the second measurement result and signal quality of the fourth reference signal in the fourth measurement result are less than a second threshold, determine that the terminal device is to maintain the current serving beam.

42. The communication apparatus according to claim 40, wherein
the transceiver module is further configured to: if signal quality of the second reference signal in the second measurement result is greater than or equal to a second threshold, and the signal quality of the second reference signal is greater than signal quality of the fourth reference signal in the fourth measurement result, send a second acknowledgment message to the terminal device, wherein the second acknowledgment message indicates the terminal device to switch to a first beam corresponding to the second reference signal;
the transceiver module is further configured to: if signal quality of the fourth reference signal in the fourth measurement result is greater than or equal to a second threshold, and the signal quality of the fourth reference signal is greater than signal quality of the second reference signal in the second measurement result, send a second acknowledgment message to the terminal device, wherein the second acknowledgment message indicates the terminal device to switch to a second beam corresponding to the fourth reference signal; or
the transceiver module is further configured to: if both signal quality of the second reference signal in the second measurement result and signal quality of the fourth reference signal in the fourth measurement result are less than a second threshold, send a second non-acknowledgment message to the terminal device, wherein the second non-acknowledgment message indicates the terminal device to maintain the current serving beam.

43. The communication apparatus according to claim 40, wherein
the transceiver module is further configured to: if signal quality of the second reference signal in the second measurement result is greater than or equal to a second threshold, and the signal quality of the second reference signal is greater than signal quality of the fourth reference signal in the fourth measurement result, send second indication information to the terminal device, wherein the second indication information indicates the terminal device to switch to a first beam corresponding to the second reference signal;
the transceiver module is further configured to: if signal quality of the fourth reference signal in the fourth measurement result is greater than or equal to a second threshold, and the signal quality of the fourth reference signal is greater than signal quality of the second reference signal in the second measurement result, send second indication information to the terminal device, wherein the second indication information indicates the terminal device to switch to a second beam corresponding to the fourth reference signal; or
the transceiver module is further configured to: if both signal quality of the second reference signal in the second measurement result and signal quality of the fourth reference signal in the fourth measurement result are less than a second threshold, send second indication information to the terminal device, wherein the second indication information indicates the terminal device to maintain the current serving beam.

44. The communication apparatus according to any one of claims 34 to 43, wherein
the first-type measurement comprises periodic measurement performed by the terminal device on a reference signal, and the second-type measurement comprises semi-persistent measurement performed by the terminal device on a reference signal resource;
the first-type measurement comprises periodic measurement performed by the terminal device on a reference signal, and the second-type measurement comprises aperiodic measurement performed by the terminal device on a reference signal; or
the first-type measurement comprises semi-persistent measurement performed by the terminal device on a reference signal, and the second-type measurement comprises aperiodic measurement performed by the terminal device on a reference signal.

45. A communication apparatus, wherein the communication apparatus comprises:
a memory, configured to store computer instructions; and
a processor, configured to execute a computer program or the computer instructions stored in the memory, to enable the communication apparatus to perform the method according to any one of claims 1 to 11, or to enable the communication apparatus to perform the method according to any one of claims 12 to 22.

46. A communication apparatus, wherein the communication apparatus comprises a processor; and the processor is configured to perform the method according to any one of claims 1 to 11, or the processor is configured to perform the method according to any one of claims 12 to 22.

47. A computer-readable storage medium, wherein the computer-readable storage medium stores a computer program; and when the computer program is executed by a communication apparatus, the communication apparatus is enabled to perform the method according to any one of claims 1 to 11, or the communication apparatus is enabled to perform the method according to any one of claims 12 to 22.
